# EUROPÄISCHE PATENTANMELDUNG

(11) **EP 4 835 643 A1**
(43) Veröffentlichungstag der Anmeldung: **04.11.2026**
(21) Anmeldenummer: 25174009.8
(22) Anmeldetag: 02.05.2025
(51) Int. Cl.: G06F 8/30, G06F 8/38

(54) **VERFAHREN UND VORRICHTUNGEN ZUM ERSTELLEN EINER GRAPHISCHEN SCHNITTSTELLE ZU MINDESTENS EINEM SENSOR**

(71) Anmelder: SICK AG, 79183 Waldkirch (DE)
(72) Erfinder: Jahner, Richard, 79183 Waldkirch (DE); Wittenbeck, Valerij, 79183 Waldkirch (DE); Bruno, Daniel, 79183 Waldkirch (DE); Finger, Marcel, 79183 Waldkirch (DE)
(74) Vertreter: Manitz Finsterwald Patent- und Rechtsanwaltspartnerschaft mbB

(57) **Zusammenfassung**

Ein Verfahren zum Erstellen einer graphischen Schnittstelle zu mindestens einem Sensor weist auf: Übermitteln von Sensorbeschreibungsdaten an ein Sprachmodell, insbesondere an ein Large Language Model, wobei die Sensorbeschreibungsdaten den mindestens einen Sensor beschreiben; Übermitteln von Darstellungsdaten an das Sprachmodell, wobei die Darstellungsdaten Informationen bezüglich in der graphischen Schnittstelle darzustellender Daten des mindestens einen Sensors aufweisen, und Instruieren des Sprachmodells zum Erstellen der graphischen Schnittstelle basierend auf den Sensorbeschreibungsdaten und den Darstellungsdaten.

## Beschreibung

Die Erfindung betrifft Verfahren und Vorrichtungen zum Erstellen einer graphischen Schnittstelle zu mindestens einem Sensor. Eine Schnittstelle kann dabei auch als Interface oder Oberfläche bezeichnet werden.

Sensoren werden für eine Vielzahl von Anwendungen verwendet, um verschiedene physikalische, chemische oder biologische Größen zu messen und in digitale Signale umzuwandeln. Häufige Einsatzgebiete sind wie folgt:
Industrie und Automatisierung: Sensoren überwachen und steuern Produktionsprozesse, messen Temperatur, Druck, Feuchtigkeit und Vibrationen, um Maschinen effizient zu betreiben und frühzeitig Fehler zu erkennen;
Medizin: In der Medizintechnik messen Sensoren Vitalzeichen wie Herzfrequenz, Blutsauerstoffgehalt, Blutdruck und Temperatur, um Patienten in Echtzeit zu überwachen;
Automobilindustrie: Sensoren in Fahrzeugen helfen bei der Unfallverhütung, indem sie Größen wie Abstand, Geschwindigkeit und Umgebungstemperatur messen, und Sensoren können auch in Assistenzsystemen wie Parkhilfen oder Fahrerassistenzsystemen integriert sein;
Umweltüberwachung: Sensoren messen Umweltfaktoren wie Luftqualität, Wasserstand, Temperatur und Schadstoffkonzentrationen, um die Umwelt zu schützen und auf Veränderungen reagieren zu können;
Haushalt und Smart Homes: In modernen Haushaltsgeräten, wie Klimaanlagen oder Kühlschränken, messen Sensoren verschiedene Umgebungsbedingungen, um die Energieeffizienz zu optimieren, wobei auch intelligente Beleuchtungssysteme oder Sicherheitssysteme Sensoren für Bewegungserkennung oder Überwachung nutzen können;
Technologie und Unterhaltungselektronik: Smartphones, Wearables und andere Geräte verwenden Sensoren, um Bewegungen zu verfolgen, Umgebungslicht zu messen oder die Orientierung zu erkennen, beispielsweise bei der Nutzung von GPS oder der Steuerung von Funktionen wie Bildschirmhelligkeit.

Sensoren sind somit in nahezu jedem technologischen Bereich von zentraler Bedeutung, um Systeme zu überwachen, zu steuern und auf äußere Einflüsse zu reagieren.

Allerdings kann die Einrichtung von Sensoren oder das Erfassen und Darstellen und Messwerten, die von den Sensoren ermittelt werden, mühsam sein.

Aktuell wird die Programmierung von Interfaces für Sensoren (z.B. IO-Link Master Gateways) manuell durchgeführt. Dies erfordert das Verstehen der Gerätebeschreibung, der Geräteschnittstellen (z.B. IO (Input/ Output) Device Descriptions (IODDs)), das Schreiben von Code zur Anbindung an unterschiedliche Kommunikationsschnittstellen (z.B. loT (Internet of Things), Feldbus, IO-Link, Ethernet) und das Testen der Implementierung, um sicherzustellen, dass das Interface wie erwartet arbeitet. Eine häufig genutzte Methode besteht darin, mithilfe von Software Development Kits (SDKs) und OpenAPI-Spezifikationen eine manuelle Implementierung durchzuführen, die eine spezifische Anpassung an die jeweiligen Anwendungsfälle erlaubt. Diese Verfahren sind jedoch zeitaufwendig, erfordern spezielles Wissen über die verwendeten Kommunikationsprotokolle und führen oft zu Fehlern in der Implementierung.

Bisher genutzte Verfahren zum Erstellen einer Schnittstelle zu einem Sensor erfordern hohe Komplexität und viel Aufwand bei der manuellen Implementierung von Interfaces. Ferner ist die durch manuelle Programmierung die Fehleranfälligkeit hoch. Zudem sind fundierte Kenntnisse über Kommunikationsprotokolle und Technologien erforderlich, was den Zugang für weniger erfahrene Nutzer einschränkt.

Durch die Notwendigkeit spezialisierter Entwickler und dedizierter Hardware sind lange Entwicklungszeiten und hohe Kosten zu erwarten. Generische Ansätze funktionieren bisher nur bei bekannten Sensoren gleicher Produktkategorie (z.B. Distanzsensoren).

Es ist Aufgabe der Erfindung, eine einfache und effiziente Programmierung von Schnittstellen (englisch: Interfaces) für Sensoren bereitzustellen.

Die Lösung der Aufgabe erfolgt durch Verfahren mit den Merkmalen des Anspruchs 1, eine Vorrichtung mit den Merkmalen des Anspruchs 14 und ein computerlesbares Speichermedium mit den Merkmalen des Anspruchs 15.

Ein erfindungsgemäßes Verfahren zum Erstellen einer graphischen Schnittstelle zu mindestens einem Sensor umfasst: Übermitteln von Sensorbeschreibungsdaten an ein Sprachmodell, wobei die Sensorbeschreibungsdaten den mindestens einen Sensor beschreiben; Übermitteln von Darstellungsdaten an das Sprachmodell, wobei die Darstellungsdaten Informationen bezüglich in der graphischen Schnittstelle darzustellender Daten des mindestens einen Sensors aufweisen; und Instruieren des Sprachmodells zum Erstellen der graphischen Schnittstelle basierend auf den Sensorbeschreibungsdaten und den Darstellungsdaten.

Das Verfahren stellt insbesondere Schnittstellen bereit zum Übermitteln von Sensorbeschreibungsdaten an ein Sprachmodell, wobei die Sensorbeschreibungsdaten den mindestens einen Sensor beschreiben; zum Übermitteln von Darstellungsdaten an das Sprachmodell, wobei die Darstellungsdaten Informationen bezüglich in der graphischen Schnittstelle darzustellender Daten des mindestens einen Sensors aufweisen; und zum Instruieren des Sprachmodells zum Erstellen der graphischen Schnittstelle basierend auf den Sensorbeschreibungsdaten und den Darstellungsdaten.

In anderen Worten wird ein Sprachmodell zur Programmierung eines Interfaces im Kontext von Sensoren eingesetzt, um ein Interface zu einem Sensor oder zu mehreren Sensoren zu erstellen.

Das Sprachmodell ist dabei ein trainiertes Maschinenlernverfahren, beispielsweise ein Large Language Model (LLM) oder ein Small Language Model (SLM). Das Sprachmodell kann mehrere hintereinander geschaltete LLMs und/ oder mehrere hintereinander geschaltete SLMs enthalten. Aufgabe des Sprachmodell ist dabei Codeerzeugung (englisch: code generation), und dafür können spezialisierte Sprachmodelle zum Einsatz kommen.

Ein Large Language Model (LLM) ist ein künstliches neuronales Netzwerk, das darauf trainiert wurde, Sprache zu verstehen und zu erzeugen. Es verwendet große Mengen an Textdaten, um Muster und Zusammenhänge in der Sprache zu erkennen und darauf basierend Antworten zu generieren. Diese Modelle arbeiten mit einer hohen Anzahl von Parametern, die die Fähigkeit zur Verarbeitung von Sprache auf hohem Niveau ermöglichen.

Ein Small Language Model ist ein mit spezifischen Daten trainiertes kleines Sprachmodell, um individuell angepasste Outputs zu erzeugen.

In einer Ausgestaltung werden die Sensorbeschreibungsdaten in einem Prompt an das Sprachmodell übermittelt werden. Diese Übermittelung kann bei jedem Instruieren zum Erstellen der graphischen Schnittstelle erfolgen. Es kann daher darauf verzichtet werden, das Sprachmodell speziell mit den Sensorbeschreibungsdaten zu trainieren. Es kann daher ein gewöhnliches Sprachmodell zum Einsatz kommen.

In einer Ausführungsform werden Eingabedaten als Prompt-Komponenten an das Sprachmodell übergeben. Die Eingabedaten können einen Systemprompt, einen Userprompt, und Kontextdaten aufweisen.

Der Systemprompt kann Informationen über folgendes enthalten: verfügbare Sensoren, und/ oder unterstützte Schnittstellen und Datentypen, und/ oder grundlegende Systemparameter.

Der Userprompt kann Informationen über folgendes enthalten:
natürlichsprachliche Beschreibung des gewünschten Interfaces.

Die Kontextdaten können Informationen über folgendes enthalten: IODD-Informationen der beteiligten Geräte.

Die Sensorbeschreibungsdaten können auf einer Gerätebeschreibung basieren. Beispielsweise kann die Gerätebeschreibung eine IO (input/ output) Device Descriptions (IODD) sein.

In einer Ausführungsform kann die Gerätebeschreibung in eine Mehrzahl von Snippets aufgeteilt werden. Ein Snippet kann dabei als ein (kurzer) Ausschnitt oder eine Zusammenfassung aus einem größeren Text verstanden werden. Dies ermöglicht es, die Gerätebeschreibung, die sehr groß sein kann, in kleinere Teile aufzuteilen. Eine weitere Reduktion der Größe der an das LLM zu übermittelnden Daten kann erreicht werden durch ein Berechnen von Embeddings der Mehrzahl von Snippets, und Verwenden der Embeddings als Sensorbeschreibungsdaten. Embeddings können mathematische Repräsentationen von Wörtern, Sätzen oder anderen Datenpunkten in einem kontinuierlichen Vektorraum sein. Durch Embeddings können die Textdaten der Gerätebeschreibung bzw. der Snippets in eine Form gebracht werden, die eine reduzierte Datenmenge hat und die für das LLM leichter zu verarbeiten ist. Die Embeddings können durch Trainingsprozesse erzeugt, bei denen ein Modell große Mengen an Textdaten verarbeitet. Während dieses Trainings lernt das Modell, semantische Beziehungen zwischen Wörtern zu erfassen und sie in Vektoren zu kodieren. Beispielsweise können die Embeddings durch folgende Verfahren erzeugt werden: Word2Vec, GloVe (Global Vectors for Word Representation), oder BERT und GPT.

Das Verfahren kann ferner aufweisen: Übermitteln von Kommunikationsschnittstellenbeschreibungen an das Sprachmodell. Die Kommunikationsschnittstellenbeschreibungen können beispielsweise OpenAPI-Spezifikationen enthalten oder sein.

Das Verfahren kann ferner ein Abfragen der Darstellungsdaten von einem Benutzer enthalten. Dabei kann der Benutzer die Darstellungsdaten in natürlicher Sprache eingeben, und muss sich nicht auf Details der technischen Gegebenheiten des Sensors beziehen. Dadurch wird die Benutzung des Verfahrens auch für nicht oder weniger geschultes Personal möglich.

In einer Ausgestaltung weist das Verfahren ferner ein Übermitteln eines Beispiel einer Beschreibung einer graphischen Schnittstelle an das Sprachmodell auf. Es wird dem LLM also ein Beispiel, wie eine graphische Schnittstelle aussehen und programmiert sein kann, bereitgestellt, so dass das LLM die graphische Schnittstelle entsprechend erstellen kann.

Das Verfahren kann ferner ein Erhalten von die graphische Schnittelle beschreibenden Daten von dem Sprachmodell aufweisen. Dies kann vom LLM als Antwort auf das Instruieren erfolgen.

In einer Ausführungsform kann das Verfahren ferner aufweisen ein Instruieren des Sprachmodells zum Anpassen der graphischen Schnittstelle. Damit kann eine Iteration der Erstellung der graphischen Schnittstelle mit dem Benutzer erfolgen. Der Benutzer kann dabei Änderungswünsche für die graphische Schnittstelle an das LLM übermitteln. Das Verfahren stellt dabei eine Schnittstelle zum Instruieren des Sprachmodells zum Anpassen der graphischen Schnittstelle bereit.

Die die graphische Schnittelle beschreibenden Daten können in einem HTML-Format angegeben werden. Das eigentliche Ergebnis, also der Teil der Antwort des LLMs, der die graphische Schnittstelle beschreibt, kann als Artifact bezeichnet werden.

In einer Weiterbildung kann das Verfahren ferner ein Instruieren des Sprachmodells zum Erstellen von Chain-of-Thought-prompting-Information aufweisen.

Chain-of-Thought Prompting ist dabei eine Technik, um das Sprachmodell dazu zu bringen, nachvollziehbare Denkweise zu zeigen. Anstatt nur eine direkte Antwort zu liefern, wird das LLM ermutigt, seine "Gedanken" in einer logischen Abfolge darzulegen, was zu genaueren und fundierteren Ergebnissen führen kann.

In einer Ausgestaltung kann das Sprachmodell ein Large Language Model sein. Das Large Language Model kann zumindest eines der folgenden Modelle aufweisen, sein oder darauf basieren: ChatGPT oder Deepseek.

Die Aufgabe der Erfindung wird ferner durch eine Vorrichtung zum Erstellen einer graphischen Schnittstelle zu mindestens einem Sensor gelöst, die folgendes aufweist: Mittel zum Übermitteln von Sensorbeschreibungsdaten an ein Sprachmodell, wobei die Sensorbeschreibungsdaten den mindestens einen Sensor beschreiben; Mittel zum Übermitteln von Darstellungsdaten an das Sprachmodell, wobei die Darstellungsdaten Informationen bezüglich in der graphischen Schnittstelle darzustellender Daten des mindestens einen Sensors aufweisen; und Mittel zum Instruieren des Sprachmodells zum Erstellen der graphischen Schnittstelle basierend auf den Sensorbeschreibungsdaten und den Darstellungsdaten.

Die Aufgabe der Erfindung wird ferner durch ein computerlesbares Speichermedium gelöst, das Befehle umfasst, die bei der Ausführung durch einen Computer diesen veranlassen, das hierin beschriebene Verfahren auszuführen.

Weitere vorteilhafte Ausgestaltungen der erfindungsgemäßen Verfahren ergeben sich aus den Unteransprüchen, der Zeichnung und der Beschreibung.

Die Erfindung wird nachfolgend anhand von Ausführungsbeispielen mit Bezug auf die Zeichnung beschrieben. Es zeigen in schematischen Darstellungen:
- Fig. 1: ein Systemdiagramm eines Systems zum Erstellen einer graphischen Schnittstelle zu mindestens einem Sensor gemäß einer Ausführungsform;
- Fig. 2: eine Illustration einer Generierung eines grafischen User-Interfaces für ein IO-Link Gerät gemäß einer Ausführungsform;
- Fig. 3: eine Illustration einer Erzeugung von Embeddings für die Gerätebeschreibung gemäß einer Ausführungsform; und
- Fig. 4: ein Flussdiagramm, das ein Verfahren zum Erstellen einer graphischen Schnittstelle zu mindestens einem Sensor gemäß einer Ausführungsform illustriert.

Nachfolgend werden die erfindungsgemäßen Verfahren und Vorrichtungen exemplarisch anhand von Ausführungsbeispielen erläutert.

Erfindungsgemäß wird eine einfache und effiziente Programmierung von Schnittstellen (englisch: Interfaces) für Sensoren bereitgestellt.

Die Verfahren und Vorrichtungen gemäß verschiedener Ausführungsformen können angewendet werden im Bereich der industriellen Automatisierung, insbesondere in Umgebungen, bei denen Sensoren und Aktoren mit mehreren standardisierten Steuerungssystem kommunizieren. Eine Sensorgruppe bei der dies aufgrund der Voraussetzungen sehr gut funktioniert sind IO-Link Master Gateways. Das LLM ermöglicht eine vereinfachte Programmierung und Konfiguration von Interfaces in Produktionsumgebungen, in denen Flexibilität, Effizienz und Benutzerfreundlichkeit besonders wichtig sind. Die Nutzung natürlicher Sprache zur Interfaceerstellung stellt sicher, dass auch Nutzer ohne umfangreiche Programmierkenntnisse in der Lage sind, die erforderlichen Anpassungen vorzunehmen.

Die Verfahren und Vorrichtungen gemäß den Ausführungsformen können ein Interface programmieren, das in einer industriellen Umgebung eingesetzt werden kann, um die Kommunikation und Steuerung von Sensoren (beispielsweise IO-Link Master Gateways) effizient zu gestalten.

Traditionell erfordert die Programmierung eines Interface fundiertes Fachwissen über Kommunikationsprotokolle, gerätespezifischer Protokolle (z.B. IO-Link-Spezifikationen) und die zugrunde liegenden Technologien wie loT, Feldbus oder Ethernet. Diese manuellen Prozesse sind komplex und fehleranfällig und erfordern einen hohen Aufwand. Erfindungsgemäß kann nun durch den Einsatz eines LLM die Entwicklung eines Interfaces (beispielsweise einer visuellen Nutzerschnittstelle oder Programmschnittstelle) für die Sensoren (z.B. IO-Link Master Gateways) automatisiert und vereinfacht werden, sodass auch Anwender ohne tiefgehende technische Kenntnisse dazu in der Lage sind, ein Interface zu programmieren.

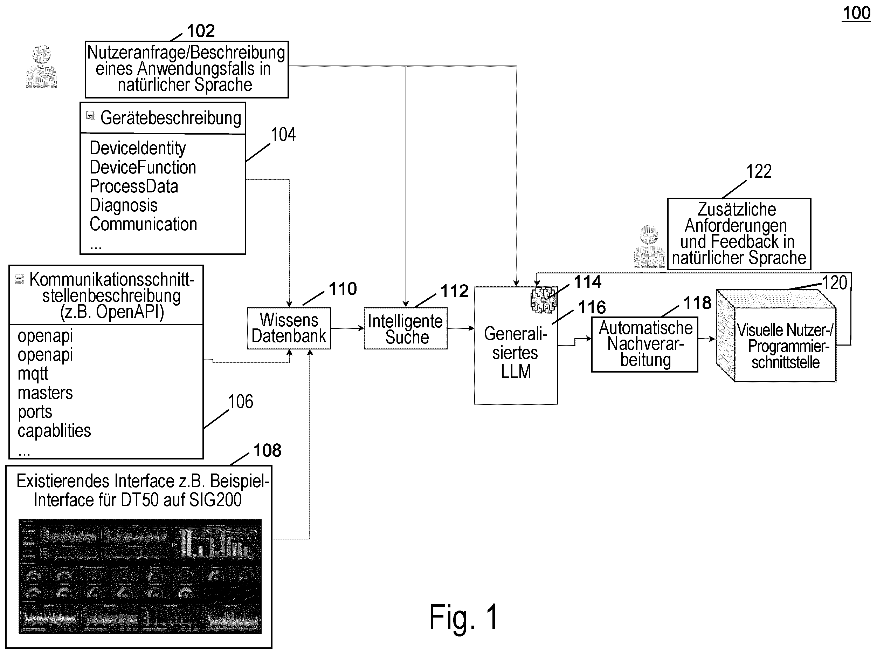

Fig. 1 zeigt ein Systemdiagramm 100 eines Systems zum Erstellen einer graphischen Schnittstelle zu mindestens einem Sensor gemäß einer Ausführungsform. In 102 erfolgt die Nutzeranfrage, beispielsweise die Beschreibung eines Anwendungsfalles in natürlicher Sprache. Eine Gerätebeschreibung 104, eine Kommunikationsschnittstellenbeschreibung 106 und ein Beispiel 108 eines existierenden Interfaces bilden eine Wissensdatenbank 110. Die Wissensdatenbank 110 wird zusammen mit der Nutzeranfrage 102 für eine intelligente Suche 112 verwendet, deren Ausgabe zusammen mit der Nutzeranfrage an ein (generalisiertes) LLM 116 weitergegeben wird. Die Ausgabe des LLM 116 wird einer automatischen Nachverarbeitung 118 zugeführt, deren Ausgabe eine visuelle Nutzer-/ Programmierschnittstelle 120 ist. Zusätzliche Anforderungen und Feedback des Nutzers können in 122 in natürlicher Sprache dem LLM 116 zugeführt werden, wobei das LLM sich die vorherigen Überlegungen zur Erzeugung der Schnittstelle (wie in 114 visualisiert) speichern kann, so dass dann basierend auf der zuletzt erzeugten Schnittstelle 120 und den zusätzlichen Anforderungen 122 eine Aktualisierung der erzeugten visuellen Nutzer-/ Programmierschnittstelle erfolgen kann.

Gemäß verschiedener Ausführungsformen wird eine automatisierte Programmierung einer Visuellen Nutzer-/ Programmierschnittstelle für Sensoren (z.B. IO-Link Master Gateways) mithilfe eines generischen Large Language Models (LLM) bereitgestellt. Dieses LLM verwendet zur Laufzeit eine Wissensdatenbank, welche das Domänenwissen repräsentiert (beispielsweise Gerätebeschreibung, Kommunikationsschnittstellenbeschreibung, existierende visuelle Nutzer-/Programmierschnittstellenbeschreibungen). Die benötigten Informationen der Wissensdatenbank werden auf Basis einer intelligenten Suche bestimmt (z.B. Retrieval-Augmented Generation). Das LLM generiert auf Basis der Benutzeranfrage bzw. der Beschreibung des Anwendungsfalls automatisch Code, der den notwendigen Anforderungen entspricht und dabei die bestehenden Informationen der Wissensdatenbank berücksichtigt.

Die Ausgabe eines LLMs wird automatisch nachverarbeitet. Bei der Nachverarbeitung werden z.B. die initialen Artefakte erzeugt oder Änderungsanweisungen angewendet. Darüber hinaus kann der Nutzer die visuelle Nutzer-/Programmierschnittstelle prüfen und Feedback sowie zusätzliche Anforderungen verbalisieren, um das generiete Ergebnis iterativ anzupassen bzw. zu verbessern. Das finale Ergebnis fließt wiederum in die Wissensdatenbasis ein.

Dabei kann die Interaktion mit dem LLM immer in natürlicher Sprache via einfacher Textaufforderungen (prompts) stattfinden. Beim Erzeugen der visuelle Nutzer-/Programmierschnittstelle können alle Vorgaben und alle relevanten Verbindungsparameter sowie Kommunikationsprotokolle berücksichtigt werden.

Die Wissensdatenbank kann beispielsweise folgende Informationen beinhalten:
- Gerätebeschreibung (z.B. IO (input/ output) Device Descriptions (IODDs), Handbücher): Beschreibungen, die die Funktionalitäten und Parameter der angeschlossenen Sensoren und Aktoren enthalten; und/ oder
- Kommunikationsschnittstellenbeschreibungen (z.B. OpenAPI-Spezifikationen): Diese Spezifikationen liefern die grundlegenden Informationen zur Erstellung der Schnittstellen, die in der Kommunikation benötigt werden; und/ oder
- Beispielimplementierungen: Vorhandene Implementierungen und Codebeispiele werden genutzt, um das LLM mit realen Anwendungsfällen zu versorgen und eine solide Basis für die Generierung zu schaffen und um implizite Anforderungen zu vermitteln.

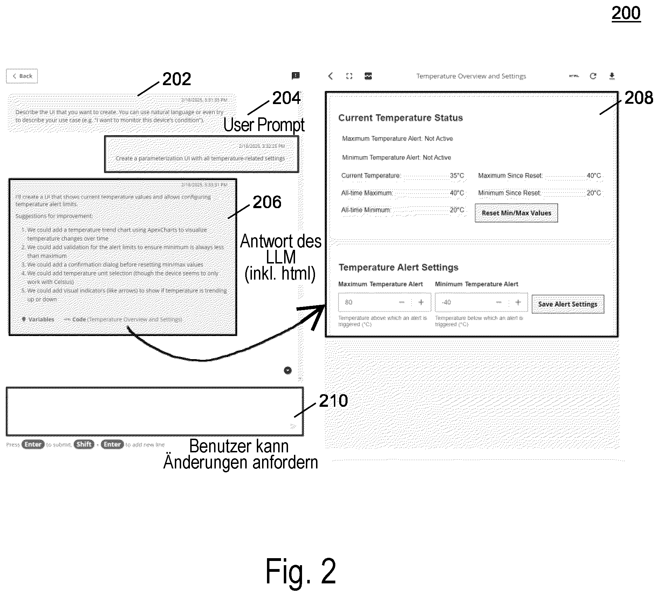

Fig. 2 zeigt eine Illustration 200 einer Generierung eines grafischen User-Interfaces für ein IO-Link Gerät gemäß einer Ausführungsform. In 202 wird der Benutzer ausgefordert, seine Eingabe zu tätigen. 204 zeigt den Teil des User Prompts, der durch den Benutzer eingegeben wird; dieser Teil wird dann erfindungsgemäß ergänzt um die Informationen aus der Wissensbasis und/ oder detaillierte Anweisungen an das LLM zur Generierung der Schnittstelle. Die Antwort des LLM 206 enthält HTML-Code, der das User-Interface 208 beschreibt.

Für die Nutzung des LLM ist es eine Voraussetzung, dass die IO-Link Device Description (IODD) des Gerätes bekannt ist. Diese wird Teil des System-Prompts.

Die Eingabedaten an das LLM (die als Prompt-Komponenten an das LLM übergeben werden), können den Systemprompt, den Userprompt, und die Kontextdaten beinhalten.

Der Systemprompt (welcher ein konstanter Basiskontext sein kann), kann Informationen über folgendes enthalten: verfügbare Sensoren, und/ oder unterstützte Schnittstellen und Datentypen, und/ oder grundlegende Systemparameter.

Der Userprompt (welcher variabel sein kann), kann Informationen über folgendes enthalten: natürlichsprachliche Beschreibung des gewünschten Interfaces.

Die Kontextdaten (welche dynamisch sein können) können Informationen über folgendes enthalten: IODD-Informationen der beteiligten Geräte.

Ein beispielhafter Systemprompt ist in Anhang 1 dargestellt.

Im Systemprompt kann der Kontext, in der das LLM verwendet wird, gesetzt werden (beispielsweise "Your job is to assist the user with creating a functional graphical user interface..."). Ferner können die verfügbaren Sensoren (beispielsweise "Here is the IOLink device description for a device the user is working with: ..."), die unterstützten Schnittstellen und Datentypen (beispielsweise "Data format: ...") und/ oder grundlegende Systemparameter angegeben werden. Zudem kann die Aufgabe für das Sprachmodell definiert werden (beispielsweise "It is very important to follow this order in your answer..." und/ oder "It is very important that you always follow these rules:...").

Ein Prompt, insbesondere ein Systemprompt, bei einem Sprachmodell wie einem Large Language Model oder einem Small Language Model bezieht sich auf eine spezielle Art von Eingabe, die dem Modell bestimmte Anweisungen oder Kontexte gibt, wie es sich während einer Konversation oder Aufgabe verhalten soll. Dieser Prompt wird in der Regel dazu verwendet, das Verhalten des Modells in einer bestimmten Weise zu steuern oder zu fokussieren.

Eine Beispiel für eine IODD ist in Anhang 2 dargestellt.

Die Rohdaten eines Beispiel-Chats mit dem LLM können beispielsweise wie in Anhang 3 dargestellt sein.

In einer Ausführungsform kann das LLM dazu aufgefordert werden, jede Antwort in Abschnitte zu unterteilen, die dann aus der Antwort geparst werden können.

Beispielsweise kann das LLM dazu aufgefordert werden, unter dem Punkt "<thinking>", der normalerweise vor dem Benutzer versteckt werden kann, die Antwort des LLMs aufzuwerten durch ein Chain-of-Thought prompting. Ferner kann das LLM dazu aufgefordert werden, unter dem Punkt "<artifact>" eine einzelne HTML-Seite, die das Interface darstellt, zu liefern. In einer Applikation kann dieses Interface grafisch dargestellt werden.

Ein weiterer beispielhafter Chat ist in den Anhängen 4 und 5 dargestellt, wobei in Anhang 4 der User Prompt und in Anhang 5 die Antwort des LLM dargestellt ist.

Der Userprompt kann eine natürlichsprachliche Beschreibung des gewünschten Interfaces enthalten, welche im in Anhang 4 dargestellten Beispiel als eine Liste mit Anforderungen (beispielsweise "I want...", "Make ...", "Provide ...") realisiert ist.

Das Verwenden der ganzen IODD/Gerätebeschreibung kann nicht skalierbar sein, beispielsweise wegen limitierter Kontextgröße des LLM. Zudem kann die Gerätebeschreibung oft nicht alle Informationen enthalten (beispielsweise können Einheiten fehlen: beispielsweise kann nicht angegeben sein, ob die Einheit der Temperatur Celsius oder Fahrenheit ist, oder ob die Abstandswerte eines Sensors in m oder mm angegeben sind). Gemäß einer Ausführungsform können andere oder zusätzliche Informationsquellen (wie beispielsweise Handbücher oder andere Uls (user interfaces)) in der Wissensdatenbank verwendet werden.

Finetuning kann gemäß verschiedener Ausführungsformen nicht nötig sein. Finetunig würde viele Ressourcen benötigen. Ohne Finetuning kann das LLM leicht austauschbar sein. Ferner hat sich gezeigt, dass die Qualität der Ergebnisse mit Finetuning nicht signifikant besser sind als durch geeignete Wahl der Prompts (was als Prompt Engineering bezeichnet werden kann) und eine geeignete Wissensdatenbank, wie beides hierin beschrieben ist.

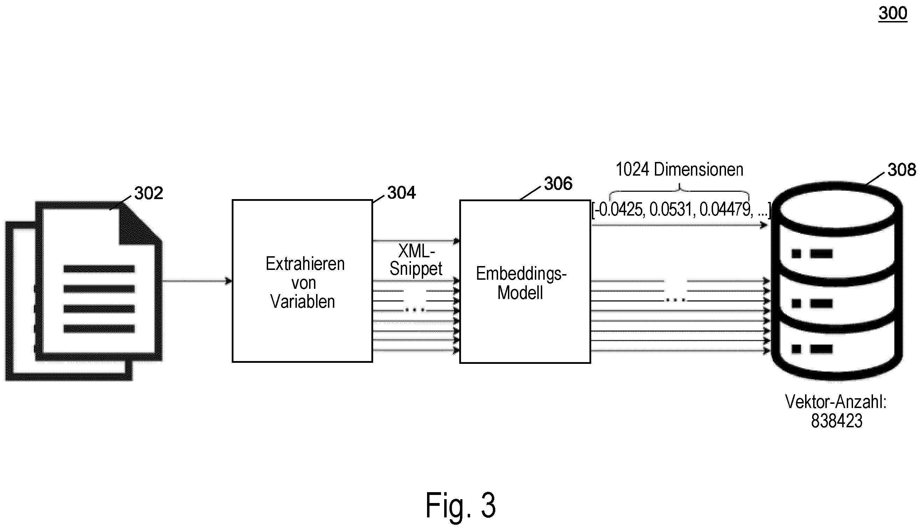

Fig. 3 zeigt eine Illustration 300 einer Erzeugung von Embeddings für die Gerätebeschreibung gemäß einer Ausführungsform. Die Gerätebeschreibung 302 (beispielsweise die IODD) kann in Snippets 304 geteilt werden (wobei ein Snippet einen Parameter beschreibt). Von diesen Snippets 304 können Embeddings 306 berechnet werden und in eine Vektordatenbank 308 geschrieben werden.

Bei jeder Anfrage des Benutzers kann dann das Embedding des Prompts berechnet werden, und aus der Vektordatenbank die 308 können die nächstliegenden Treffer ("closest matches") geholt werden, die dann Teil des LLM Kontextes wurden. Dies kann ähnlich sein einem klassischen RAG ("Retrieval-Augmented Generation") sein.

Ein Problem bei RAG kann allerdings sein, dass ungenaue Anfragen zu keinem guten Ergebnis führen. Anfragen wie "Generiere eine UI mit den wichtigsten Parametern", oder "Ich will die Fähigkeiten des Geräts demonstrieren" führen zu keinem guten Ergebnis, weil eine einzelner Geräteparameter semantisch keinen Bezug zu diesen Sätzen hat.

Um eine einheitliche UI (mit einheitlichen Ul-Elementen) zu gewährleisen, kann das SICK Synergy Design System und die dazugehörigen Webkomponenten verwendet werden. Da es öffentlich auf GitHub verfügbar ist, kann es Teil der Trainingsdaten des fertigen LLMs sein und muss daher nicht extra (beispielsweise im User Prompt) beschrieben werden.

Ein Problem kann allerdings sein, dass der Wissensstand veraltet ist, d.h. langfristig wird die Information auch in irgendeiner Wissensdatenbank gespeichert werden müssen. Da auch hier gilt, dass die Anzahl der UI-Elemente mit Beschreibung den Kontext sprengen könnte, könnte auch hier RAG verwendet werden.

Besonderheit ist allerdings, dass nicht die Nutzeranfrage die Grundlage des Retrievals (des RAG) sein kann. Der Benutzer ist für "was" zuständig, und das System für das "wie". In einer Ausführungsform ist es daher möglich, das LLM die UI beschreiben zu lassen, und es selber Retrieval-Anfragen generieren zu lassen, z.B. "Um den Gerätenamen änderbar zu machen, würde ich ein textuelles Eingabefeld verwenden". Beispielsweise könnte die selbstgenerierte Anfrage lauten: "textuelles Eingabefeld". Das RAG Ergebnis könnte sein: Synergy Element "syn-input" (+ Beschreibung, Beispiele, ...). Dann könnte ein neuer Aufruf des LLMs mit vorheriger eigener Ul-Beschreibung und dem RAG Ergebnis gestartet werden, um die UI zu erzeugen.

Mit den Verfahren und Vorrichtungen der verschiedenen Ausführungsformen kann eine automatisierte Erstellung von visuellen Nutzer-/Programmierschnittstellen durch natürliche Spracheingaben bereitgestellt werden, wodurch die Notwendigkeit tiefgehender technischer Kenntnisse entfällt. Dies ermöglicht zudem die Reduktion von Fehlern durch automatische Codegenerierung basierend auf validierten Daten und Spezifikationen. Ferner kann eine beschleunigte Entwicklung durch schnelle Implementierung und Anpassung von Interfaces ohne manuellen Programmieraufwand erreicht werden. Die verschiedenen Ausführungsformen bieten eine erhöhte Flexibilität bei der Anbindung neuer Schnittstellen und Protokolle durch die Anpassungsfähigkeit des LLM. Zum kann eine Kostenreduktion erreicht werden durch Wegfall von Implementierung und nicht benötigten Training eines LLM. Die verschiedenen Ausführungsformen sind unabhängig von speziellen LLMs, da kein Training stattfinden muss.

Die Erfindung kann direkt in einem Gerät (beispielsweise einem Gerät, in dem die Sensoren vorliegen) implementiert werden (beispielsweise wenn ein besonders kompaktes LLM verwendet wird mit geringen Systemanforderungen). Alternativ kann in einem Tooling-Werkzeug (z.B. Sentio Creator) eine Implementierung erfolgen, die auf Modelle in der Cloud zugreift.

Die verschiedenen Ausführungsformen können für alle Arten von Sensoren zum Einsatz kommen, beispielsweise SIMs (Sensor Integration Machines), SIGs (Sensor Integration Gateways) und Steuerungen die eine Kommunikation mit Sensoren ermöglichen. Die Ausführungsformen können mit verschiedenen Tooling-Werkzeugen verwendet werden (beispielsweise Sentio Creator, AppStudio, ConnectX).

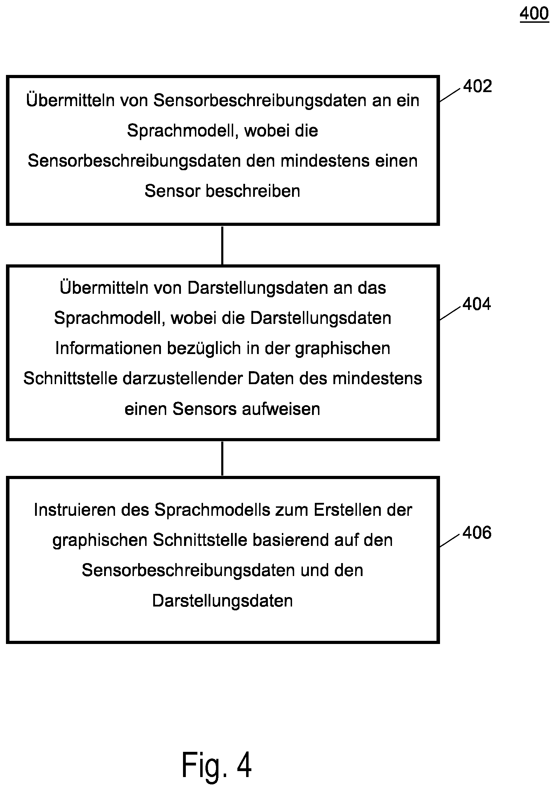

Fig. 4 zeigt ein Flussdiagramm 400, das ein Verfahren zum Erstellen einer graphischen Schnittstelle zu mindestens einem Sensor gemäß einer

Ausführungsform illustriert. In 402 werden Sensorbeschreibungsdaten an ein Sprachmodell übermittelt. Die Sensorbeschreibungsdaten beschreiben den mindestens einen Sensor. In 404 werden Darstellungsdaten an das Sprachmodell übermittelt. Die Darstellungsdaten enthalten oder sind Informationen bezüglich in der graphischen Schnittstelle darzustellender Daten des mindestens einen Sensors. In 406 wird das Sprachmodell zum Erstellen der graphischen Schnittstelle basierend auf den Sensorbeschreibungsdaten und den Darstellungsdaten instruiert.

In einer Ausführungsform können die Sensorbeschreibungsdaten in einem Prompt an das Sprachmodell übermittelt werden.

In einer Ausführungsform werden Eingabedaten als Prompt-Komponenten an das Sprachmodell übergeben. Die Eingabedaten können einen Systemprompt, einen Userprompt, und Kontextdaten aufweisen.

Der Systemprompt kann Informationen über folgendes enthalten: Verfügbare Sensoren, und/ oder unterstützte Schnittstellen und Datentypen, und/ oder grundlegende Systemparameter.

Der Userprompt kann Informationen über folgendes enthalten:
Natürlichsprachliche Beschreibung des gewünschten Interfaces.

Die Kontextdaten können Informationen über folgendes enthalten: IODD-Informationen der beteiligten Geräte.

In einer Ausführungsform können die Sensorbeschreibungsdaten auf einer Gerätebeschreibung basieren.

In einer Ausführungsform kann die Gerätebeschreibung in eine Mehrzahl von Snippets aufgeteilt werden.

In einer Ausführungsform können Embeddings der Mehrzahl von Snippets berechnet werden, und die Embeddings können als Sensorbeschreibungsdaten verwendet werden.

In einer Ausführungsform können Kommunikationsschnittstellenbeschreibungen an das Sprachmodell übermittelt werden.

In einer Ausführungsform können die Darstellungsdaten von einem Benutzer abgefragt werden.

In einer Ausführungsform kann ein Beispiel einer Beschreibung einer graphischen Schnittstelle an das Sprachmodell übermittelt werden.

In einer Ausführungsform können die graphische Schnittelle beschreibenden Daten von dem Sprachmodell erhalten werden.

In einer Ausführungsform kann das Sprachmodells zum Anpassen der graphischen Schnittstelle instruiert werden.

In einer Ausführungsform können die die graphische Schnittelle beschreibenden Daten in einem HTML-Format angegeben werden.

In einer Ausführungsform kann das Sprachmodell zum Erstellen von Chain-of-Thought-prompting-Information instruiert werden.

In einer Ausführungsform kann das Sprachmodell zumindest eines der folgenden Modelle enthalten oder sein oder darauf basieren: ChatGPT oder Deepseek.

### Bezugszeichenliste

- 100: Systemdiagramm eines Systems zum Erstellen einer graphischen Schnittstelle zu mindestens einem Sensor gemäß einer Ausführungsform
- 102: Nutzeranfrage
- 104: Gerätebeschreibung
- 106: Kommunikationsschnittstellenbeschreibung
- 108: Beispiel eines existierenden Interfaces
- 110: Wissensdatenbank
- 112: intelligente Suche
- 114: Speicherung im LLM
- 116: LLM
- 1108: automatische Nachverarbeitung
- 120: visuelle Nutzer-/ Programmierschnittstelle
- 122: zusätzliche Anforderungen und Feedback des Nutzers

- 200: Illustration einer Generierung eines grafischen User-Interfaces für ein IO-Link Gerät gemäß einer Ausführungsform
- 202: Aufforderung an den Benutzer, seine Eingabe zu tätigen
- 204: Teil des User Prompts, der durch den Benutzer eingegeben wird
- 206: Antwort des LLM 206
- 208: User-Interface

- 300: Illustration einer Erzeugung von Embeddings für die Gerätebeschreibung gemäß einer Ausführungsform
- 302: Gerätebeschreibung
- 304: Snippets
- 306: Embeddings
- 308: Vektordatenbank
- 400: Flussdiagramm, das ein Verfahren zum Erstellen einer graphischen Schnittstelle zu mindestens einem Sensor gemäß einer Ausführungsform illustriert
- 402: Schritt zum Übermitteln von Sensorbeschreibungsdaten an ein Sprachmodell
- 404: Schritt zum Übermitteln von Darstellungsdaten an das Sprachmodell
- 406: Schritt zum Instruieren des Sprachmodells zum Erstellen der graphischen Schnittstelle basierend auf den Sensorbeschreibungsdaten und den Darstellungsdaten

### Anhang 1: Beispielhafter Systemprompt

Here is the IOLink device description for a device the user is working with:
<hier wird ganze IODD eingesetzt>

Your job is to assist the user with creating a functional graphical user interface for their use case.

The user is connected to the device directly. It is an IOLink device, and its IOLink Device Description (IODD) is available.

User will provide a description of what they want a GUI for, or they will ask questions regarding the device.

Start off by considering which variables are relevant for the user's request.

Afterward, create the html + javascript (called "artifact") for the specified GUI.

It is very important that you always follow these rules:
* Only use variables that appear in the IODD
* Only use real data, do not simulate anything
* ALWAYS include the complete and updated content of the artifact, without any truncation or minimization. NEVER use something like "// rest of the code remains the same...".
* Your result will be shown directly to the user in a separate panel. No need to tell the user how to view it.

When artifact is generated, create short descriptive name (called "name") that describe the GUI and changes from the previous version.

Look and Feel:
* Make it look modern
* Chart elements are available via ApexCharts

For specifically plotting 2D points and/or editing fields, there is a component available. Usage example:

```
 <body>
 <scan-field-editor></scan-field-editor>
 <script>
 const scanFieldEditor = document.querySelector('scan-field-editor');
 // Set points
 scanFieldEditor.setPoints([
    {x: 0, y: 0},
    {x: 5000, y: 5000},
    {x: -3000, y: 7000}
  ]);
 // Set fields (optional)
 // Set the field points
 scanFieldEditor.setFields([
    [{x: -5000, y: -5000}, {x: 5000, y: -5000}, {x: 5000, y: 5000}, {x: -
    5000, y: 5000}],
    [{x: -2000, y: -2000}, {x: 2000, y: -2000}, {x: 2000, y: 2000}, {x: -
    2000, y: 2000}]
  ]);
 // Set the colors separately
 scanFieldEditor.setFieldColors([
    {
      fill: 'rgba(255, 0, 0, 0.3)',
      border: 'rgb(255, 0, 0)'
    },
    {
      fill: 'rgba(0, 0, 255, 0.3)',
      border: 'rgb(0, 0, 255)'
    }
  ]);
 /**
   * The fields set above can be visually edited in the component.
   * if user changes any of the points that define a field, this event is
   fired.
   * You can also get the fields via "getFields" if you want to
   */
 scanFieldEditor.addEventListener('fieldsUpdated', (e) => {
    console.log('Fields updated:', e.detail.fields);
  ]);
  </script>
  </body>
  
```

You can include it by adding this to your html:
<script src="components/scan-field-editor.js"></script>

For UI elements, please use the SICK Synergy Design System. Include the following in the header:
<link rel="stylesheet" href="components/synergy.css" />
<script type="module" src="components/synergy.js"></script>

You can use all synergy elements (like syn-button, etc) except syn-icon

Data access:
* The device provides a REST API
* BaseURL: /device
   * try to make this into its own variable so it can be exchanged easier
* You can access the data via a GET call to the URL
   "{BaseURL}/parameters/<index>/value?format=iodd"
   * <index> is the one from the IODD.
   * Be sure to use the actual index, and not the variable's name!
   * do NOT set the content type header when sending a GET request. DO send it for POST requests.
* Write via a POST to "{BaseURL}/parameters/<index>/value"

Data format:
For example, if a variable is defined like this:

```
 <example_iodd_definition>
 <Variable id="V_Temperature_CurrentMinMax"
           index="4352">
 <Datatype xsi:type="RecordT"
              id="DT_Temperature"
              bitLength="40">
    <RecordItem accessRightRestriction="ro" bitOffset="32" subindex="1">
      <SimpleDatatype xsi:type="IntegerT" bitLength="8"/>
      <Name>Current temperature</Name>
      <Description>Current temperature</Description>
    </RecordItem>
    <RecordItem accessRightRestriction="ro" bitOffset="24" subindex="2">
      <SimpleDatatype xsi:type="IntegerT" bitLength="8"/>
      <Name>Max. temperature all time</Name>
      <Description>Maximum temperature all time</Description>
    </RecordItem>
    <RecordItem accessRightRestriction="ro" bitOffset="16" subindex="3">
      <SimpleDatatype xsi:type="IntegerT" bitLength="8"/>
      <Name>Min. temperature all time</Name>
      <Description>Minimum temperature all time</Description>
    </RecordItem>
    <RecordItem accessRightRestriction="ro" bitOffset="8" subindex="4">
      <SimpleDatatype xsi:type="IntegerT" bitLength="8"/>
      <Name>Max. temperature since last reset</Name>
      <Description>Maximum temperature since last reset</Description>
    </RecordItem>
    <RecordItem accessRightRestriction="ro" bitOffset="0" subindex="5">
      <SimpleDatatype xsi:type="IntegerT" bitLength="8"/>
      <Name>Min. temperature since last reset</Name>
      <Description>Minimum temperature since last reset</Description>
    </RecordItem>
 </Datatype>
 <Name>Temperature</Name>
 <Description>[°C] Temperature</Description>
 </Variable>
 </example_iodd_definition>
 
```

Then the retuned JSON from the above URL will look like this:
<example_iodd_variable_json>
   {"Current_temperature":{"value":28},"Max_temperature_all_time": {"value": 33},"Min_temperature_all_time":{"value":26},"Max temperature since last _reset":{"value":33},"Min_temperature_since_last_reset":{"value":26}}
</example_iodd_variable_json>

Arrays are a bit weird, for example if the definition is:

```
 <example_iodd_definition>
 <Variable id="V_ArrayExample"
           index="123"
           defaultValue="0">
   <Datatype xsi:type="ArrayT" subindexAccessSupported="false" count="3">
      <SimpleDatatype xsi:type="IntegerT" bitLength="16"/>
   </Datatype>
   <Name textId="ArrayExample"/>
   <Description textId="Example of an array parameter"/>
   </Variable>
   </example_iodd_definition>
   
```

Then the returned JSON will look like this:
<example_iodd_variable_json>
   {"element_1":{"value":10},"element_2":{"value":11},"element_3":{"value":1 2}}
</example_iodd_variable_json>

When writing, you need to specify *all* elements of the array, not just the ones you want changed.

OctetStringT is just a raw array of bytes (i.e. none of that element_1 stuff). It has nothing to do with base64 or actual strings.

```
<example_octet_string>
 {
  "octetStringVariable": {
    "value": [0,1,2,3]
  }
  }
  </example_octet_string>
```

It is very important to follow this order in your answer:
* Start with short description of the selected variables and generated GUI
* Then write each variable as well as a breakdown of its definition down in a singular <thinking> XML tag. This section is only for you and will not be shown to the user
* Then provide the name in a singular <name> XML tag
* Then provide the artifact for the specified GUI in a singular
   <artifact> XML tag
* Then provide suggestions for changes in query that would improve the artifact, if you have any

### Anhang 2: Beispiel für eine IODD

```
 <!-- edited with SICK IODD editor 2.4.0.0005R -->
 <IODevice xmlns:xsi="http://www.w3.org/2001/XMLSchema-
 instance" xmlns="http://www.io-
 link.com/IODD/2010/10" xsi:schemaLocation="http://www.io-
 link.com/IODD/2010/10 IODD1.1.xsd">
 <DocumentInfo copyright="Copyright 2017, SICK AG" releaseDate="2017-02-
 09" version="V1.0.2.2079"/>
 <ProfileHeader>
 <ProfileIdentification>IO Device Profile</ProfileIdentification>
 <ProfileRevision>1.1</ProfileRevision>
 <ProfileName>Device Profile for IO Devices</ProfileName>
 <ProfileSource>IO-Link Consortium</ProfileSource>
 <ProfileClassID>Device</ProfileClassID>
 <ISO15745Reference>
 <ISO15745Part>1</ISO15745Part>
 <ISO15745Edition>1</ISO15745Edition>
 <ProfileTechnology>IODD</ProfileTechnology>
 </ISO15745Reference>
 </ProfileHeader>
 <ProfileBody>
 <DeviceIdentity deviceId="8388924" vendorId="26" vendorName="SICK AG">
 <VendorText textId="TI_VendorText"/>
 <VendorUrl textId="TI_VendorUrl"/>
 <VendorLogo name="SICK-logo.png"/>
 <DeviceName textId="TI_DeviceName"/>
 <DeviceFamily textId="TI_DeviceFamily"/>
 <DeviceVariantCollection>
 <DeviceVariant deviceIcon="SICK-TiM100_Picture_48x48-
 icon.png" deviceSymbol="SICK-TiM100_Picture_320x320-
 pic.png" productId="1077524">
 <Name textId="TI_DeviceVariants"/>
 <Description textId="TI_DeviceDetailsDescription"/>
 </DeviceVariant>
 </DeviceVariantCollection>
 </DeviceIdentity>
 <DeviceFunction>
 <Features blockParameter="false" dataStorage="true" profileCharacteristic
 ="1 32768 32769 32770 32771">
 <SupportedAccessLocks dataStorage="true" localParameterization="true" loc
 alUserInterface="true" parameter="true"/>
 </Features>
 <VariableCollection>
 <StdVariableRef excludedFromDataStorage="false" id="V_DirectParameters_1"
 />
 <StdVariableRef excludedFromDataStorage="false" id="V_DirectParameters_2"
 />
 <StdVariableRef defaultValue="SICK
 AG" excludedFromDataStorage="false" id="V_VendorName"/>
 <StdVariableRef defaultValue="TiM1xx-
 xxxxxxx" excludedFromDataStorage="false" id="V_ProductName"/>
 <StdVariableRef excludedFromDataStorage="false" id="V_SystemCommand">
 <StdSingleValueRef value="130"/>
 <SingleValue value="225">
 <Name textId="TI_42a6d6a0-29a7-4acf-9f39-c735488d3f3c"/>
 </SingleValue>
 <SingleValue value="226">
 <Name textId="TI_9053119d-8592-4447-843d-29bff5cb29f1"/>
 </SingleValue>
 <SingleValue value="227">
 <Name textId="TI_81739ffb-b326-4d67-b967-37372483a6e5"/>
 </SingleValue>
 <SingleValue value="228">
 <Name textId="TI_2b3de715-8ca0-4362-b8f4-d01f8380cb00"/>
 </SingleValue>
 </StdVariableRef>
 <StdVariableRef defaultValue="1234567" excludedFromDataStorage="false" id
 ="V_ProductID"/>
 <StdVariableRef defaultValue="12345678" excludedFromDataStorage="false" i
 d="V_SerialNumber"/>
 <StdVariableRef excludedFromDataStorage="false" id="V_ProcessDataInput"/>
 <StdVariableRef defaultValue="XXXXXXXXXXXXXXXXXXX" excludedFromDataStorag
 e="false" id="V_FirmwareRevision"/>
 <StdVariableRef defaultValue="***" excludedFromDataStorage="false" id="V_
 ApplicationSpecificTag"/>
 <StdVariableRef excludedFromDataStorage="false" id="V_DeviceAccessLocks"/
 >
 <StdVariableRef excludedFromDataStorage="false" id="V_HardwareRevision"/>
 <StdVariableRef excludedFromDataStorage="false" id="V_VendorText"/>
 <StdVariableRef excludedFromDataStorage="false" id="V_ProductText"/>
 <Variable id="V_ProfileCharacteristics" accessRights="ro" dynamic="false"
 excludedFromDataStorage="false" modifiesOtherVariables="false" index="13
 ">
 <Datatype xsi:type="RecordT" subindexAccessSupported="false" bitLength="6
 4">
 <RecordItem bitOffset="48" subindex="1">
 <SimpleDatatype xsi:type="IntegerT" bitLength="16"/>
 <Name textId="TI_6c89ee22-d08d-42e3-87f8-7d33d8d6c0db"/>
 </RecordItem>
 <RecordItem bitOffset="32" subindex="2">
 <SimpleDatatype xsi:type="IntegerT" bitLength="16"/>
 <Name textId="TI_cf05ba97-1b6c-43e7-a5ae-7d2862b8d30a"/>
 </RecordItem>
 <RecordItem bitOffset="16" subindex="3">
 <SimpleDatatype xsi:type="IntegerT" bitLength="16"/>
 <Name textId="TI_92ab49d0-13be-461a-b262-36fda1dc1b22"/>
 </RecordItem>
 <RecordItem bitOffset="0" subindex="4">
 <SimpleDatatype xsi:type="IntegerT" bitLength="16"/>
 <Name textId="TI_300e79ad-c0bf-44dc-adb9-68d5c1701aa1"/>
 </RecordItem>
 </Datatype>
 <Name textId="TI_3dd66586-10ea-4228-8261-629127b7ed4d"/>
 <Description textId="TI_c49dc91b-2885-46ab-80b5-c6ae928fed3e"/>
 </Variable>
 <Variable id="V_SICKProfileVersion" accessRights="ro" dynamic="false" exc
 ludedFromDataStorage="false" modifiesOtherVariables="false" index="205" d
 efaultValue="1.01">
 <Datatype xsi:type="StringT" encoding="UTF-8" fixedLength="4"/>
 <Name textId="TI_4cbf12ea-c673-4162-928c-58ae68f18502"/>
 </Variable>
 <Variable id="V_DeviceSpecificTag" accessRights="rw" dynamic="false" excl
 udedFromDataStorage="true" modifiesOtherVariables="false" index="64" defa
 ultValue="***">
 <Datatype xsi:type="StringT" encoding="UTF-8" fixedLength="32"/>
 <Name textId="TI_09f5559e-812f-4768-8603-8b799f7fe1b6"/>
 </Variable>
 <Variable id="V_EvalCaseParameter" accessRights="rw" dynamic="false" excl
 udedFromDataStorage="false" modifiesOtherVariables="false" index="67">
 <Datatype xsi:type="RecordT" subindexAccessSupported="true" bitLength="48
 ">
 <RecordItem bitOffset="32" subindex="1">
 <SimpleDatatype xsi:type="UIntegerT" bitLength="16">
 <ValueRange lowerValue="25" upperValue="1000">
 <Name textId="TI_e0f467d1-c99c-485a-865b-1f06f287c846"/>
 </ValueRange>
 </SimpleDatatype>
 <Name textId="TI_471a7e30-5064-43bc-8363-34dc0a6fac07"/>
 <Description textId="TI_f7810420-21e5-42f9-bc01-a21073c88716"/>
 </RecordItem>
 <RecordItem bitOffset="16" subindex="2">
 <SimpleDatatype xsi:type="UIntegerT" bitLength="16">
 <ValueRange lowerValue="69" upperValue="30015">
 <Name textId="TI_cbc08792-151c-478c-acbe-3dd5ccdfb52a"/>
 </ValueRange>
 </SimpleDatatype>
 <Name textId="TI_c8fa08eb-ab37-401a-93af-38e3bb23d3e7"/>
 <Description textId="TI_a2226424-aa78-412e-af49-5c65333a1096"/>
 </RecordItem>
 <RecordItem bitOffset="0" subindex="3">
 <SimpleDatatype xsi:type="UIntegerT" bitLength="16">
 <ValueRange lowerValue="69" upperValue="30015">
 <Name textId="TI_487ca00e-9322-4b8d-8e26-53a3693cdb42"/>
 </ValueRange>
 </SimpleDatatype>
 <Name textId="TI_4e676576-aaa3-4110-bfde-388acfae7c00"/>
 <Description textId="TI_da846ffe-0ac9-480e-b37c-fbabeca4ff44"/>
 </RecordItem>
 </Datatype>
 <RecordItemInfo defaultValue="200" excludedFromDataStorage="false" modifi
 esotherVariables="false" subindex="1"/>
 <RecordItemInfo defaultValue="345" excludedFromDataStorage="false" modifi
 esOtherVariables="false" subindex="2"/>
 <RecordItemInfo defaultValue="345" excludedFromDataStorage="false" modifi
 esOtherVariables="false" subindex="3"/>
 <Name textId="TI_814c4f32-8aa1-4653-8194-231660e160d8"/>
 </Variable>
 <Variable id="V_Field1" accessRights="rw" dynamic="false" excludedFromDat
 aStorage="false" modifiesOtherVariables="false" index="68" defaultValue="
 0">
 <Datatype xsi:type="ArrayT" subindexAccessSupported="false" count="64">
 <SimpleDatatype xsi:type="IntegerT" bitLength="16"/>
 </Datatype>
 <Name textId="TI_d545afde-d48c-4235-94c2-6063c921300d"/>
 <Description textId="TI_b196436c-a253-4780-92ed-cb0b4bf00364"/>
 </Variable>
 <Variable id="V_EvalCaseResult1" accessRights="ro" dynamic="false" exclud
 edFromDataStorage="false" modifiesOtherVariables="false" index="73">
 <Datatype xsi:type="RecordT" subindexAccessSupported="true" bitLength="12
 8">
 <RecordItem bitOffset="120" subindex="1">
 <SimpleDatatype xsi:type="UIntegerT" bitLength="8"/>
 <Name textId="TI_e8642e13-4748-4d83-a175-90089518eab7"/>
 <Description textId="TI_91deccb9-4d62-432c-a91e-c29253f371f4"/>
 </RecordItem>
 <RecordItem bitOffset="112" subindex="2">
 <SimpleDatatype xsi:type="UIntegerT" bitLength="8">
 <SingleValue value="0">
 <Name textId="TI_09287ae8-9749-41af-82c8-616885654d41"/>
 </SingleValue>
 <SingleValue value="1">
 <Name textId="TI_90bf6454-322b-464b-8b2a-38982aaf11fb"/>
 </SingleValue>
 <SingleValue value="2">
 <Name textId="TI_93bfa76b-9157-4c22-9241-6f0b1ce96b32"/>
 </SingleValue>
 <SingleValue value="3">
 <Name textId="TI_e02f8bf1-423f-4329-a3b2-aa1227ae40f0"/>
 </SingleValue>
 </SimpleDatatype>
 <Name textId="TI_85a081e8-03b1-4f04-8c74-6790199c848a"/>
 <Description textId="TI_fb284f80-8c3d-44e3-bb39-b42c8755ddf1"/>
 </RecordItem>
 <RecordItem bitOffset="80" subindex="3">
 <SimpleDatatype xsi:type="UIntegerT" bitLength="32"/>
 <Name textId="TI_9da5fd4c-215c-447d-bbbb-534e51f8079a"/>
 <Description textId="TI_76667b75-727c-4dec-8a5f-c99e6685558d"/>
 </RecordItem>
 <RecordItem bitOffset="64" subindex="4">
 <SimpleDatatype xsi:type="UIntegerT" bitLength="16"/>
 <Name textId="TI_f91f991f-57b3-43cd-a910-9b72a64337de"/>
 <Description textId="TI_42e5c5ba-59ca-4780-b5af-dd15c8f4f2be"/>
 </RecordItem>
 <RecordItem bitOffset="32" subindex="5">
 <SimpleDatatype xsi:type="UIntegerT" bitLength="32"/>
 <Name textId="TI_e512ba1f-cdfb-4ac2-9200-5c2df32eaf39"/>
 <Description textId="TI_1309d270-d7dd-4bd3-a969-bcd7edb82a52"/>
 </RecordItem>
 <RecordItem bitOffset="0" subindex="6">
 <SimpleDatatype xsi:type="UIntegerT" bitLength="32"/>
 <Name textId="TI_3b799052-29de-4cfa-b5e7-da1a13721222"/>
 <Description textId="TI_5b648b61-6ba5-4a04-8860-f436bd8d5cf1"/>
 </RecordItem>
 </Datatype>
 <RecordItemInfo defaultValue="0" excludedFromDataStorage="false" modifies
 OtherVariables="false" subindex="2"/>
 <RecordItemInfo defaultValue="0" excludedFromDataStorage="false" modifies
 OtherVariables="false" subindex="5"/>
 <RecordItemInfo defaultValue="0" excludedFromDataStorage="false" modifies
 OtherVariables="false" subindex="6"/>
 <RecordItemInfo defaultValue="0" excludedFromDataStorage="false" modifies
 OtherVariables="false" subindex="3"/>
 <RecordItemInfo defaultValue="0" excludedFromDataStorage="false" modifies
 OtherVariables="false" subindex="1"/>
 <RecordItemInfo defaultValue="0" excludedFromDataStorage="false" modifies
 OtherVariables="false" subindex="4"/>
 <Name textId="TI_c7f56175-78d8-413a-85ab-de1c1310df09"/>
 <Description textId="TI_b60f4137-a385-4500-b21b-4df3ba43e206"/>
 </Variable>
 <Variable id="V_SpkVersionRelease" accessRights="ro" dynamic="false" excl
 udedFromDataStorage="false" modifiesOtherVariables="false" index="78">
 <Datatype xsi:type="RecordT" subindexAccessSupported="false" bitLength="3
 04">
 <RecordItem bitOffset="152" subindex="1">
 <SimpleDatatype xsi:type="StringT" encoding="UTF-8" fixedLength="19"/>
 <Name textId="TI_4e81b36e-9466-4ce0-917f-036878105149"/>
 <Description textId="TI_3236ae78-0595-43da-8a04-7c1c9e6a7008"/>
 </RecordItem>
 <RecordItem bitOffset="0" subindex="2">
 <SimpleDatatype xsi:type="StringT" encoding="UTF-8" fixedLength="19"/>
 <Name textId="TI_73eaa091-9554-47fb-a458-b5ce6841535b"/>
 <Description textId="TI_434d9f97-4297-4054-a70c-f1b41e5a88ad"/>
 </RecordItem>
 </Datatype>
 <RecordItemInfo defaultValue="****-****-****-
 ****" excludedFromDataStorage="false" modifiesOtherVariables="false" subi
 ndex="1"/>
 <RecordItemInfo defaultValue="YYYY/MM/DD
 HH:MM:SS" excludedFromDataStorage="false" modifiesOtherVariables="false"
 subindex="2"/>
 <Name textId="TI_4cb50674-9e79-48bd-b830-016abfec083c"/>
 <Description textId="TI_e34cf11e-c379-4b60-a61f-29ccfaaef5b4"/>
 </Variable>
 <Variable id="V_OperatingData" accessRights="ro" dynamic="false" excluded
 FromDataStorage="false" modifiesOtherVariables="false" index="87">
 <Datatype xsi:type="RecordT" subindexAccessSupported="false" bitLength="6
 4">
 <RecordItem bitOffset="32" subindex="1">
 <SimpleDatatype xsi:type="UIntegerT" bitLength="32"/>
 <Name textId="TI_9b0f1bef-a71a-4f6d-b582-c64d23d93a27"/>
 <Description textId="TI_c0a3df1a-c427-43a9-9bf2-85916585e888"/>
 </RecordItem>
 <RecordItem bitOffset="0" subindex="2">
 <SimpleDatatype xsi:type="UIntegerT" bitLength="32"/>
 <Name textId="TI_faa2ac85-96a8-4b7c-b81b-bd825bfa3908"/>
 </RecordItem>
 </Datatype>
 <RecordItemInfo defaultValue="0" excludedFromDataStorage="false" modifies
 OtherVariables="false" subindex="1"/>
 <RecordItemInfo defaultValue="0" excludedFromDataStorage="false" modifies
 OtherVariables="false" subindex="2"/>
 <Name textId="TI_ffaed0c2-79f2-4f2c-84fa-3d94578e2104"/>
 </Variable>
 <Variable id="V_PDInputDescriptor" accessRights="ro" dynamic="false" excl
 udedFromDataStorage="false" modifiesOtherVariables="false" index="14">
 <Datatype xsi:type="ArrayT" subindexAccessSupported="false" count="6">
 <SimpleDatatype xsi:type="OctetStringT" fixedLength="1"/>
 </Datatype>
 <Name textId="TI_811f7863-a5ee-4a97-aa4a-77a85ee28e84"/>
 <Description textId="TI_236ce4a8-e215-4346-886e-34f00500807a"/>
 </Variable>
 <Variable id="V_LedIndication" accessRights="ro" dynamic="false" excluded
 FromDataStorage="false" modifiesOtherVariables="false" index="98">
 <Datatype xsi:type="RecordT" subindexAccessSupported="false" bitLength="1
 6">
 <RecordItem bitOffset="8" subindex="1">
 <SimpleDatatype xsi:type="BooleanT">
 <SingleValue value="true">
 <Name textId="TI_01f262d8-bbc2-46bf-9e34-ee931d4cdd92"/>
 </SingleValue>
 <SingleValue value="false">
 <Name textId="TI_c48066ce-87b3-4078-af0f-064345b5c394"/>
 </SingleValue>
 </SimpleDatatype>
 <Name textId="TI_8f0dadfe-75e1-4161-892d-3dd61cd502d8"/>
 </RecordItem>
 <RecordItem bitOffset="0" subindex="2">
 <SimpleDatatype xsi:type="BooleanT">
 <SingleValue value="true">
 <Name textId="TI_7a752cf7-dc94-42d6-ba1e-7900da91168e"/>
 </SingleValue>
 <SingleValue value="false">
 <Name textId="TI_b536a66e-4406-4e12-929e-608aa019728b"/>
 </SingleValue>
 </SimpleDatatype>
 <Name textId="TI_cb70c10a-d19c-4a9b-befb-fea0b1c80df5"/>
 </RecordItem>
 </Datatype>
 <RecordItemInfo defaultValue="false" excludedFromDataStorage="false" modi
 fiesOtherVariables="false" subindex="1"/>
 <RecordItemInfo defaultValue="false" excludedFromDataStorage="false" modi
 fiesOtherVariables="false" subindex="2"/>
 <Name textId="TI_04e73f48-38b1-472a-8674-4f4cf3ccc1c0"/>
 </Variable>
 <Variable id="V_OpHours" accessRights="ro" dynamic="false" excludedFromDa
 taStorage="false" modifiesOtherVariables="false" index="190" defaultValue
 ="0">
 <Datatype xsi:type="UIntegerT" bitLength="32"/>
 <Name textId="TI_92b12c26-33f9-459c-98ad-2574e947bd8c"/>
 <Description textId="TI_533f705f-c4cf-435d-9270-599d31b759c1"/>
 </Variable>
 <Variable id="V_ConfiguratorName" accessRights="rw" dynamic="false" exclu
 dedFromDataStorage="false" modifiesOtherVariables="false" index="206" def
 aultValue="***">
 <Datatype xsi:type="StringT" encoding="UTF-8" fixedLength="32"/>
 <Name textId="TI_f9d62a16-1049-4e06-af1d-4783477baf8e"/>
 </Variable>
 <Variable id="V_ConfiguratorCompany" accessRights="rw" dynamic="false" ex
 cludedFromDataStorage="false" modifiesOtherVariables="false" index="207"
 defaultValue="***">
 <Datatype xsi:type="StringT" encoding="UTF-8" fixedLength="32"/>
 <Name textId="TI_fb7fc166-d03f-4fc2-8f98-2441e20b0a4a"/>
 </Variable>
 <Variable id="V_FieldStatusResult1" accessRights="ro" dynamic="false" exc
 ludedFromDataStorage="false" modifiesOtherVariables="false" index="99">
 <Datatype xsi:type="RecordT" subindexAccessSupported="true" bitLength="41
 6">
 <RecordItem bitOffset="408" subindex="1">
 <SimpleDatatype xsi:type="UIntegerT" bitLength="8"/>
 <Name textId="TI_3be83dee-3beb-414b-a746-b8d3eef162a8"/>
 <Description textId="TI_19eab075-5ab3-4951-ad3f-1517b5bc150a"/>
 </RecordItem>
 <RecordItem bitOffset="400" subindex="2">
 <SimpleDatatype xsi:type="UIntegerT" bitLength="8">
 <SingleValue value="0">
 <Name textId="TI_60c728e3-2f75-4c87-adfc-fe92108007c7"/>
 </SingleValue>
 <SingleValue value="1">
 <Name textId="TI_2e41c831-d554-4492-9075-9bc9194de4d2"/>
 </SingleValue>
 <SingleValue value="2">
 <Name textId="TI_7524efc5-cc3e-4338-a0b0-bc626d4b05c0"/>
 </SingleValue>
 <SingleValue value="3">
 <Name textId="TI_333c3b36-05e8-414d-b888-ea7bed474b44"/>
 </SingleValue>
 </SimpleDatatype>
 <Name textId="TI_816d91f9-da4a-45ee-a77d-7607fab10671"/>
 <Description textId="TI_1fc180d1-973e-41c1-aa5c-24584c6f4e5b"/>
 </RecordItem>
 <RecordItem bitOffset="368" subindex="3">
 <SimpleDatatype xsi:type="UIntegerT" bitLength="32"/>
 <Name textId="TI_1266dac8-3652-41c5-be20-b72d3e481282"/>
 <Description textId="TI_2578056f-b823-4093-b7aa-af4441949738"/>
 </RecordItem>
 <RecordItem bitOffset="352" subindex="4">
 <SimpleDatatype xsi:type="UIntegerT" bitLength="16"/>
 <Name textId="TI_fe238de5-a457-4f20-a862-e7e3b838f767"/>
 <Description textId="TI_7fe74394-80cc-4a56-b367-484ac3065a1d"/>
 </RecordItem>
 <RecordItem bitOffset="320" subindex="5">
 <SimpleDatatype xsi:type="UIntegerT" bitLength="32"/>
 <Name textId="TI_1d709ffb-f0ac-4a0e-8b70-cbe134496e73"/>
 <Description textId="TI_05484540-a9b0-4fc3-9e37-ae653d95b0d2"/>
 </RecordItem>
 <RecordItem bitOffset="288" subindex="6">
 <SimpleDatatype xsi:type="UIntegerT" bitLength="32"/>
 <Name textId="TI_a2fc4fc4-ac79-403d-8358-d7e33019649a"/>
 <Description textId="TI_0032f84f-d6c2-4031-97c6-734d840693fa"/>
 </RecordItem>
 <RecordItem bitOffset="272" subindex="7">
 <SimpleDatatype xsi:type="IntegerT" bitLength="16"/>
 <Name textId="TI_be9d62b2-c0e2-46f0-834f-dd668220eef7"/>
 <Description textId="TI_b5d23d1f-8b7a-4f8b-88fe-ac94f403929e"/>
 </RecordItem>
 <RecordItem bitOffset="256" subindex="8">
 <SimpleDatatype xsi:type="IntegerT" id="DT_219b44ae-d3f9-4a4a-b11a-
 5f88dd30e4bc" bitLength="16"/>
 <Name textId="TI_31e8209a-b8a9-4f7c-b0ec-8f982c32e331"/>
 <Description textId="TI_416e1801-c0c2-4994-8603-8a117dd5ed67"/>
 </RecordItem>
 <RecordItem bitOffset="240" subindex="9">
 <SimpleDatatype xsi:type="IntegerT" id="DT_dbc5ca6a-88b7-41b4-8016-
 4b1ab2023243" bitLength="16"/>
 <Name textId="TI_07227add-b5cf-4d68-9a57-3031e42b1cf8"/>
 <Description textId="TI_5d477964-c329-495d-aac5-5896764176c9"/>
 </RecordItem>
 <RecordItem bitOffset="224" subindex="10">
 <SimpleDatatype xsi:type="IntegerT" id="DT_0c392af8-dfaf-4318-9e77-
 ddea1a2b34a3" bitLength="16"/>
 <Name textId="TI_694e8fd6-9084-416c-ab07-92b3671f1a89"/>
 <Description textId="TI_ea6d65d1-4ba1-440a-968d-69d3755f84c7"/>
 </RecordItem>
 <RecordItem bitOffset="208" subindex="11">
 <SimpleDatatype xsi:type="IntegerT" id="DT_14a020f1-50a2-40bc-87e7-
 bfdb47a615fe" bitLength="16"/>
 <Name textId="TI_67c8ca7c-d1c8-435e-9fdf-4f966a33ff61"/>
 <Description textId="TI_52b39a43-dd07-4886-b58b-947e56792e9a"/>
 </RecordItem>
 <RecordItem bitOffset="192" subindex="12">
 <SimpleDatatype xsi:type="IntegerT" id="DT_d666aa43-7c97-4232-8a52-
 8bf99603c214" bitLength="16"/>
 <Name textId="TI_e9298ee2-13aa-4973-8e2e-0afe9b3ae4ef"/>
 <Description textId="TI_3c41f7dd-1da3-4f75-9dfc-14a050844b36"/>
 </RecordItem>
 <RecordItem bitOffset="176" subindex="13">
 <SimpleDatatype xsi:type="IntegerT" id="DT_c0caa028-b39a-422a-97fd-
 38b32f62600a" bitLength="16"/>
 <Name textId="TI_e56664e6-f56e-4793-8053-d07ac4acd0ac"/>
 <Description textId="TI_50e9c9be-91ce-409d-90da-df0074232a3a"/>
 </RecordItem>
 <RecordItem bitOffset="160" subindex="14">
 <SimpleDatatype xsi:type="IntegerT" id="DT_c4b8754d-a043-44bf-ba71-
 1f141a67887e" bitLength="16"/>
 <Name textId="TI_6cc22743-210f-4d1f-a0af-d4d30a32300a"/>
 <Description textId="TI_6e798263-e8f5-4065-87bc-5f0e53983a82"/>
 </RecordItem>
 <RecordItem bitOffset="144" subindex="15">
 <SimpleDatatype xsi:type="IntegerT" id="DT_7f9a0a6b-cd66-48db-8f66-
 5aba26e5b90a" bitLength="16"/>
 <Name textId="TI_2d58a87f-d554-4bb5-ace6-c1bc19be5c0a"/>
 <Description textId="TI_a74a2cdc-2c89-43fe-9172-e21817a5408f"/>
 </RecordItem>
 <RecordItem bitOffset="128" subindex="16">
 <SimpleDatatype xsi:type="IntegerT" id="DT_bb5cfa2b-b864-49d8-a9f7-
 35d9f6e1b7bf" bitLength="16"/>
 <Name textId="TI_8a461124-ee45-4b15-995d-16b08edf3c1f"/>
 <Description textId="TI_5065877e-2d85-4a3a-a68d-f6893726aa65"/>
 </RecordItem>
 <RecordItem bitOffset="112" subindex="17">
 <SimpleDatatype xsi:type="IntegerT" id="DT_a2cec822-7af4-42e2-9424-
 134d67165008" bitLength="16"/>
 <Name textId="TI_9a0b9d0b-856c-425e-80b9-2ed833b6873a"/>
 <Description textId="TI_abba0c5f-917e-45a1-825f-83af4f4c998c"/>
 </RecordItem>
 <RecordItem bitOffset="96" subindex="18">
 <SimpleDatatype xsi:type="IntegerT" id="DT_0c04cfbf-c53b-4b6c-bd25-
 f485ce6fb0f4" bitLength="16"/>
 <Name textId="TI_e00b08d0-0e8c-4d32-ae8c-68de53224bbd"/>
 <Description textId="TI_75a31ffc-0077-48cc-adb4-e2ed10fdbfc8"/>
 </RecordItem>
 <RecordItem bitOffset="80" subindex="19">
 <SimpleDatatype xsi:type="IntegerT" id="DT_e063e775-2d0b-48f7-b7bd-
 9cf6d871bcc4" bitLength="16"/>
 <Name textId="TI_b1d64e9f-c233-4f35-a8a5-9a1881598485"/>
 <Description textId="TI_ce88372d-494b-4c50-b688-5d8d657c699e"/>
 </RecordItem>
 <RecordItem bitOffset="64" subindex="20">
 <SimpleDatatype xsi:type="IntegerT" id="DT_22c3b9dc-3062-49be-85cd-
 a7b31c063b77" bitLength="16"/>
 <Name textId="TI_d2bbb9c0-c049-4861-a5b5-c0471d81d738"/>
 <Description textId="TI_3319ba4d-74a8-4ef9-b0bd-17ad45ef5f58"/>
 </RecordItem>
 <RecordItem bitOffset="48" subindex="21">
 <SimpleDatatype xsi:type="IntegerT" id="DT_88390b33-bc17-4c40-9cd0-
 09f400f982a4" bitLength="16"/>
 <Name textId="TI_360dff09-0414-4896-9db6-4817b19715c7"/>
 <Description textId="TI_925e703b-4c88-431e-9170-dc0157893105"/>
 </RecordItem>
 <RecordItem bitOffset="32" subindex="22">
 <SimpleDatatype xsi:type="IntegerT" id="DT_2f2e4d55-e07c-48ad-9eb2-
 3b74685b93b1" bitLength="16"/>
 <Name textId="TI_b8978ce7-4bba-4a78-bb66-da8f5f2a2112"/>
 <Description textId="TI_35bd8902-2117-47f4-968f-1fd743200292"/>
 </RecordItem>
 <RecordItem bitOffset="16" subindex="23">
 <SimpleDatatype xsi:type="IntegerT" id="DT_9386df80-d7f1-4c97-88ee-
 d6e86f8e18ed" bitLength="16"/>
 <Name textId="TI_9cc12da7-3193-4d5a-a5ff-78cc131649f9"/>
 <Description textId="TI_58036651-2aeb-4e1b-a1cc-dd6cc51b0e36"/>
 </RecordItem>
 <RecordItem bitOffset="0" subindex="24">
 <SimpleDatatype xsi:type="IntegerT" id="DT_f8c2f6ce-5432-4b47-b945-
 e36a917507fc" bitLength="16"/>
 <Name textId="TI_9d6aea03-c17d-4433-9259-fe8095b3e89f"/>
 <Description textId="TI_60a2b011-7b15-4829-be40-def16590fd1a"/>
 </RecordItem>
 </Datatype>
 <RecordItemInfo defaultValue="0" excludedFromDataStorage="false" modifies
 OtherVariables="false" subindex="6"/>
 <RecordItemInfo defaultValue="0" excludedFromDataStorage="false" modifies
 OtherVariables="false" subindex="2"/>
 <RecordItemInfo defaultValue="0" excludedFromDataStorage="false" modifies
 OtherVariables="false" subindex="3"/>
 <RecordItemInfo defaultValue="0" excludedFromDataStorage="false" modifies
 OtherVariables="false" subindex="4"/>
 <RecordItemInfo defaultValue="0" excludedFromDataStorage="false" modifies
 OtherVariables="false" subindex="5"/>
 <RecordItemInfo defaultValue="0" excludedFromDataStorage="false" modifies
 OtherVariables="false" subindex="1"/>
 <RecordItemInfo defaultValue="0" excludedFromDataStorage="false" modifies
 OtherVariables="false" subindex="7"/>
 <RecordItemInfo defaultValue="0" excludedFromDataStorage="false" modifies
 OtherVariables="false" subindex="8"/>
 <RecordItemInfo defaultValue="0" excludedFromDataStorage="false" modifies
 OtherVariables="false" subindex="9"/>
 <RecordItemInfo defaultValue="0" excludedFromDataStorage="false" modifies
 OtherVariables="false" subindex="10"/>
 <RecordItemInfo defaultValue="0" excludedFromDataStorage="false" modifies
 OtherVariables="false" subindex="11"/>
 <RecordItemInfo defaultValue="0" excludedFromDataStorage="false" modifies
 OtherVariables="false" subindex="12"/>
 <RecordItemInfo defaultValue="0" excludedFromDataStorage="false" modifies
 OtherVariables="false" subindex="13"/>
 <RecordItemInfo defaultValue="0" excludedFromDataStorage="false" modifies
 OtherVariables="false" subindex="14"/>
 <RecordItemInfo defaultValue="0" excludedFromDataStorage="false" modifies
 OtherVariables="false" subindex="15"/>
 <RecordItemInfo defaultValue="0" excludedFromDataStorage="false" modifies
 OtherVariables="false" subindex="16"/>
 <RecordItemInfo defaultValue="0" excludedFromDataStorage="false" modifies
 OtherVariables="false" subindex="17"/>
 <RecordItemInfo defaultValue="0" excludedFromDataStorage="false" modifies
 OtherVariables="false" subindex="18"/>
 <RecordItemInfo defaultValue="0" excludedFromDataStorage="false" modifies
 OtherVariables="false" subindex="19"/>
 <RecordItemInfo defaultValue="0" excludedFromDataStorage="false" modifies
 OtherVariables="false" subindex="20"/>
 <RecordItemInfo defaultValue="0" excludedFromDataStorage="false" modifies
 OtherVariables="false" subindex="21"/>
 <RecordItemInfo defaultValue="0" excludedFromDataStorage="false" modifies
 OtherVariables="false" subindex="22"/>
 <RecordItemInfo defaultValue="0" excludedFromDataStorage="false" modifies
 OtherVariables="false" subindex="23"/>
 <RecordItemInfo defaultValue="0" excludedFromDataStorage="false" modifies
 OtherVariables="false" subindex="24"/>
 <Name textId="TI_a23f7571-7855-4f40-9774-b0822ee16234"/>
 </Variable>
 <Variable id="V_CounterOut1" accessRights="ro" dynamic="false" excludedFr
 omDataStorage="false" modifiesOtherVariables="false" index="80" defaultVa
 lue="0">
 <Datatype xsi:type="UIntegerT" bitLength="32"/>
 <Name textId="TI_50037d27-ca16-4d87-844f-14bf18e638cc"/>
 </Variable>
 <Variable id="V_ApplicationDescription" accessRights="rw" dynamic="false"
 excludedFromDataStorage="false" modifiesOtherVariables="false" index="20
 9" defaultValue="***">
 <Datatype xsi:type="StringT" encoding="UTF-8" fixedLength="32"/>
 <Name textId="TI_03ed47ac-3739-476b-a438-162639560b94"/>
 </Variable>
 </VariableCollection>
 <ProcessDataCollection>
 <ProcessData id="PD_ProcessData1">
 <ProcessDataIn id="PDI_b3cd7430-df30-400d-904b-
 43ebb76c862e" bitLength="16">
 <Datatype xsi:type="RecordT" subindexAccessSupported="false" bitLength="1
 6">
 <RecordItem accessRightRestriction="ro" bitOffset="8" subindex="1">
 <SimpleDatatype xsi:type="UIntegerT" bitLength="8"/>
 <Name textId="TI_bbd753fb-0d7b-489b-8d46-d76033e1b557"/>
 </RecordItem>
 <RecordItem accessRightRestriction="ro" bitOffset="4" subindex="2">
 <SimpleDatatype xsi:type="UIntegerT" bitLength="4"/>
 <Name textId="TI_64c56fde-f0ba-47b2-83ca-12fc78a1395b"/>
 </RecordItem>
 <RecordItem accessRightRestriction="ro" bitOffset="1" subindex="3">
 <SimpleDatatype xsi:type="UIntegerT" bitLength="3"/>
 <Name textId="TI_3d54069a-61ca-487b-8b49-3caaffa445d1"/>
 </RecordItem>
 <RecordItem accessRightRestriction="ro" bitOffset="0" subindex="4">
 <SimpleDatatype xsi:type="BooleanT">
 <SingleValue value="true">
 <Name textId="TI_d50f4f73-da92-4594-868d-c9a22b7c9b8f"/>
 </SingleValue>
 <SingleValue value="false">
 <Name textId="TI_c28c9c09-7b1e-4f37-be63-dbd25e822025"/>
 </SingleValue>
 </SimpleDatatype>
 <Name textId="TI_f11bae6e-91da-4618-a4ac-1fe38d93d858"/>
 </RecordItem>
 </Datatype>
 <Name textId="TI_06cd9bba-3cfb-42ea-ab5d-7ee0ad4c2bc9"/>
 </ProcessDataIn>
 </ProcessData>
 </ProcessDataCollection>
 <ErrorTypeCollection/>
 <EventCollection>
 <StdEventRef code="0"/>
 </EventCollection>
 <UserInterface>
 <MenuCollection>
 <Menu id="IdentificationMenu">
 <Name textId="TI_c8708032-06b1-489a-a57c-efe587250cb3"/>
 <VariableRef variableId="V_VendorName"/>
 <VariableRef variableId="V_ProductName"/>
 <VariableRef variableId="V_ProductID"/>
 <VariableRef variableId="V_SerialNumber"/>
 <VariableRef variableId="V_FirmwareRevision"/>
 <VariableRef variableId="V_ApplicationSpecificTag"/>
 <VariableRef variableId="V_DeviceSpecificTag"/>
 <VariableRef variableId="V_SpkVersionRelease"/>
 <VariableRef variableId="V_ApplicationDescription"/>
 <VariableRef displayFormat="Dec" accessRightRestriction="ro" variableId="
 V_OpHours"/>
 <RecordItemRef displayFormat="Dec" accessRightRestriction="ro" variableId
 ="V_OperatingData" subindex="2"/>
 <RecordItemRef displayFormat="Dec" accessRightRestriction="ro" variableId
 ="V_OperatingData" subindex="1"/>
 </Menu>
 <Menu id="ParameterMenu">
 <Name textId="TI_fd817932-89ae-40c7-b0dd-f5af555b17da"/>
 <MenuRef menuId="ME_25e7a004-9228-4e79-b2fe-beb4c2770f6b"/>
 <MenuRef menuId="ME_c93adef9-899a-4edb-84c5-ee715ac04ace"/>
 <MenuRef menuId="ME_73adbc8b-5905-480e-b700-4f7de4ad54cb"/>
 <MenuRef menuId="ME_03a71ced-fda4-415a-baee-bf4853d57c39"/>
 <MenuRef menuId="ME_a71992a8-d6f3-41ad-a2c9-5434915457dc"/>
 <MenuRef menuId="ME_Advanced"/>
 </Menu>
 <Menu id="ME_7f375406-484e-45ff-a561-dad9eeed6998">
 <Name textId="TI_0090f94c-9523-44b8-9265-a524cb758ac1"/>
 <MenuRef menuId="ME_bbd623fd-662f-4919-930f-7a659984b97f"/>
 </Menu>
 <Menu id="ME_Advanced">
 <Name textId="TI_b3ed74d3-30d3-4f5a-bf9f-0305cb65562f"/>
 <MenuRef menuId="ME_IOLconfiguration"/>
 </Menu>
 <Menu id="ME_IOLconfiguration">
 <Name textId="TI_97d0c217-1e41-4458-a3eb-f994813d24d1"/>
 <VariableRef variableId="V_DeviceAccessLocks"/>
 </Menu>
 <Menu id="ME_bbd623fd-662f-4919-930f-7a659984b97f">
 <Name textId="TI_ea0b0378-9ed0-4d6d-8e6d-96e23ce49116"/>
 <RecordItemRef displayFormat="Dec" accessRightRestriction="ro" variableId
 ="V_EvalCaseResult1" subindex="1"/>
 <RecordItemRef displayFormat="Dec" accessRightRestriction="ro" variableId
 ="V _EvalCaseResult1" subindex="2"/>
 <RecordItemRef displayFormat="Dec" unitCode="1056" accessRightRestriction
 ="ro" variableId="V_EvalCaseResult1" subindex="3"/>
 <RecordItemRef displayFormat="Dec" accessRightRestriction="ro" variableId
 ="V _EvalCaseResult1" subindex="4"/>
 <RecordItemRef displayFormat="Dec" unitCode="1056" accessRightRestriction
 ="ro" variableId="V_EvalCaseResult1" subindex="5"/>
 <RecordItemRef displayFormat="Dec" unitCode="1056" accessRightRestriction
 ="ro" variableId="V _EvalCaseResult1" subindex="6"/>
 </Menu>
 <Menu id="ME_25e7a004-9228-4e79-b2fe-beb4c2770f6b">
 <Name textId="TI_37d51f4c-bc87-433d-a918-fa9f25badd47"/>
 <RecordItemRef displayFormat="Dec" unitCode="1013" variableId="V_EvalCase
 Parameter" subindex="1"/>
 <RecordItemRef displayFormat="Dec" unitCode="1056" variableId="V_EvalCase
 Parameter" subindex="2"/>
 <RecordItemRef displayFormat="Dec" unitCode="1056" variableId="V_EvalCase
 Parameter" subindex="3"/>
 </Menu>
 <Menu id="ME_c93adef9-899a-4edb-84c5-ee715ac04ace">
 <Name textId="TI_e90b8874-d9cc-4efa-9630-e69a9a18ba60"/>
 <VariableRef variableId="V_Field1"/>
 </Menu>
 <Menu id="ME_73adbc8b-5905-480e-b700-4f7de4ad54cb">
 <Name textId="TI_3b79c259-9614-418b-bcea-d4f36cca2089"/>
 <VariableRef variableId="V_ConfiguratorName"/>
 <VariableRef variableId="V_ConfiguratorCompany"/>
 <VariableRef variableId="V_ApplicationDescription"/>
 </Menu>
 <Menu id="ME_a71992a8-d6f3-41ad-a2c9-5434915457dc">
 <Name textId="TI_46c4f17d-781e-452e-ae14-a2aa13e0dd55"/>
 <VariableRef accessRightRestriction="wo" variableId="V_SystemCommand">
 <Button buttonValue="225">
 <Description textId="TI_f1874433-cb4a-4bed-9fec-cd46c8f6aad3"/>
 <ActionStartedMessage textId="TI_81989cd9-6fbb-4c2b-9d88-a425633d485a"/>
 </Button>
 </VariableRef>
 </Menu>
 <Menu id="ME_03a71ced-fda4-415a-baee-bf4853d57c39">
 <Name textId="TI_de4c6fa5-f68b-4c93-a0bf-00cfa1064050"/>
 <VariableRef accessRightRestriction="wo" variableId="V_SystemCommand">
 <Button buttonValue="130">
 <Description textId="TI_0330c948-77da-423d-9675-4976300239d6"/>
 <ActionStartedMessage textId="TI_334a2efa-2a9a-4569-b2f4-f187f6d7a4d3"/>
 </Button>
 </VariableRef>
 </Menu>
 </MenuCollection>
 <ObserverRoleMenuSet>
 <IdentificationMenu xsi:type="UIMenuRefT" menuId="IdentificationMenu"/>
 <ParameterMenu xsi:type="UIMenuRefT" menuId="ParameterMenu"/>
 <ObservationMenu menuId="ME_7f375406-484e-45ff-a561-dad9eeed6998"/>
 </ObserverRoleMenuSet>
 <MaintenanceRoleMenuSet>
 <IdentificationMenu xsi:type="UIMenuRefT" menuId="IdentificationMenu"/>
 <ParameterMenu xsi:type="UIMenuRefT" menuId="ParameterMenu"/>
 <ObservationMenu xsi:type="UIMenuRefT" menuId="ME_7f375406-484e-45ff-
 a561-dad9eeed6998"/>
 </MaintenanceRoleMenuSet>
 <SpecialistRoleMenuSet>
 <IdentificationMenu menuId="IdentificationMenu"/>
 <ParameterMenu menuId="ParameterMenu"/>
 <ObservationMenu xsi:type="UIMenuRefT" menuId="ME_7f375406-484e-45ff-
 a561-dad9eeed6998"/>
 </SpecialistRoleMenuSet>
 </UserInterface>
 </DeviceFunction>
 </ProfileBody>
 <CommNetworkProfile xsi:type="IOLinkCommNetworkProfileT" iolinkRevision="
 V1.1">
 <TransportLayers>
 <PhysicalLayer bitrate="COM3" minCycleTime="2300" mSequenceCapability="47
 " sioSupported="true">
 <Connection xsi:type="M12-5ConnectionT">
 <ProductRef productId="1077524"/>
 <Wire1 xsi:type="Wire1T" color="BN" function="L+"/>
 <Wire2 color="WH" function="NC"/>
 <Wire3 xsi:type="Wire3T" color="BU" function="L-"/>
 <Wire4 xsi:type="Wire4T" color="BK" function="C/Q"/>
 <Wire5 color="GY" function="NC"/>
 </Connection>
 </PhysicalLayer>
 </TransportLayers>
 <Test>
 <Config1 index="89" testValue="0x01"/>
 <Config2 index="1000" testValue="0x12"/>
 <Config3 index="24" testValue="0x41,0x42,0x43,0x44,0x45,0x46,0x47,0x48,0x
 49,0x4a,0x4b,0x4c,0x4d,0x4e,0x4f,0x50"/>
 </Test>
 </CommNetworkProfile>
 <ExternalTextCollection>
 <PrimaryLanguage xml:lang="en">
 <Text id="TI_VendorText" value="SICK Sensor Intelligence."/>
 <Text id="TI_VendorUrl" value="http://www.sick.com"/>
 <Text id="TI_DeviceFamily" value="Detection and ranging solutions"/>
 <Text id="TI_DeviceName" value="TiM100"/>
 <Text id="TI_DeviceVariants" value="TiM100-3010200"/>
 <Text id="TI_DeviceDetailsDescription" value="TiM100 (230400 kBd)"/>
 <Text id="TI_3dd66586-10ea-4228-8261-629127b7ed4d" value="Profile
 Characteristics"/>
 <Text id="TI_c49dc91b-2885-46ab-80b5-c6ae928fed3e" value="Smart Sensor
 Profile characteristics"/>
 <Text id="TI_6c89ee22-d08d-42e3-87f8-7d33d8d6c0db" value="Identifier1"/>
 <Text id="TI_cf05ba97-1b6c-43e7-a5ae-7d2862b8d30a" value="Identifier2"/>
 <Text id="TI_92ab49d0-13be-461a-b262-36fda1dc1b22" value="Identifier3"/>
 <Text id="TI_300e79ad-c0bf-44dc-adb9-68d5c1701aa1" value="Identifier4"/>
 <Text id="TI_c8708032-06b1-489a-a57c-efe587250cb3" value="Identification
 Menu"/>
 <Text id="TI_4cbf12ea-c673-4162-928c-58ae68f18502" value="SICK Profile
 Version"/>
 <Text id="TI_09f5559e-812f-4768-8603-8b799f7fe1b6" value="Device Specific
 Tag"/>
 <Text id="TI_fd817932-89ae-40c7-b0dd-f5af555b17da" value="Parameter
 Menu"/>
 <Text id="TI_0090f94c-9523-44b8-9265-a524cb758ac1" value="Observation
 Menu"/>
 <Text id="TI_06cd9bba-3cfb-42ea-ab5d-7ee0ad4c2bc9" value="Process Data
 In"/>
 <Text id="TI_f11bae6e-91da-4618-a4ac-1fe38d93d858" value="Output Q1"/>
 <Text id="TI_d50f4f73-da92-4594-868d-c9a22b7c9b8f" value="on"/>
 <Text id="TI_c28c9c09-7ble-4f37-be63-dbd25e822025" value="off"/>
 <Text id="TI_814c4f32-8aa1-4653-8194-231660e160d8" value="Evaluation Case
 Parameters"/>
 <Text id="TI_471a7e30-5064-43bc-8363-34dc0a6fac07" value="Blanking
 size"/>
 <Text id="TI_f7810420-21e5-42f9-bc01-a21073c88716" value="Global Blanking
 size"/>
 <Text id="TI_c8fa08eb-ab37-401a-93af-38e3bb23d3e7" value="Response
 time"/>
 <Text id="TI_a2226424-aa78-412e-af49-5c65333a1096" value="Global Response
 time"/>
 <Text id="TI_4e676576-aaa3-4110-bfde-388acfae7c00" value="Duration time
 output"/>
 <Text id="TI_da846ffe-0ac9-480e-b37c-fbabeca4ff44" value="Global Duration
 time output"/>
 <Text id="TI_d545afde-d48c-4235-94c2-6063c921300d" value="Field Points
 Defintion"/>
 <Text id="TI_b196436c-a253-4780-92ed-cb0b4bf00364" value="field
 definition of field 1 in x/y coordinates, and real length of number of
 x/y coordinates, s. Operating manual"/>
 <Text id="TI_c7f56175-78d8-413a-85ab-de1c1310df09" value="Evaluation
 case"/>
 <Text id="TI_b60f4137-a385-4500-b21b-4df3ba43e206" value="Evaluation case
 result"/>
 <Text id="TI_e8642e13-4748-4d83-a175-90089518eab7" value="Evaluation case
 number"/>
 <Text id="TI_85a081e8-03b1-4f04-8c74-6790199c848a" value="Case result"/>
 <Text id="TI_fb284f80-8c3d-44e3-bb39-b42c8755ddf1" value="Evaluation case
 result"/>
 <Text id="TI_9da5fd4c-215c-447d-bbbb-534e51f8079a" value="Actual time
 stamp"/>
 <Text id="TI_76667b75-727c-4dec-8a5f-c99e6685558d" value="Actual time
 stamp in ms after field evaluation"/>
 <Text id="TI_f91f991f-57b3-43cd-a910-9b72a64337de" value="Number of field
 infringements"/>
 <Text id="TI_42e5c5ba-59ca-4780-b5af-dd15c8f4f2be" value="Total number of
 field infringements"/>
 <Text id="TI_e512ba1f-cdfb-4ac2-9200-5c2df32eaf39" value="Beginning of
 field infringement"/>
 <Text id="TI_1309d270-d7dd-4bd3-a969-bcd7edb82a52" value="Beginning of
 field infringement in ms"/>
 <Text id="TI_3b799052-29de-4cfa-b5e7-da1a13721222" value="Duration of
 field infringement"/>
 <Text id="TI_5b648b61-6ba5-4a04-8860-f436bd8d5cf1" value="Duration of
 field infringement in ms"/>
 <Text id="TI_64c56fde-f0ba-47b2-83ca-12fc78al395b" value="Device state"/>
 <Text id="TI_42a6d6a0-29a7-4acf-9f39-c735488d3f3c" value="Save
 permanent"/>
 <Text id="TI_e0f467d1-c99c-485a-865b-1f06f287c846" value=""/>
 <Text id="TI_cbc08792-151c-478c-acbe-3dd5ccdfb52a" value=""/>
 <Text id="TI_487ca00e-9322-4b8d-8e26-53a3693cdb42" value=""/>
 <Text id="TI_4cb50674-9e79-48bd-b830-016abfec083c" value="Software
 package version"/>
 <Text id="TI_4e81b36e-9466-4ce0-917f-036878105149" value="Hash value"/>
 <Text id="TI_73eaa091-9554-47fb-a458-b5ce6841535b" value="Build date"/>
 <Text id="TI_ffaed0c2-79f2-4f2c-84fa-3d94578e2104" value="Operating
 Data"/>
 <Text id="TI_9b0f1bef-a71a-4f6d-b582-c64d23d93a27" value="Power-on
 counter"/>
 <Text id="TI_faa2ac85-96a8-4b7c-b81b-bd825bfa3908" value="Operating hours
 since power on"/>
 <Text id="TI_811f7863-a5ee-4a97-aa4a-77a85ee28e84" value="PDInput
 Descriptor"/>
 <Text id="TI_236ce4a8-e215-4346-886e-34f00500807a" value="Smart Sensor
 Profile Process data description"/>
 <Text id="TI_e34cf11e-c379-4b60-a61f-29ccfaaef5b4" value="Hash value and
 build date of release SPK"/>
 <Text id="TI_04e73f48-38b1-472a-8674-4f4cf3ccc1c0" value="LED
 Indication"/>
 <Text id="TI_8f0dadfe-75e1-4161-892d-3dd61cd502d8" value="green"/>
 <Text id="TI_01f262d8-bbc2-46bf-9e34-ee931d4cdd92" value="green LED is
 on"/>
 <Text id="TI_c48066ce-87b3-4078-af0f-064345b5c394" value="green LED is
 off"/>
 <Text id="TI_cb70c10a-d19c-4a9b-befb-fea0b1c80df5" value="red"/>
 <Text id="TI_7a752cf7-dc94-42d6-ba1e-7900da91168e" value="red LED is
 on"/>
 <Text id="TI_b536a66e-4406-4e12-929e-608aa019728b" value="red LED is
 off"/>
 <Text id="TI_92b12c26-33f9-459c-98ad-2574e947bd8c" value="Operating Hours
 total"/>
 <Text id="TI_533f705f-c4cf-435d-9270-599d31b759c1" value="Unit in 1/10
 h"/>
 <Text id="TI_3d54069a-61ca-487b-8b49-3caaffa445d1" value="reserved"/>
 <Text id="TI_bbd753fb-0d7b-489b-8d46-d76033e1b557" value="reserved"/>
 <Text id="TI_f9d62a16-1049-4e06-af1d-4783477baf8e" value="Configurator
 Name"/>
 <Text id="TI_fb7fc166-d03f-4fc2-8f98-2441e20b0a4a" value="Configurator
 Company"/>
 <Text id="TI_b3ed74d3-30d3-4f5a-bf9f-0305cb65562f" value="Advanced"/>
 <Text id="TI_97d0c217-1e41-4458-a3eb-f994813d24d1" value="IO-Link
 configuration"/>
 <Text id="TI_91deccb9-4d62-432c-a91e-c29253f371f4" value="Evaluation case
 number"/>
 <Text id="TI_a23f7571-7855-4f40-9774-b0822ee16234" value="Field status"/>
 <Text id="TI_3be83dee-3beb-414b-a746-b8d3eef162a8" value="Evaluation case
 number"/>
 <Text id="TI_19eab075-5ab3-4951-ad3f-1517b5bc150a" value="Evaluation case
 number"/>
 <Text id="TI_1d709ffb-f0ac-4a0e-8b70-cbe134496e73" value="Beginning of
 field infringement"/>
 <Text id="TI_05484540-a9b0-4fc3-9e37-ae653d95b0d2" value="Beginning of
 field infringement in ms"/>
 <Text id="TI_be9d62b2-c0e2-46f0-834f-dd668220eef7" value="X distance
 first spot object 1"/>
 <Text id="TI_b5d23d1f-8b7a-4f8b-88fe-ac94f403929e" value="X distance of
 first infringed spot of object 1 in mm"/>
 <Text id="TI_31e8209a-b8a9-4f7c-b0ec-8f982c32e331" value="Y distance
 first spot object 1"/>
 <Text id="TI_416e1801-c0c2-4994-8603-8a117dd5ed67" value="Y distance of
 first infringed spot of object 1 in mm"/>
 <Text id="TI_07227add-b5cf-4d68-9a57-3031e42b1cf8" value="reserved"/>
 <Text id="TI_5d477964-c329-495d-aac5-5896764176c9" value="reserved"/>
 <Text id="TI_694e8fd6-9084-416c-ab07-92b3671f1a89" value="X distance last
 spot object 1"/>
 <Text id="TI_ea6d65d1-4ba1-440a-968d-69d3755f84c7" value="X distance of
 last infringed spot of object 1 in mm"/>
 <Text id="TI_67c8ca7c-d1c8-435e-9fdf-4f966a33ff61" value="Y distance last
 spot object 1"/>
 <Text id="TI_52b39a43-dd07-4886-b58b-947e56792e9a" value="Y distance of
 last infringed spot of object 1 in mm"/>
 <Text id="TI_e9298ee2-13aa-4973-8e2e-0afe9b3ae4ef" value="reserved"/>
 <Text id="TI_3c41f7dd-1da3-4f75-9dfc-14a050844b36" value="reserved"/>
 <Text id="TI_e56664e6-f56e-4793-8053-d07ac4acd0ac" value="X distance
 first spot object 2"/>
 <Text id="TI_50e9c9be-91ce-409d-90da-df0074232a3a" value="X distance of
 first infringed spot of object 2 in mm"/>
 <Text id="TI_6cc22743-210f-4d1f-a0af-d4d30a32300a" value="Y distance
 first spot object 2"/>
 <Text id="TI_6e798263-e8f5-4065-87bc-5f0e53983a82" value="Y distance of
 first infringed spot of object 2 in mm"/>
 <Text id="TI_2d58a87f-d554-4bb5-ace6-c1bc19be5c0a" value="reserved"/>
 <Text id="TI_a74a2cdc-2c89-43fe-9172-e21817a5408f" value="reserved"/>
 <Text id="TI_8a461124-ee45-4b15-995d-16b08edf3c1f" value="X distance last
 spot object 2"/>
 <Text id="TI_5065877e-2d85-4a3a-a68d-f6893726aa65" value="X distance of
 last infringed spot of object 2 in mm"/>
 <Text id="TI_9a0b9d0b-856c-425e-80b9-2ed833b6873a" value="Y distance last
 spot object 2"/>
 <Text id="TI_abba0c5f-917e-45a1-825f-83af4f4c998c" value="Y distance of
 last infringed spot of object 2 in mm"/>
 <Text id="TI_e00b08d0-0e8c-4d32-ae8c-68de53224bbd" value="reserved"/>
 <Text id="TI_75a31ffc-0077-48cc-adb4-e2ed10fdbfc8" value="reserved"/>
 <Text id="TI_b1d64e9f-c233-4f35-a8a5-9a1881598485" value="X distance
 first spot object 3"/>
 <Text id="TI ce88372d-494b-4c50-b688-5d8d657c699e" value="X distance of
 first infringed spot of object 3 in mm"/>
 <Text id="TI_d2bbb9c0-c049-4861-a5b5-c0471d81d738" value="Y distance
 first spot object 3"/>
 <Text id="TI_3319ba4d-74a8-4ef9-b0bd-17ad45ef5f58" value="Y distance of
 first infringed spot of object 3 in mm"/>
 <Text id="TI_360dff09-0414-4896-9db6-4817b19715c7" value="reserved"/>
 <Text id="TI_925e703b-4c88-431e-9170-dc0157893105" value="reserved"/>
 <Text id="TI_b8978ce7-4bba-4a78-bb66-da8f5f2a2112" value="X distance last
 spot object 3"/>
 <Text id="TI 35bd8902-2117-47f4-968f-1fd743200292" value="X distance of
 last infringed spot of object 3 in mm"/>
 <Text id="TI_9cc12da7-3193-4d5a-a5ff-78cc131649f9" value="Y distance last
 spot object 3"/>
 <Text id="TI_58036651-2aeb-4e1b-a1cc-dd6cc51b0e36" value="Y distance of
 last infringed spot of object 3 in mm"/>
 <Text id="TI_9d6aea03-c17d-4433-9259-fe8095b3e89f" value="reserved"/>
 <Text id="TI_60a2b011-7b15-4829-be40-def16590fd1a" value="reserved"/>
 <Text id="TI_a2fc4fc4-ac79-403d-8358-d7e33019649a" value="Duration of
 field infringement"/>
 <Text id="TI_fe238de5-a457-4f20-a862-e7e3b838f767" value="Number of field
 infringements"/>
 <Text id="TI_1266dac8-3652-41c5-be20-b72d3e481282" value="Actual time
 stamp"/>
 <Text id="TI_816d91f9-da4a-45ee-a77d-7607fab10671" value="Case result"/>
 <Text id="TI_1fc180d1-973e-41c1-aa5c-24584c6f4e5b" value="Evaluation case
 result"/>
 <Text id="TI_2578056f-b823-4093-b7aa-af4441949738" value="Actual time
 stamp in ms"/>
 <Text id="TI_7fe74394-80cc-4a56-b367-484ac3065a1d" value="Total number of
 field infringements"/>
 <Text id="TI_0032f84f-d6c2-4031-97c6-734d840693fa" value="Duration of
 field infringement in ms"/>
 <Text id="TI_50037d27-ca16-4d87-844f-14bf18e638cc" value="Counter output
 1"/>
 <Text id="TI_9053119d-8592-4447-843d-29bff5cb29f1" value="Reset counter
 output 1"/>
 <Text id="TI_03ed47ac-3739-476b-a438-162639560b94" value="Application
 Description"/>
 <Text id="TI_81739ffb-b326-4d67-b967-37372483a6e5" value="Reset
 Evaluation Result Field 1"/>
 <Text id="TI_2b3de715-8ca0-4362-b8f4-d01f8380cb00" value="Reset Field
 Status Result Field 1"/>
 <Text id="TI_ea0b0378-9ed0-4d6d-8e6d-96e23ce49116" value="Evaluation case
 result"/>
 <Text id="TI_37d51f4c-bc87-433d-a918-fa9f25badd47" value="Evaluation case
 parameter"/>
 <Text id="TI_e90b8874-d9cc-4efa-9630-e69a9a18ba60" value="Field points"/>
 <Text id="TI_3b79c259-9614-418b-bcea-d4f36cca2089" value="Description"/>
 <Text id="TI_46c4f17d-781e-452e-ae14-a2aa13e0dd55" value="Save
 permanent"/>
 <Text id="TI_f1874433-cb4a-4bed-9fec-cd46c8f6aad3" value="Save parameters
 permanently"/>
 <Text id="TI_81989cd9-6fbb-4c2b-9d88-a425633d485a" value="Save parameters
 permanently"/>
 <Text id="TI_de4c6fa5-f68b-4c93-a0bf-00cfa1064050" value="Reset to
 factory settings"/>
 <Text id="TI_0330c948-77da-423d-9675-4976300239d6" value="Reset to
 factory settings"/>
 <Text id="TI_334a2efa-2a9a-4569-b2f4-f187f6d7a4d3" value="Reset to
 factory settings"/>
 <Text id="TI_3236ae78-0595-43da-8a04-7c1c9e6a7008" value="Hash value of
 software package"/>
 <Text id="TI_434d9f97-4297-4054-a70c-f1b41e5a88ad" value="Build date of
 software package"/>
 <Text id="TI_09287ae8-9749-41af-82c8-616885654d41" value="don't care"/>
 <Text id="TI_90bf6454-322b-464b-8b2a-38982aaf11fb" value="field free"/>
 <Text id="TI_93bfa76b-9157-4c22-9241-6f0b1ce96b32" value="field
 infringed"/>
 <Text id="TI_e02f8bf1-423f-4329-a3b2-aa1227ae40f0" value="field infringed
 but response time not expired yet"/>
 <Text id="TI_c0a3df1a-c427-43a9-9bf2-85916585e888" value="Power on
 counter"/>
 <Text id="TI_60c728e3-2f75-4c87-adfc-fe92108007c7" value="don't care"/>
 <Text id="TI_2e41c831-d554-4492-9075-9bc9194de4d2" value="field free"/>
 <Text id="TI_7524efc5-cc3e-4338-a0b0-bc626d4b05c0" value="field
 infringed"/>
 <Text id="TI_333c3b36-05e8-414d-b888-ea7bed474b44" value="field infringed
 but response time not expired yet"/>
 </PrimaryLanguage>
 <Language xml:lang="de">
 <Text id="TI_VendorText" value="SICK Sensor Intelligence."/>
 <Text id="TI_VendorUrl" value="http://www.sick.com"/>
 <Text id="TI_DeviceFamily" value="Detection and ranging solutions"/>
 <Text id="TI_DeviceName" value="TiM100"/>
 <Text id="TI_DeviceVariants" value="TiM100-3010200"/>
 <Text id="TI_DeviceDetailsDescription" value="TiM100 (230400 kBd)"/>
 <Text id="TI_3dd66586-10ea-4228-8261-
 629127b7ed4d" value="Profileigenschaften"/>
 <Text id="TI_c49dc91b-2885-46ab-80b5-c6ae928fed3e" value="Smart Sensor
 Profile Eigenschaften"/>
 <Text id="TI_6c89ee22-d08d-42e3-87f8-7d33d8d6c0db" value="Identifier1"/>
 <Text id="TI_cf05ba97-1b6c-43e7-a5ae-7d2862b8d30a" value="Identifier2"/>
 <Text id="TI_92ab49d0-13be-461a-b262-36fda1dc1b22" value="Identifier3"/>
 <Text id="TI_300e79ad-c0bf-44dc-adb9-68d5c1701aa1" value="Identifier4"/>
 <Text id="TI_c8708032-06b1-489a-a57c-efe587250cb3" value="Identification
 Menu"/>
 <Text id="TI_4cbf12ea-c673-4162-928c-58ae68f18502" value="SICK Profil
 Version"/>
 <Text id="TI_09f5559e-812f-4768-8603-
 8b799f7fe1b6" value="Gerätespezifischer Tag"/>
 <Text id="TI_fd817932-89ae-40c7-b0dd-f5af555b17da" value="Parameter
 Menu"/>
 <Text id="TI_0090f94c-9523-44b8-9265-a524cb758ac1" value="Observation
 Menu"/>
 <Text id="TI_06cd9bba-3cfb-42ea-ab5d-7ee0ad4c2bc9" value="Prozessdaten
 In"/>
 <Text id="TI_f11bae6e-91da-4618-a4ac-1fe38d93d858" value="Ausgang Q1"/>
 <Text id="TI_d50f4f73-da92-4594-868d-c9a22b7c9b8f" value="an"/>
 <Text id="TI_c28c9c09-7b1e-4f37-be63-dbd25e822025" value="aus"/>
 <Text id="TI_814c4f32-8aa1-4653-8194-231660e160d8" value="Auswertung 1"/>
 <Text id="TI_471a7e30-5064-43bc-8363-
 34dc0a6fac07" value="Ausblendungsgröße"/>
 <Text id="TI_f7810420-21e5-42f9-bc01-a21073c88716" value="Globale
 Ausblendungsgröße"/>
 <Text id="TI_c8fa08eb-ab37-401a-93af-38e3bb23d3e7" value="Ansprechzeit"/>
 <Text id="TI_a2226424-aa78-412e-af49-5c65333a1096" value="Globale
 Ansprechzeit"/>
 <Text id="TI_4e676576-aaa3-4110-bfde-
 388acfae7c00" value="Verzögerungszeit"/>
 <Text id="TI_da846ffe-0ac9-480e-b37c-fbabeca4ff44" value="Globale
 Haltezeit Ausgang"/>
 <Text id="TI_d545afde-d48c-4235-94c2-6063c921300d" value="Feldpunkte-
 Definition "/>
 <Text id="TI_b196436c-a253-4780-92ed-cb0b4bf00364" value="Felddefinition
 von Feld 1 in x/y Koordinaten, and echte Länge der x/y Koordinaten, s.
 Betriebsanleitung"/>
 <Text id="TI_c7f56175-78d8-413a-85ab-de1c1310df09" value="Auswertefall"/>
 <Text id="TI_b60f4137-a385-4500-b21b-
 4df3ba43e206" value="Auswertefallergebnis"/>
 <Text id="TI_e8642e13-4748-4d83-a175-
 90089518eab7" value="Auswertefallindex"/>
 <Text id="TI_85a081e8-03b1-4f04-8c74-6790199c848a" value="Fallergebnis"/>
 <Text id="TI_fb284f80-8c3d-44e3-bb39-
 b42c8755ddf1" value="Auswertefallergebnis"/>
 <Text id="TI_9da5fd4c-215c-447d-bbbb-534e51f8079a" value="Aktueller
 Zeitstempel"/>
 <Text id="TI_76667b75-727c-4dec-8a5f-c99e6685558d" value="Aktueller
 Zeitstempel in ms beim Feldergebnis"/>
 <Text id="TI_f91f991f-57b3-43cd-a910-9b72a64337de" value="Anzahl der
 Feldverletzungen"/>
 <Text id="TI_42e5c5ba-59ca-4780-b5af-dd15c8f4f2be" value="Gesamtanzahl
 Feldverletzungen"/>
 <Text id="TI_e512ba1f-cdfb-4ac2-9200-5c2df32eaf39" value="Start der
 Feldverletzung"/>
 <Text id="TI_1309d270-d7dd-4bd3-a969-bcd7edb82a52" value="Start der
 Feldverletzung in ms"/>
 <Text id="TI_3b799052-29de-4cfa-b5e7-da1a13721222" value="Dauer der
 Feldverletzung"/>
 <Text id="TI_5b648b61-6ba5-4a04-8860-f436bd8d5cf1" value="Dauer der
 Feldverletzung in ms"/>
 <Text id="TI_64c56fde-f0ba-47b2-83ca-12fc78a1395b" value="Gerätestatus"/>
 <Text id="TI_42a6d6a0-29a7-4acf-9f39-c735488d3f3c" value="Permanent
 speichern"/>
 <Text id="TI_4cb50674-9e79-48bd-b830-016abfec083c" value="Softwarepaket-
 Version"/>
 <Text id="TI_73eaa091-9554-47fb-a458-b5ce6841535b" value="Build-Datum"/>
 <Text id="TI_4e81b36e-9466-4ce0-917f-036878105149" value="Hash-Wert"/>
 <Text id="TI_ffaed0c2-79f2-4f2c-84fa-
 3d94578e2104" value="Betriebsdaten"/>
 <Text id="TI_9b0f1bef-a71a-4f6d-b582-
 c64d23d93a27" value="Einschaltzähler"/>
 <Text id="TI_faa2ac85-96a8-4b7c-b81b-bd825bfa3908" value="Betriebsstunden
 seit einschalten"/>
 <Text id="TI_811f7863-a5ee-4a97-aa4a-77a85ee28e84" value="PDInput
 Descriptor"/>
 <Text id="TI_04e73f48-38b1-472a-8674-4f4cf3ccc1c0" value="LED Anzeige"/>
 <Text id="TI_8f0dadfe-75e1-4161-892d-3dd61cd502d8" value="grün"/>
 <Text id="TI_01f262d8-bbc2-46bf-9e34-ee931d4cdd92" value="grüne LED ist
 an"/>
 <Text id="TI_c48066ce-87b3-4078-af0f-064345b5c394" value="grüne LED ist
 aus"/>
 <Text id="TI_cb70c10a-d19c-4a9b-befb-fea0b1c80df5" value="rot"/>
 <Text id="TI_7a752cf7-dc94-42d6-ba1e-7900da91168e" value="rote LED ist
 an"/>
 <Text id="TI_b536a66e-4406-4e12-929e-608aa019728b" value="rote LED ist
 aus"/>
 <Text id="TI_e34cf11e-c379-4b60-a61f-29ccfaaef5b4" value="Hash-Wert und
 Build Datum des Release SPK"/>
 <Text id="TI_92b12c26-33f9-459c-98ad-2574e947bd8c" value="Betriebsstunden
 gesamt"/>
 <Text id="TI_3d54069a-61ca-487b-8b49-3caaffa445d1" value="Reserve"/>
 <Text id="TI_bbd753fb-0d7b-489b-8d46-d76033e1b557" value="Reserve"/>
 <Text id="TI_f9d62a16-1049-4e06-af1d-4783477baf8e" value="Einrichter
 Name"/>
 <Text id="TI_fb7fc166-d03f-4fc2-8f98-2441e20b0a4a" value="Einrichter
 Firma"/>
 <Text id="TI_91deccb9-4d62-432c-a91e-c29253f371f4" value="Auswertefall-
 Index"/>
 <Text id="TI_a23f7571-7855-4f40-9774-b0822ee16234" value="Feld Status"/>
 <Text id="TI_3be83dee-3beb-414b-a746-b8d3eef162a8" value="Auswertefall-
 Index"/>
 <Text id="TI_19eab075-5ab3-4951-ad3f-1517b5bc150a" value="Auswertefall-
 Index"/>
 <Text id="TI_1d709ffb-f0ac-4a0e-8b70-cbe134496e73" value="Start der
 Feldverletzung"/>
 <Text id="TI_05484540-a9b0-4fc3-9e37-ae653d95b0d2" value="Start der
 Feldverletzung in ms"/>
 <Text id="TI_be9d62b2-c0e2-46f0-834f-dd668220eef7" value="X Abstand
 erster Spot Objekt 1"/>
 <Text id="TI_b5d23d1f-8b7a-4f8b-88fe-ac94f403929e" value="X Abstand des
 ersten verletzten Spots durch Objekt 1 in mm"/>
 <Text id="TI_31e8209a-b8a9-4f7c-b0ec-8f982c32e331" value="Y Abstand
 erster Spot Objekt 1"/>
 <Text id="TI_416e1801-c0c2-4994-8603-8a117dd5ed67" value="Y Abstand des
 ersten verletzten Spots durch Objekt 1 in mm"/>
 <Text id="TI_07227add-b5cf-4d68-9a57-3031e42b1cf8" value="reserviert"/>
 <Text id="TI_5d477964-c329-495d-aac5-5896764176c9" value="reserviert"/>
 <Text id="TI_694e8fd6-9084-416c-ab07-92b3671f1a89" value="X Abstand
 letzter Spot Objekt 1"/>
 <Text id="TI_ea6d65d1-4ba1-440a-968d-69d3755f84c7" value="X Abstand des
 letzten verletzten Spots durch Objekt 1 in mm"/>
 <Text id="TI_67c8ca7c-d1c8-435e-9fdf-4f966a33ff61" value="Y Abstand
 letzter Spot Objekt 1"/>
 <Text id="TI_52b39a43-dd07-4886-b58b-947e56792e9a" value="Y Abstand des
 letzten verletzten Spots durch Objekt 1 in mm"/>
 <Text id="TI_e9298ee2-13aa-4973-8e2e-0afe9b3ae4ef" value="reserviert"/>
 <Text id="TI_3c41f7dd-1da3-4f75-9dfc-14a050844b36" value="reserviert"/>
 <Text id="TI_e56664e6-f56e-4793-8053-d07ac4acd0ac" value="X Abstand
 erster Spot Objekt 2"/>
 <Text id="TI_50e9c9be-91ce-409d-90da-df0074232a3a" value="X Abstand des
 ersten verletzten Spots durch Objekt 2 in mm"/>
 <Text id="TI_6cc22743-210f-4d1f-a0af-d4d30a32300a" value="Y Abstand
 erster Spot Objekt 2"/>
 <Text id="TI_6e798263-e8f5-4065-87bc-5f0e53983a82" value="Y Abstand des
 ersten verletzten Spots durch Objekt 2 in mm"/>
 <Text id="TI_2d58a87f-d554-4bb5-ace6-c1bc19be5c0a" value="reserviert"/>
 <Text id="TI_a74a2cdc-2c89-43fe-9172-e21817a5408f" value="reserviert"/>
 <Text id="TI_8a461124-ee45-4b15-995d-16b08edf3c1f" value="X Abstand
 letzter Spot Objekt 2"/>
 <Text id="TI_5065877e-2d85-4a3a-a68d-f6893726aa65" value="X Abstand des
 letzten verletzten Spots durch Objekt 2 in mm"/>
 <Text id="TI_9a0b9d0b-856c-425e-80b9-2ed833b6873a" value="Y Abstand
 letzter Spot Objekt 2"/>
 <Text id="TI_abba0c5f-917e-45a1-825f-83af4f4c998c" value="Y Abstand des
 letzten verletzten Spots durch Objekt 2 in mm"/>
 <Text id="TI_e00b08d0-0e8c-4d32-ae8c-68de53224bbd" value="reserviert"/>
 <Text id="TI_75a31ffc-0077-48cc-adb4-e2ed10fdbfc8" value="reserviert"/>
 <Text id="TI_b1d64e9f-c233-4f35-a8a5-9a1881598485" value="X Abstand
 erster Spot Objekt 3"/>
 <Text id="TI_ce88372d-494b-4c50-b688-5d8d657c699e" value="X Abstand des
 ersten verletzten Spots durch Objekt 3 in mm"/>
 <Text id="TI_d2bbb9c0-c049-4861-a5b5-c0471d81d738" value="Y Abstand
 erster Spot Objekt 3"/>
 <Text id="TI_3319ba4d-74a8-4ef9-b0bd-17ad45ef5f58" value="Y Abstand des
 ersten verletzten Spots durch Objekt 3 in mm"/>
 <Text id="TI_360dff09-0414-4896-9db6-4817b19715c7" value="reserviert"/>
 <Text id="TI_925e703b-4c88-431e-9170-dc0157893105" value="reserviert"/>
 <Text id="TI_b8978ce7-4bba-4a78-bb66-da8f5f2a2112" value="X Abstand
 letzter Spot Objekt 3"/>
 <Text id="TI_35bd8902-2117-47f4-968f-1fd743200292" value="X Abstand des
 letzten verletzten Spots durch Objekt 3 in mm"/>
 <Text id="TI 9cc12da7-3193-4d5a-a5ff-78cc131649f9" value="Y Abstand
 letzter Spot Objekt 3"/>
 <Text id="TI_58036651-2aeb-4e1b-a1cc-dd6cc51b0e36" value="Y Abstand des
 letzten verletzten Spots durch Objekt 3 in mm"/>
 <Text id="TI_9d6aea03-c17d-4433-9259-fe8095b3e89f" value="reserviert"/>
 <Text id="TI_60a2b011-7b15-4829-be40-def16590fd1a" value="reserviert"/>
 <Text id="TI_1fc180d1-973e-41c1-aa5c-
 24584c6f4e5b" value="Auswertefallergebnis"/>
 <Text id="TI_2578056f-b823-4093-b7aa-af4441949738" value="Aktueller
 Zeitstempel in ms"/>
 <Text id="TI_7fe74394-80cc-4a56-b367-484ac3065a1d" value="Gesamtanzahl
 der Feldverletzungen"/>
 <Text id="TI_0032f84f-d6c2-4031-97c6-734d840693fa" value="Dauer der
 Feldverletzung in ms"/>
 <Text id="TI_50037d27-ca16-4d87-844f-14bf18e638cc" value="Zähler Ausgang
 1"/>
 <Text id="TI_9053119d-8592-4447-843d-29bff5cb29f1" value="Zähler Ausgang
 1 zurücksetzen "/>
 <Text id="TI_03ed47ac-3739-476b-a438-
 162639560b94" value="Applikationsbeschreibung"/>
 <Text id="TI_81739ffb-b326-4d67-b967-
 37372483a6e5" value="Auswertefallergebnis zurücksetzen"/>
 <Text id="TI_2b3de715-8ca0-4362-b8f4-
 d01f8380cb00" value="Feldstatusergebnis zurücksetzen"/>
 <Text id="TI_f1874433-cb4a-4bed-9fec-cd46c8f6aad3" value="Einstellungen
 permanent speichern"/>
 <Text id="TI_81989cd9-6fbb-4c2b-9d88-a425633d485a" value="Einstellungen
 permanent speichern"/>
 <Text id="TI_236ce4a8-e215-4346-886e-34f00500807a" value="Smart Sensor
 Profile Process data description"/>
 <Text id="TI_533f705f-c4cf-435d-9270-599d31b759c1" value="Unit in 1/10
 h"/>
 <Text id="TI_b3ed74d3-30d3-4f5a-bf9f-0305cb65562f" value="Erweitert"/>
 <Text id="TI_97d0c217-1e41-4458-a3eb-f994813d24d1" value="IO-Link
 Konfiguration"/>
 <Text id="TI_a2fc4fc4-ac79-403d-8358-d7e33019649a" value="Dauer der
 Feldverletzung"/>
 <Text id="TI_fe238de5-a457-4f20-a862-e7e3b838f767" value="Anzahl der
 Feldverletzungen"/>
 <Text id="TI_1266dac8-3652-41c5-be20-b72d3e481282" value="Aktueller
 Zeitstempel"/>
 <Text id="TI_816d91f9-da4a-45ee-a77d-7607fab10671" value="Fallergebnis"/>
 <Text id="TI_ea0b0378-9ed0-4d6d-8e6d-
 96e23ce49116" value="Auswertefallergenis"/>
 <Text id="TI_37d51f4c-bc87-433d-a918-
 fa9f25badd47" value="Auswertefallparameter"/>
 <Text id="TI_e90b8874-d9cc-4efa-9630-e69a9a18ba60" value="Feldpunkte"/>
 <Text id="TI_3b79c259-9614-418b-bcea-d4f36cca2089" value="Beschreibung"/>
 <Text id="TI_46c4f17d-781e-452e-ae14-a2aa13e0dd55" value="Permanent
 speichern"/>
 <Text id="TI_0330c948-77da-423d-9675-4976300239d6" value="Auf
 Werkseinstellungen zurücksetzen"/>
 <Text id="TI_334a2efa-2a9a-4569-b2f4-f187f6d7a4d3" value="Auf
 Werkseinstellungen zurücksetzen"/>
 <Text id="TI_de4c6fa5-f68b-4c93-a0bf-00cfa1064050" value="Auf
 Werkseinstellungen zurücksetzen"/>
 <Text id="TI_3236ae78-0595-43da-8a04-7c1c9e6a7008" value="Hash-Wert des
 Software-Pakets"/>
 <Text id="TI_434d9f97-4297-4054-a70c-f1b41e5a88ad" value="Build-Datum des
 Software-Pakets"/>
 <Text id="TI_cbc08792-151c-478c-acbe-3dd5ccdfb52a" value=""/>
 <Text id="TI_487ca00e-9322-4b8d-8e26-53a3693cdb42" value=""/>
 <Text id="TI_09287ae8-9749-41af-82c8-616885654d41" value="nicht
 relevant"/>
 <Text id="TI_90bf6454-322b-464b-8b2a-38982aaf11fb" value="Feld frei"/>
 <Text id="TI_93bfa76b-9157-4c22-9241-6f0b1ce96b32" value="Feld
 verletzt"/>
 <Text id="TI_e02f8bf1-423f-4329-a3b2-aa1227ae40f0" value="Feld verletzt,
 aber die Ansprechzeit ist noch nicht abgelaufen"/>
 <Text id="TI_c0a3df1a-c427-43a9-9bf2-
 85916585e888" value="Einschaltzähler"/>
 <Text id="TI_60c728e3-2f75-4c87-adfc-fe92108007c7" value="nicht
 relevant"/>
 <Text id="TI_2e41c831-d554-4492-9075-9bc9194de4d2" value="Feld frei"/>
 <Text id="TI_7524efc5-cc3e-4338-a0b0-bc626d4b05c0" value="Feld
 verletzt"/>
 <Text id="TI_333c3b36-05e8-414d-b888-ea7bed474b44" value="Feld verletzt,
 aber die Ansprechzeit ist noch nicht abgelaufen"/>
 </Language>
 </ExternalTextCollection>
 <Stamp crc="3824448820">
 <Checker name="IODD-Checker V1.1.1" version="V1.1.1.0"/>
 </Stamp>
 </IODevice>
```

### Anhang 3: Rohdaten eines Beispiel-Chats

### ***USER***

Create a parameterization UI with all temperature-related settings

### ***LLM***

I'll create a UI that shows current temperature values and allows configuring temperature alert limits.

### <thinking>

### Variables needed:

1. V_Temperature_CurrentMinMax (index 4352):
   - Current temperature
   - Max/min temperatures (all time and since reset)
   - All read-only values
   - All values are 8-bit integers
2. V_Temperature_AlertLimits (index 4354):
   - Temperature maximum and minimum alert thresholds
   - Both read-write
   - 8-bit integers
3. V_Temperature_AlertFlags (index 4355):
   - Shows if temperature is above max or below min threshold
   - Read-only
   - Boolean flags
4. V_TemperatureResetmaximumminimumsincereset (index 4353):
   - Command to reset min/max values
   - Write-only
   - Single value 0/1

### </thinking>

```
 <name>Temperature Overview and Settings</name>
 <artifact>
 <!DOCTYPE html>
 <html>
 <head>
    <title>Temperature Settings</title>
    <link rel="stylesheet" href="components/synergy.css" />
    <script type="module" src="components/synergy.js"></script>
    <style>
         body {
              font-family: Arial, sans-serif;
              margin: 20px;
              background-color: #f5f5f5;
         }
         .container {
              max-width: 800px;
              margin: 0 auto;
         }
         .card {
              background: white;
              padding: 20px;
              border-radius: 8px;
              margin-bottom: 20px;
              box-shadow: 0 2px 4px rgba(0,0,0,0.1);
         }
         .grid {
              display: grid;
              grid-template-columns: repeat(2, 1fr);
              gap: 20px;
              margin-bottom: 20px;
         }
         .value-display {
              display: flex;
              justify-content: space-between;
              margin-bottom: 10px;
              padding: 8px;
              background: #f8f8f8;
              border-radius: 4px;
         }
         .alert {
              padding: 10px;
              border-radius: 4px;
              margin-bottom: 10px;
         }
         .alert.active {
              background-color: #ffe0e0;
              color: #d32f2f;
         }
         h2 {
              color: #333;
              margin-bottom: 20px;
         }
         .controls {{
              display: flex;
              gap: 10px;
              align-items: center;
         }
    </style>
    </head>
    <body>
    <div class="container">
         <div class="card">
              <h2>Current Temperature Status</h2>
              <div id="alertsContainer">
                   <div id="maxAlert" class="alert">Maximum Temperature
                   Alert: Not Active</div>
                   <div id="minAlert" class="alert">Minimum Temperature
                   Alert: Not Active</div>
              </div>
              <div class="grid">
                   <div>
                        <div class="value-display">
                             <span>Current Temperature:</span>
                             <span id="currentTemp">--</span>
                        </div>
                        <div class="value-display">
                             <span>All-time Maximum:</span>
                             <span id="maxTempAll">--</span>
                        </div>
                        <div class="value-display">
                             <span>All-time Minimum:</span>
                             <span id="minTempAll">--</span>
                        </div>
                   </div>
                   <div>
                        <div class="value-display">
                             <span>Maximum Since Reset:</span>
                             <span id="maxTempReset">--</span>
                        </div>
                        <div class="value-display">
                             <span>Minimum Since Reset:</span>
                             <span id="minTempReset">--</span>
                        </div>
                        <syn-button variant="primary" id="resetButton">Reset
                        Min/Max Values</syn-button>
                   </div>
              </div>
         </div>
         <div class="card">
              <h2>Temperature Alert Settings</h2>
              <div class="controls">
                   <syn-input label="Maximum Temperature Alert"
                               type="number"
                               id="maxTempAlert"
                               help-text="Temperature above which an alert is
                               triggered (°C)"></syn-input>
                   <syn-input label="Minimum Temperature Alert"
                               type="number"
                               id="minTempAlert"
                               help-text="Temperature below which an alert is
                               triggered (°C)"></syn-input>
                   <syn-button variant="primary" id="saveAlertSettings">Save
                   Alert Settings</syn-button>
              </div>
         </div>
    </div>
    <script>
         const baseUrl = '/device';
         let updateInterval;
         async function fetchTemperatureData() {
              try {
                   const response = await
                   fetch('${baseUrl}/parameters/4352/value?format=iodd');
                   const data = await response.json();
                   document.getElementById('currentTemp').textContent =
                   '${data.Current_temperature.value}°C';
                   document.getElementById('maxTempAll').textContent =
                   '${data.Max_temperature_all_time.value}°C';
                   document.getElementById('minTempAll').textContent =
                   '${data.Min_temperature_all_time.value}°C';
                   document.getElementById('maxTempReset').textContent =
                   '${data.Max_temperature_since_last_reset.value}°C';
                   document.getElementById('minTempReset').textContent =
                   '${data.Min_temperature_since_last_reset.value}°C';
              } catch (error) {
                   console.error('Error fetching temperature data:', error);
              }
         }
         async function fetchAlertSettings() {
              try {
                   const response = await
                   fetch('${baseUrl}/parameters/4354/value?format=iodd');
                   const data = await response.json();
                   document.getElementById('maxTempAlert').value =
                   data.Temperature_maximum.value;
                   document.getElementById('minTempAlert').value =
                   data.Temperature_minimum.value;
              } catch (error) {
                   console.error('Error fetching alert settings:', error);
              }
         }
         async function fetchAlertStatus() {
              try {
                   const response = await
                   fetch('${baseUrl}/parameters/4355/value?format=iodd');
                   const data = await response.json();
                   const maxAlert = document.getElementById('maxAlert');
                   const minAlert = document.getElementById('minAlert');
                   maxAlert.className = data.Temperature_maximum.value ?
                   'alert active' : 'alert';
                   minAlert.className = data.Temperature_minimum.value ?
                   'alert active' : 'alert';
                   maxAlert.textContent = 'Maximum Temperature Alert:
                   ${data.Temperature maximum.value ? 'Active' : 'Not Active'}';
                   minAlert.textContent = 'Minimum Temperature Alert:
                   ${data.Temperature_minimum.value ? 'Active' : 'Not Active'}';
              } catch (error) {
                   console.error('Error fetching alert status:', error);
              }
         }
         async function saveAlertSettings() {
              const maxTemp =
              parseInt(document.getElementById('maxTempAlert').value);
              const minTemp =
              parseInt(document.getElementById('minTempAlert').value);
              try {
                   await fetch('${baseUrl}/parameters/4354/value', {
                        method: 'POST',
                        headers: {
                             'Content-Type': 'application/json',
                        },
                        body: JSON.stringify({
                             "Temperature_maximum": {"value": maxTemp},
                             "Temperature_minimum": {"value": minTemp}
                        })
                   });
                   // Show success feedback
                   alert('Alert settings saved successfully');
              } catch (error) {
                   console.error('Error saving alert settings:', error);
                   alert('Error saving alert settings');
              }
         }
         async function resetMinMax() {
              try {
                   await fetch('${baseUrl}/parameters/4353/value', {
                        method: 'POST',
                        headers: {
                             'Content-Type': 'application/json',
                        },
                        body: JSON.stringify({
                             "value": 1
                        })
                   });
                   // Refresh the temperature data immediately
                   await fetchTemperatureData();
              } catch (error) {
                   console.error('Error resetting min/max values:', error);
                   alert('Error resetting min/max values');
              }
         }
         // Event listeners
         document.getElementById('saveAlertSettings').addEventListener('click',
         saveAlertSettings);
         document.getElementById('resetButton').addEventListener('click',
         resetMinMax);
         // Initial data fetch
         fetchTemperatureData();
         fetchAlertSettings();
         fetchAlertStatus();
         // Set up periodic updates
         updateInterval = setInterval(() => {
              fetchTemperatureData();
              fetchAlertStatus();
         }, 1000);
         // Cleanup on page unload
         window.addEventListener('unload', () => {
              if (updateInterval) {
                   clearInterval(updateInterval);
              }
         });
    </script>
    </body>
    </html>
    </artifact>
    
```

Suggestions for improvement:
1. We could add a temperature trend chart using ApexCharts to visualize temperature changes over time
2. We could add validation for the alert limits to ensure minimum is always less than maximum
3. We could add a confirmation dialog before resetting min/max values
4. We could add temperature unit selection (though the device seems to only work with Celsius)
5. We could add visual indicators (like arrows) to show if temperature is trending up or down

***USER***
   add a dark theme toggle
***LLM***
   I'll add a dark theme toggle using Synergy's theming capabilities.

### <thinking>

No additional device variables needed - this is purely a UI enhancement. Will add:
- Theme toggle button in top right
- Dark theme styles for cards and value displays
- Persist theme selection in localStorage
- Use Synergy's built-in dark theme for components

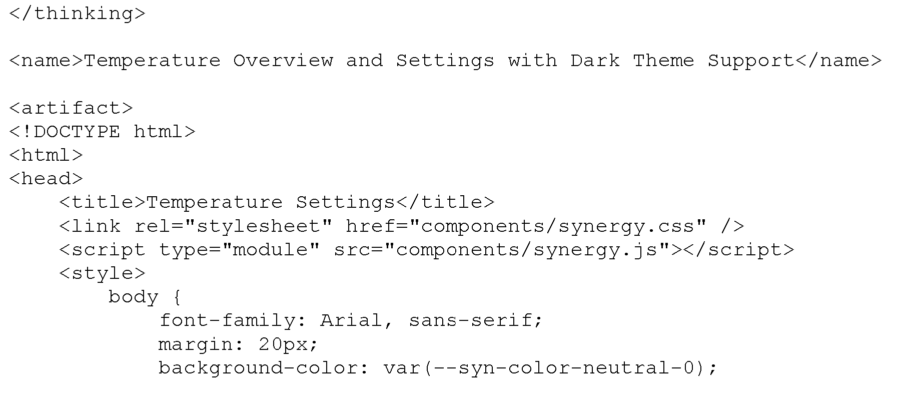

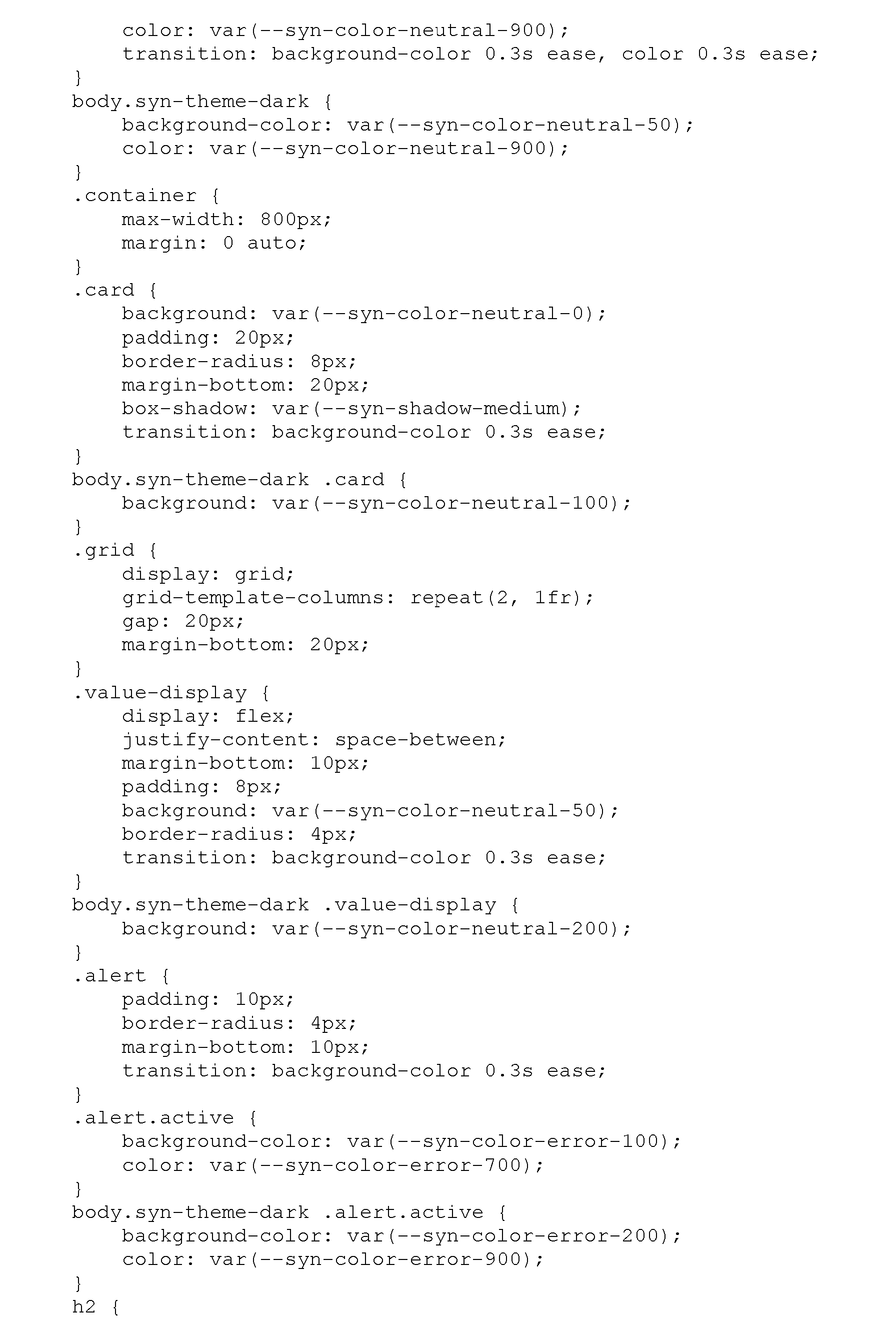

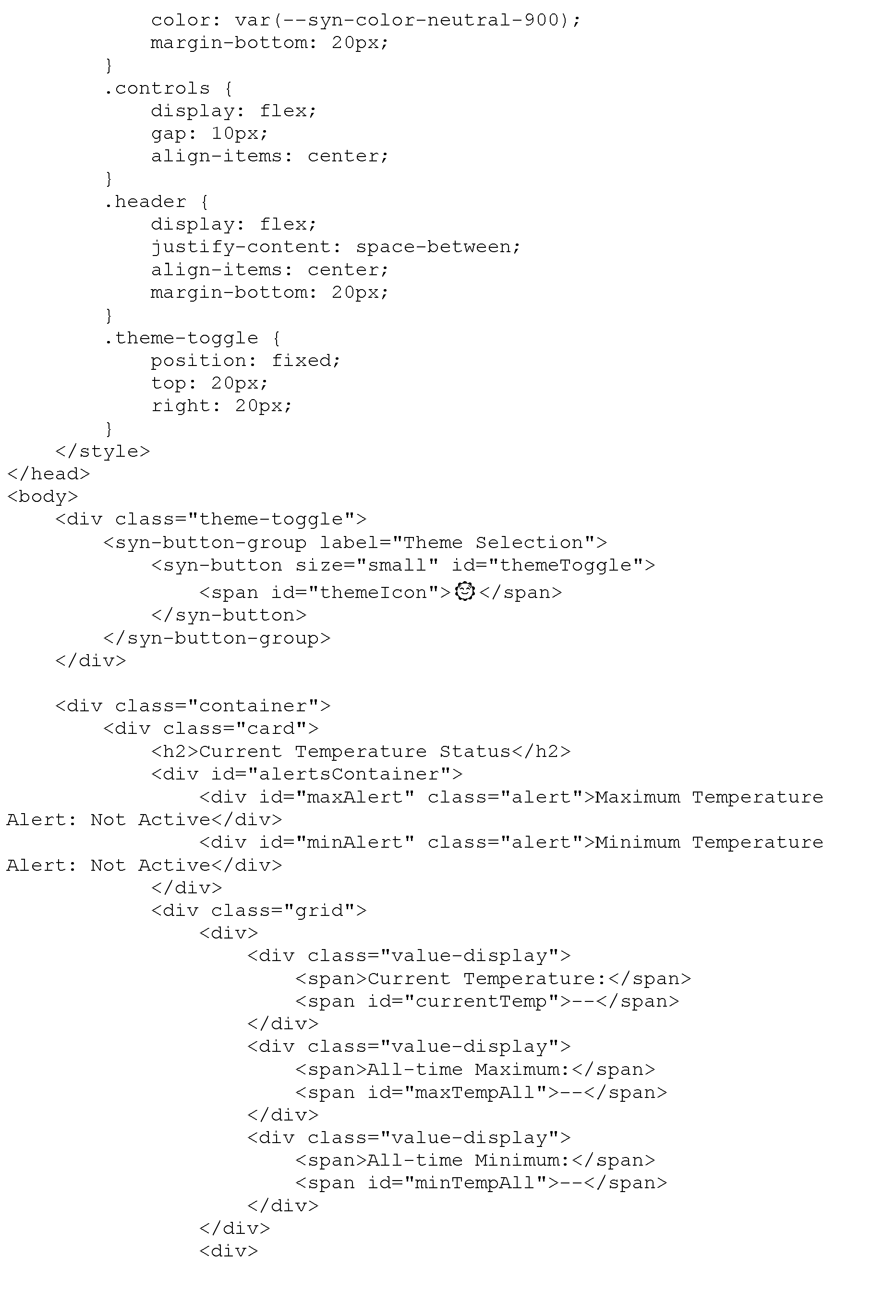

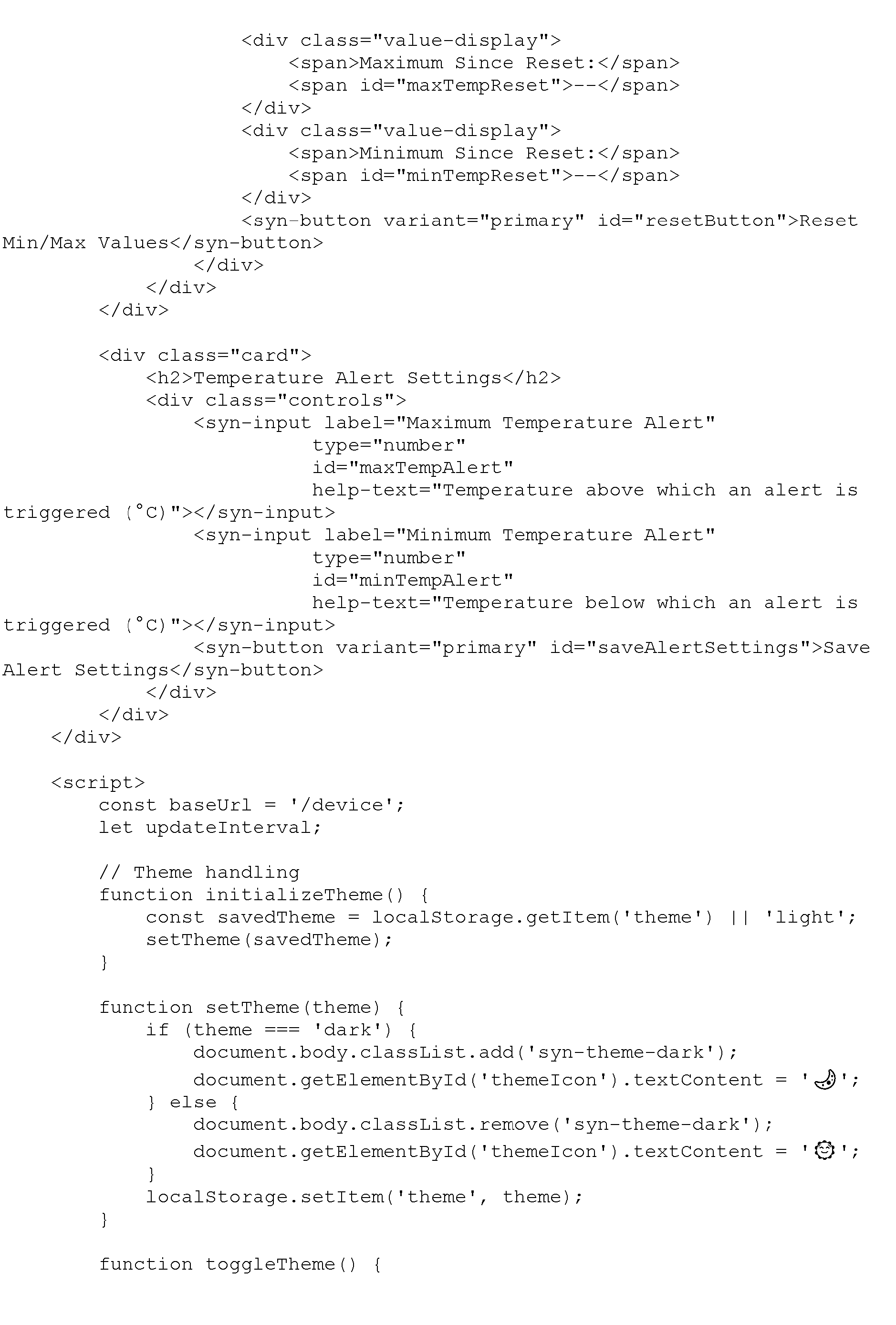

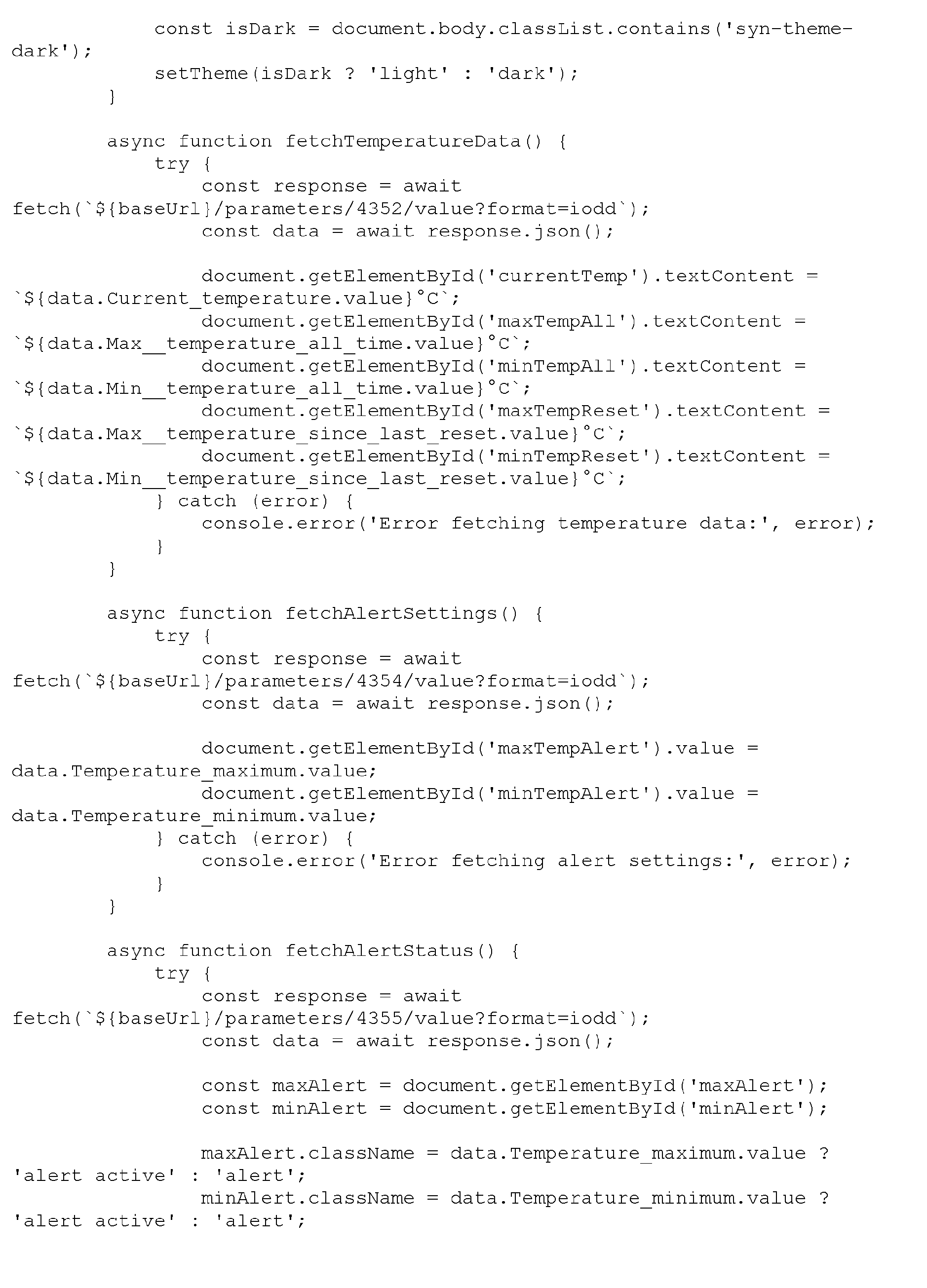

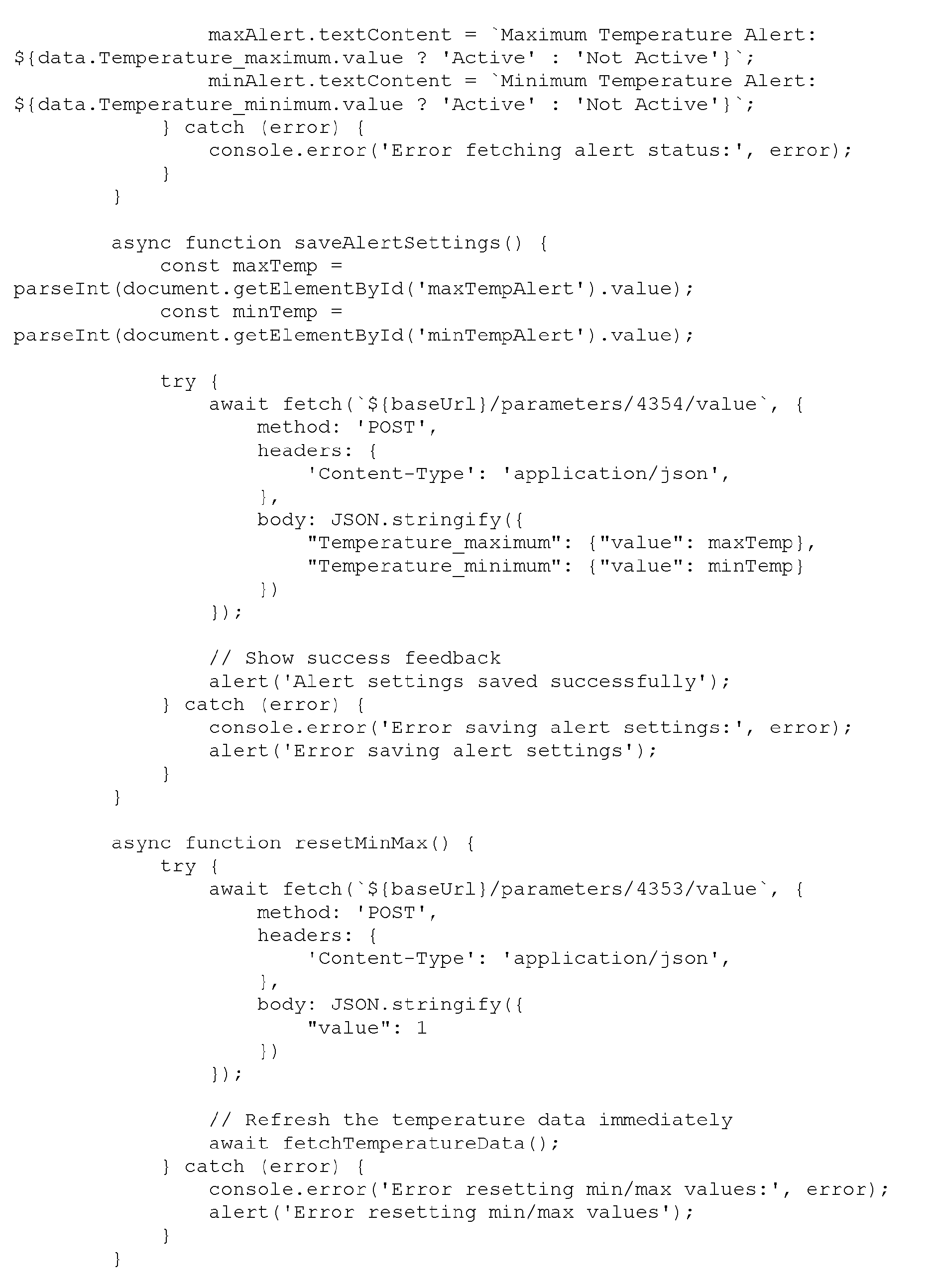

### // Event listeners

```
 document.getElementById('saveAlertSettings').addEventListener('click',
 saveAlertSettings);
         document.getElementById('resetButton').addEventListener('click',
         resetMinMax);
         document.getElementById('themeToggle').addEventListener('click',
         toggleTheme);
         // Initialize theme
         initializeTheme();
         // Initial data fetch
         fetchTemperatureData();
         fetchAlertSettings();
         fetchAlertStatus();
         // Set up periodic updates
         updateInterval = setInterval(() => {
              fetchTemperatureData();
              fetchAlertStatus();
         }, 1000);
         // Cleanup on page unload
         window.addEventListener('unload', () => {
              if (updateInterval) {
                   clearInterval(updateInterval);
              }
         });
    </script>
    </body>
    </html>
    </artifact>
```

Suggestions for improvement:
1. We could add smooth transitions for theme changes on more elements
2. We could add a system theme detection and auto-switch option
3. We could add a tooltip to the theme toggle button explaining its function
4. We could add different color schemes for the temperature values (cool blues for low temps, warm reds for high temps)
5. Previous suggestions still apply (temperature trend chart, validation, confirmation dialog, etc.)

***USER***
   the dark mode isn't very dark :(
***LLM***

You're right! Let's make the dark theme properly dark with better contrast.

### <thinking>

No device variables needed - just updating the theme colors.

Main changes:
- Darker background for dark mode
- Higher contrast text colors
- Darker card backgrounds
- Adjusted alert colors for better visibility in dark mode
- Using more of Synergy's dark theme color variables

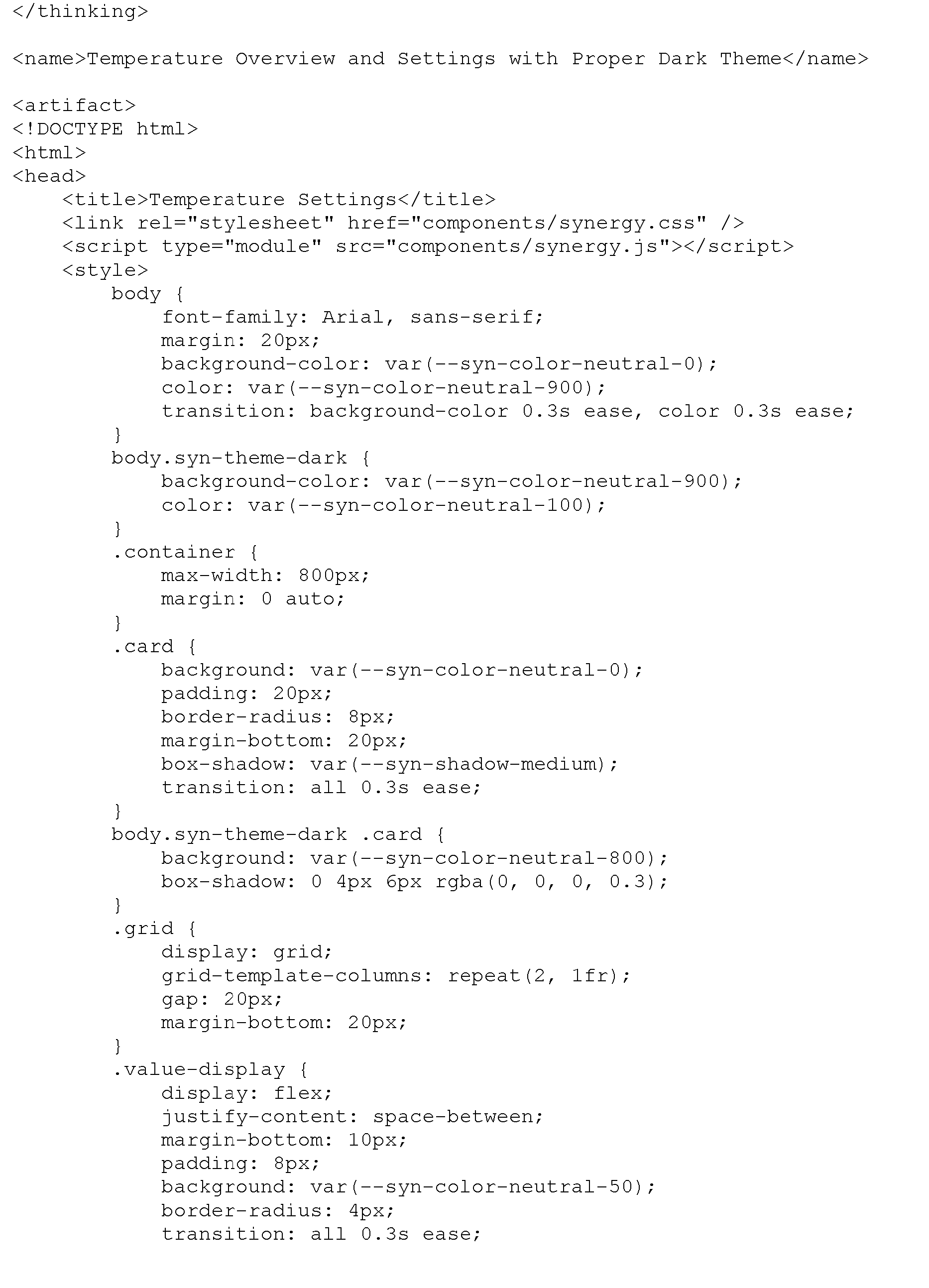

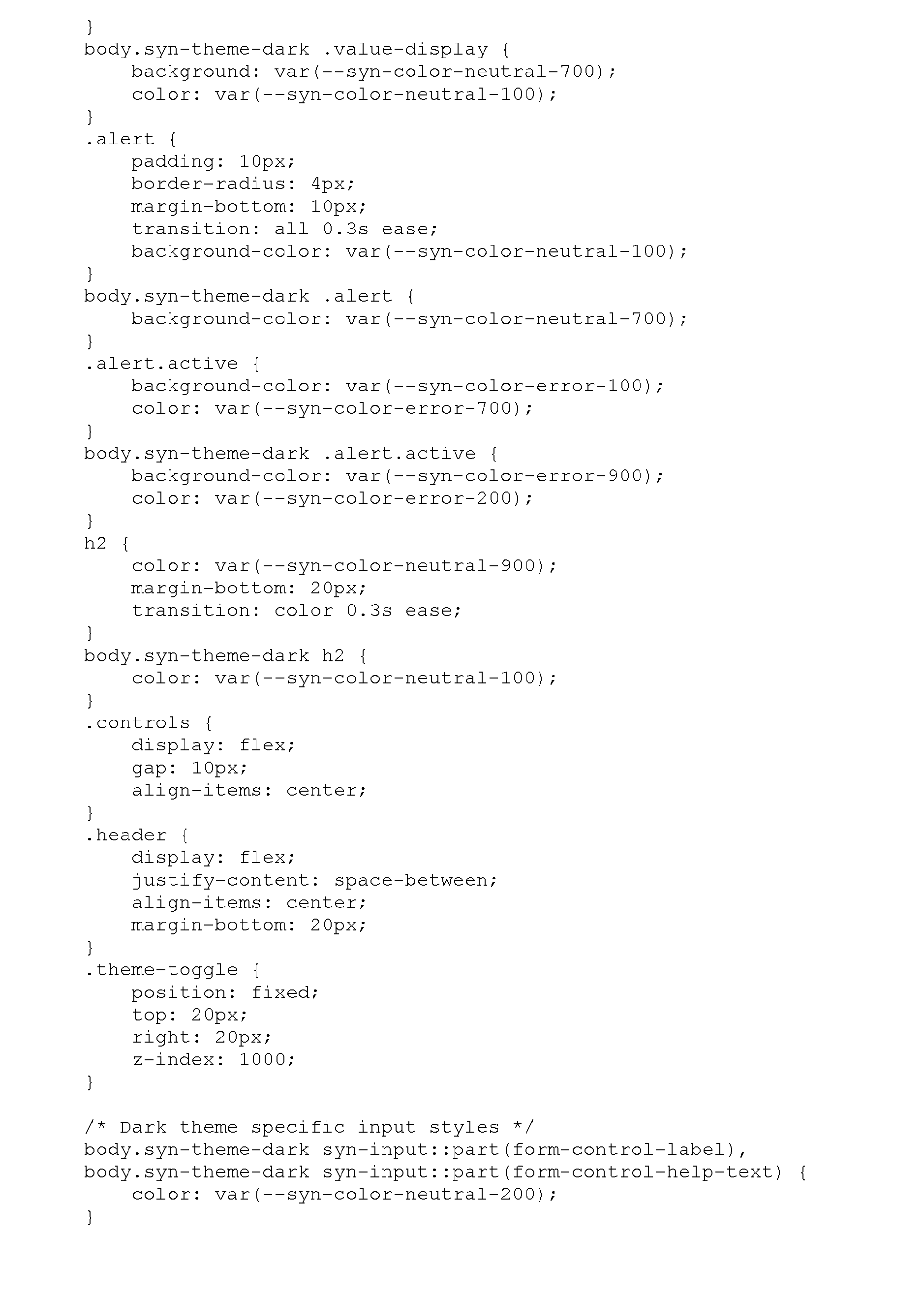

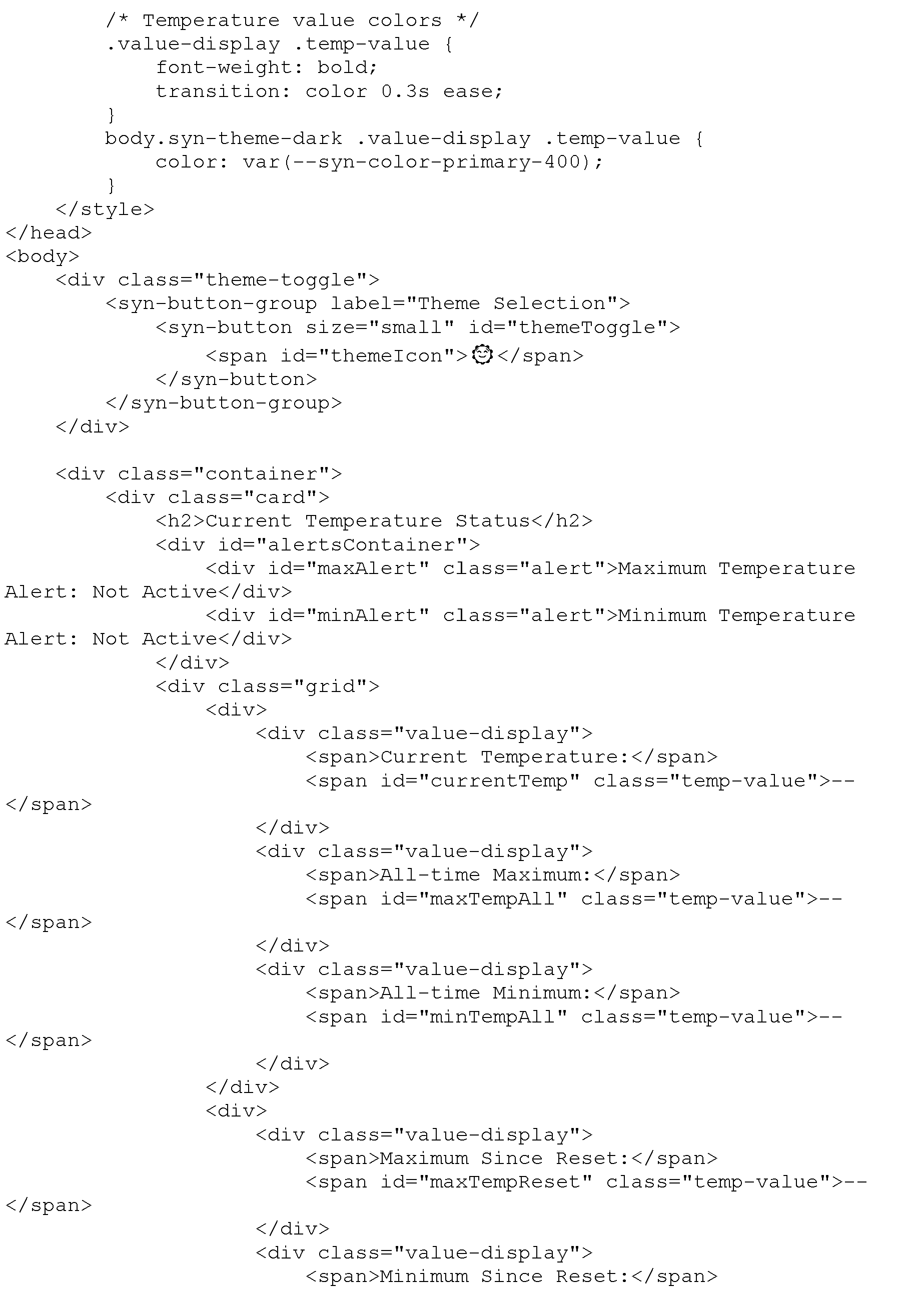

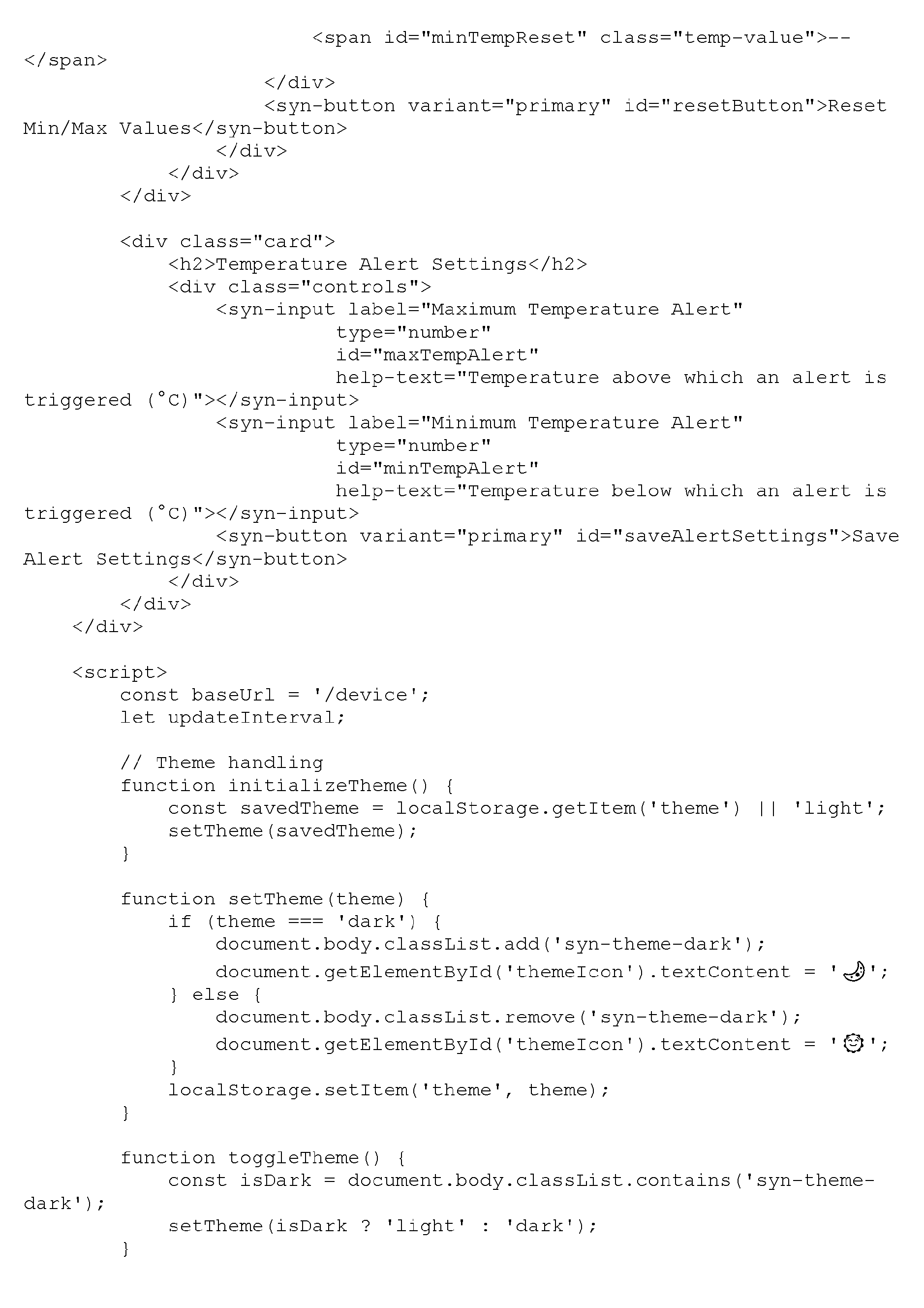

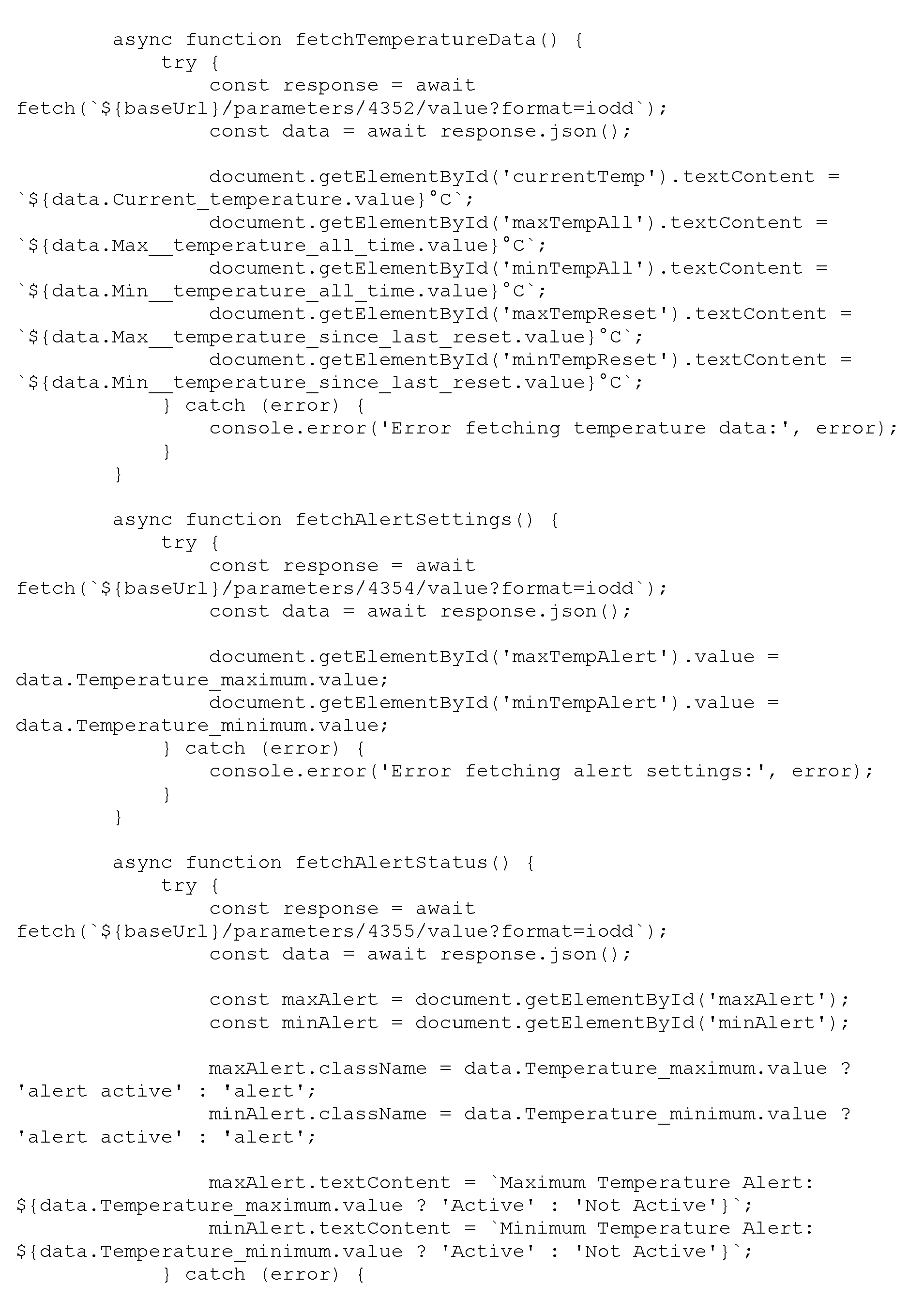

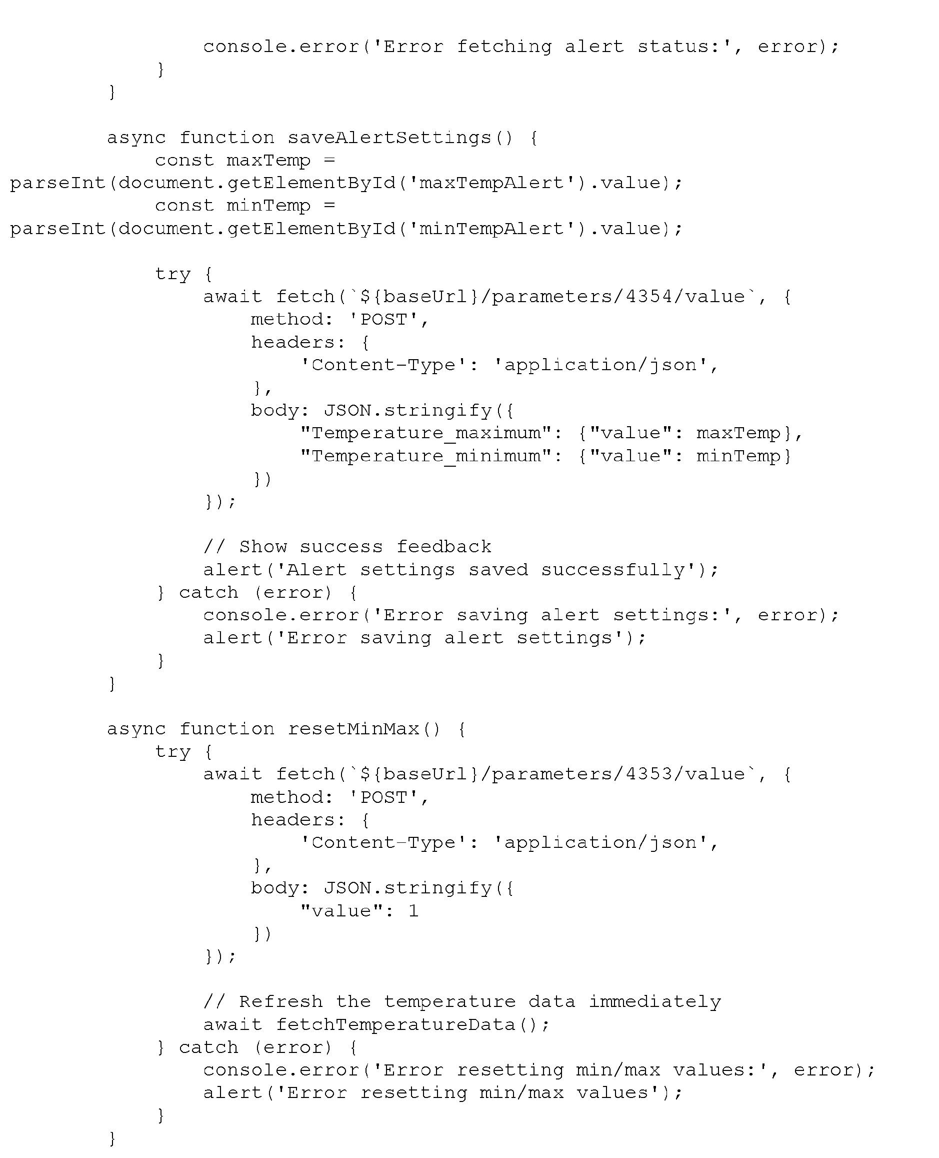

### // Event listeners

```
document.getElementById('saveAlertSettings').addEventListener('click',
 saveAlertSettings);
         document.getElementById('resetButton').addEventListener('click',
         resetMinMax);
         document.getElementById('themeToggle').addEventListener('click',
         toggleTheme);
         // Initialize theme
         initializeTheme();
         // Initial data fetch
         fetchTemperatureData();
         fetchAlertSettings();
         fetchAlertStatus();
         // Set up periodic updates
         updateInterval = setInterval(() => {
              fetchTemperatureData();
              fetchAlertStatus();
         }, 1000);
         // Cleanup on page unload
         window.addEventListener('unload', () => {
              if (updateInterval) {
                   clearInterval(updateInterval);
              }
         });
    </script>
    </body>
    </html>
    </artifact>
```

Changes made:
1. Much darker background color in dark mode (neutral-900)
2. Darker card backgrounds (neutral-800)
3. Better contrast for text elements using neutral-100
4. Darker value display backgrounds (neutral-700)
5. Adjusted alert colors for better visibility in dark mode
6. Added specific dark mode styles for Synergy input labels and help text
7. Added bold temperature values with primary-400 color in dark mode
8. Improved transitions for smoother theme switching
9. Enhanced shadow effects in dark mode

Previous suggestions still apply, and we could also:
1. Add a color temperature indicator (blue-to-red gradient) based on the current temperature
2. Add tooltips showing historical min/max values when hovering over current values
3. Add a visual temperature gauge/thermometer
4. Add keyboard shortcut for theme toggle (e.g., Ctrl+D)

### Anhang 4: Beispiel für User Prompt

I want a UI for the following:
1. visualize scan data (auto-update every 500ms)
   1.1. Add a button to toggle whether auto-update is happening
2. A toggle for "Activate Particle Filter"
3. I want to view/edit both fields
4. Make the field color orange when a field is infringed, green otherwise
5. Make parameters like blanking size etc editable
6. Option to save changes permanently
7. Provide feedback to the user when changes were made successfully
8. Make the code easy to follow/debug in case any changes need to be made

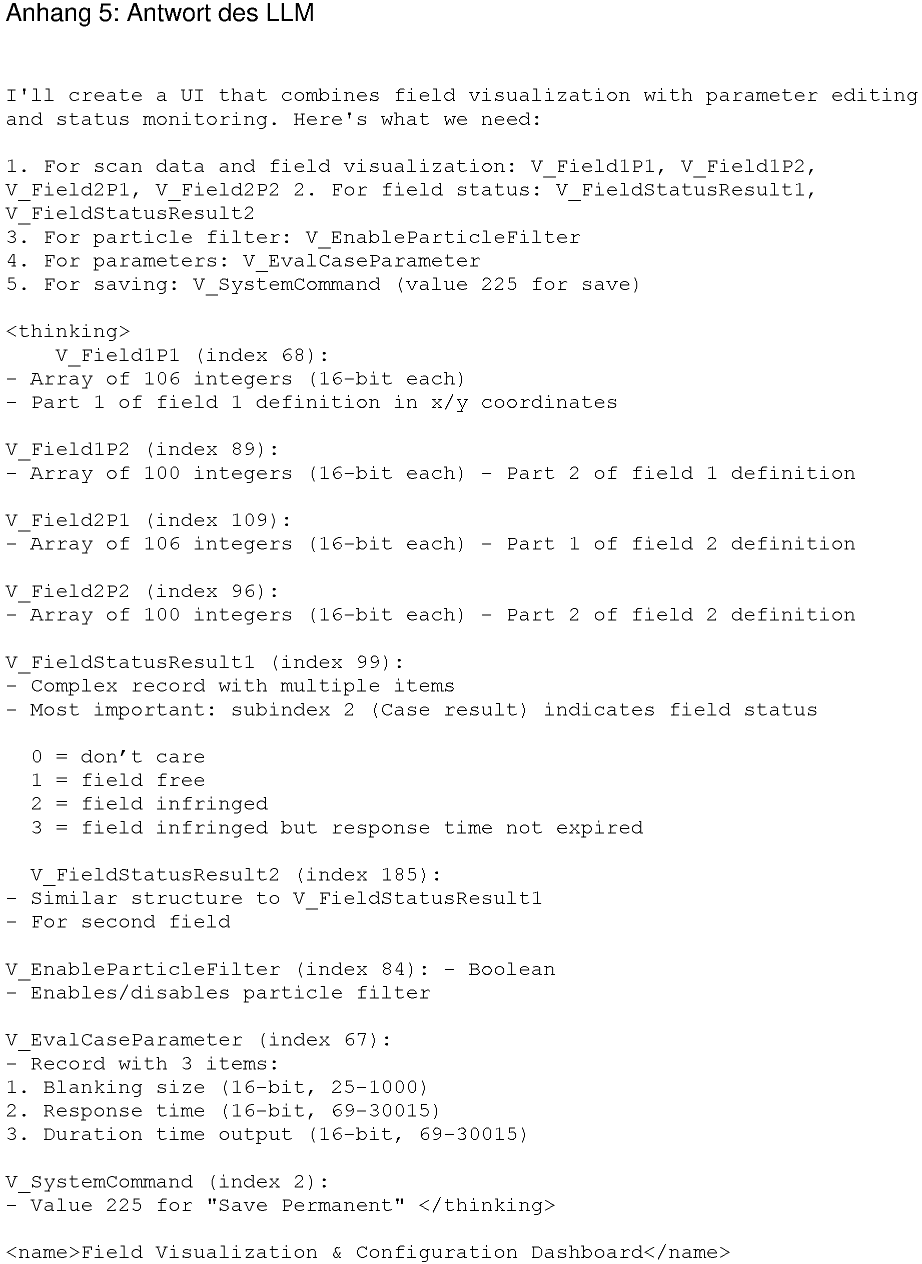

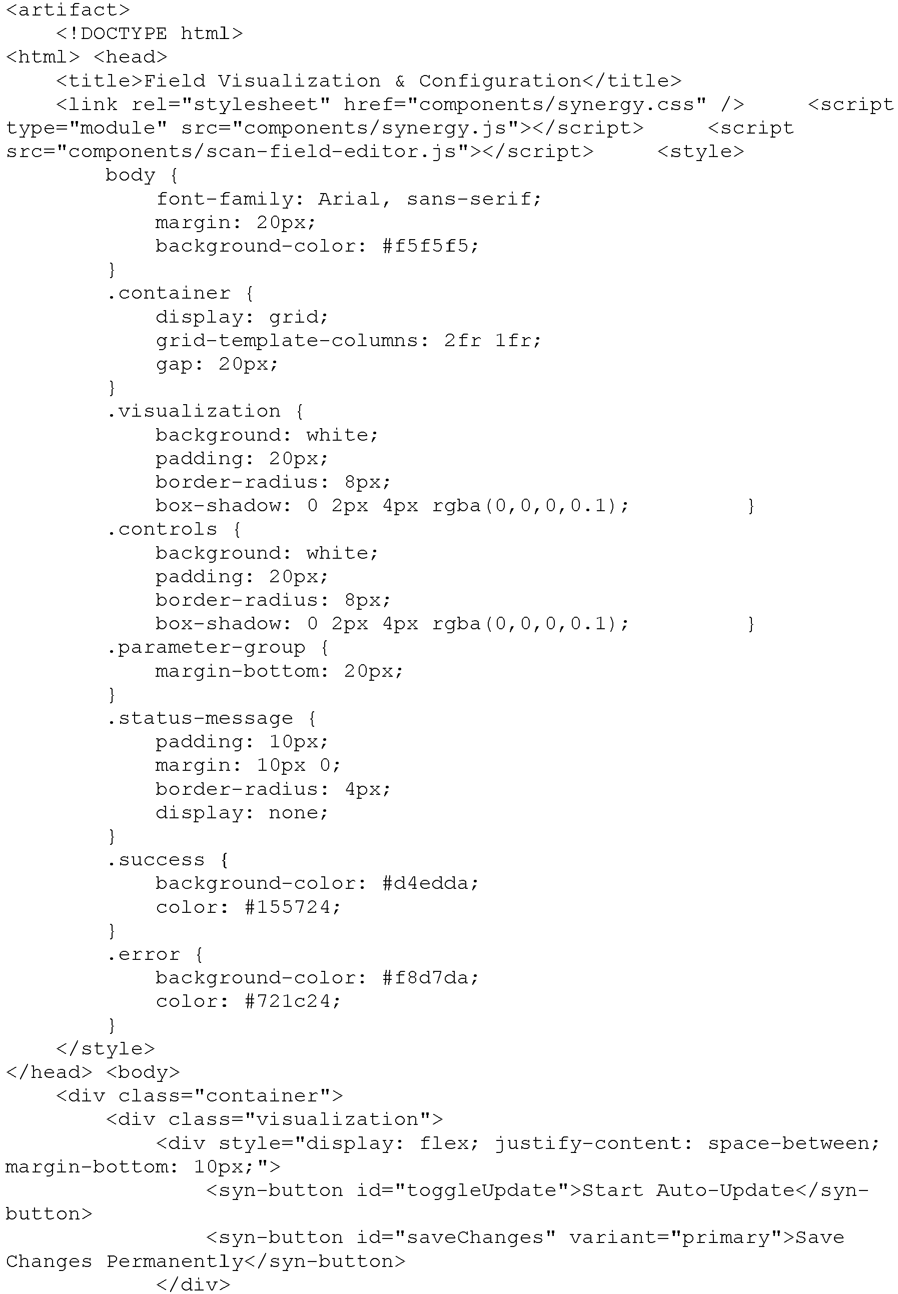

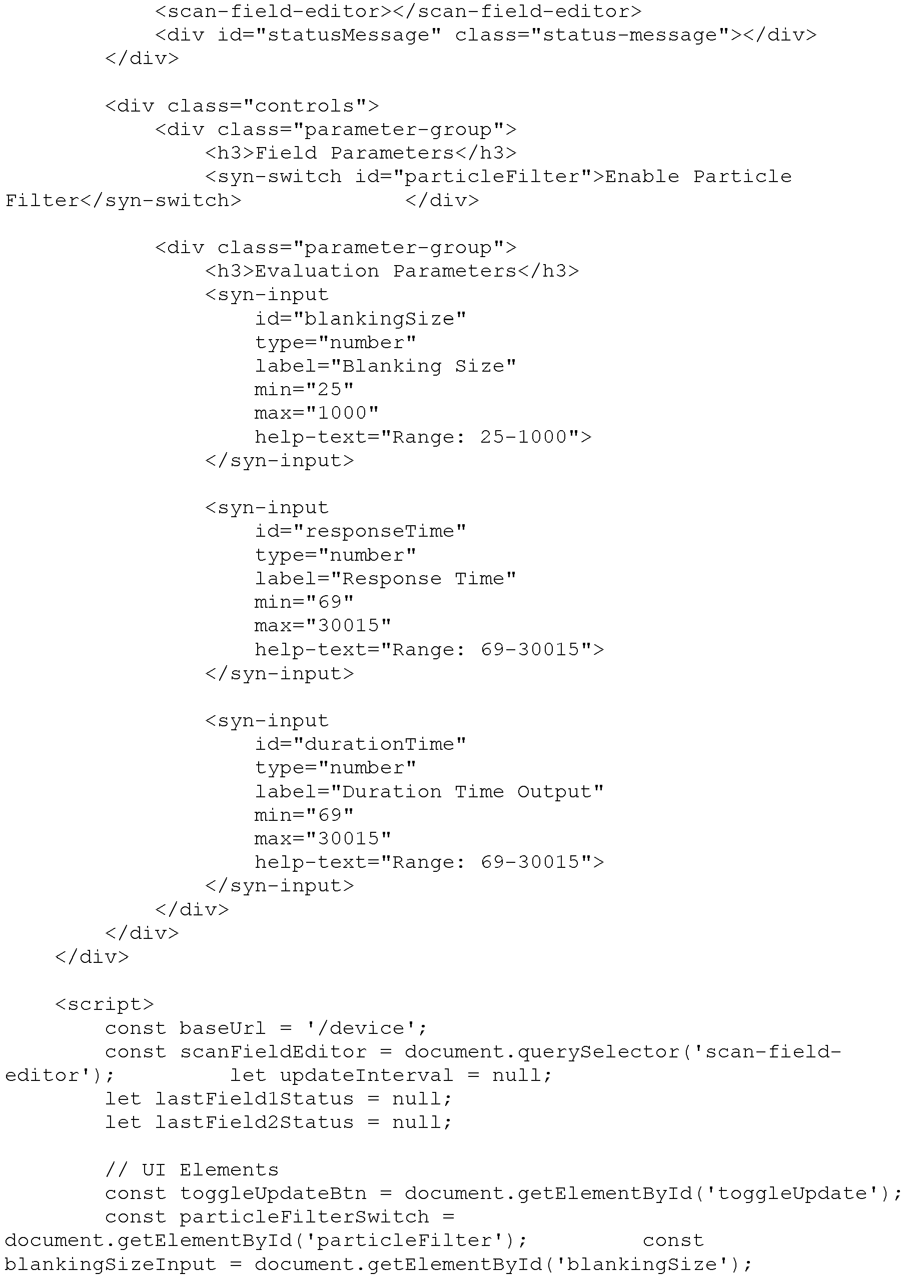

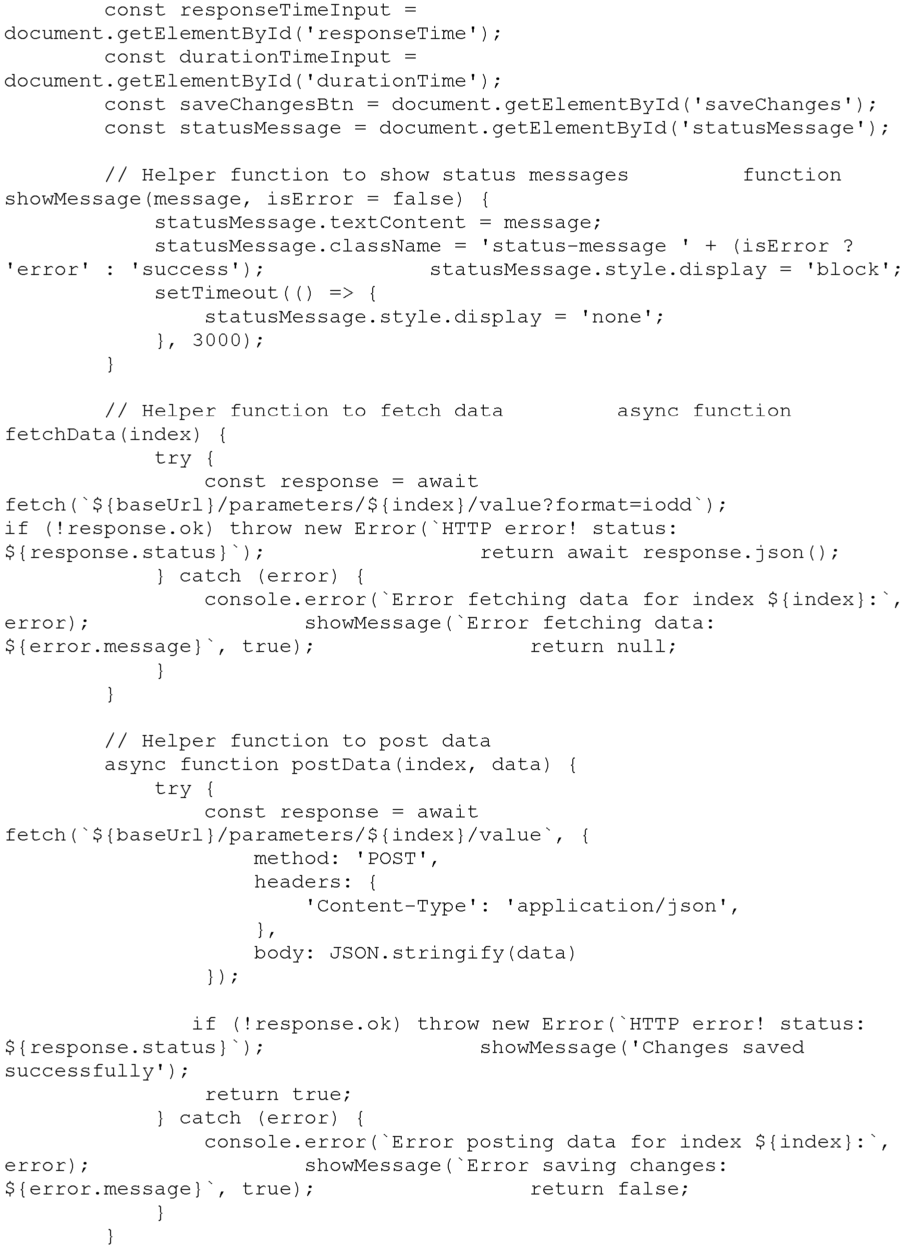

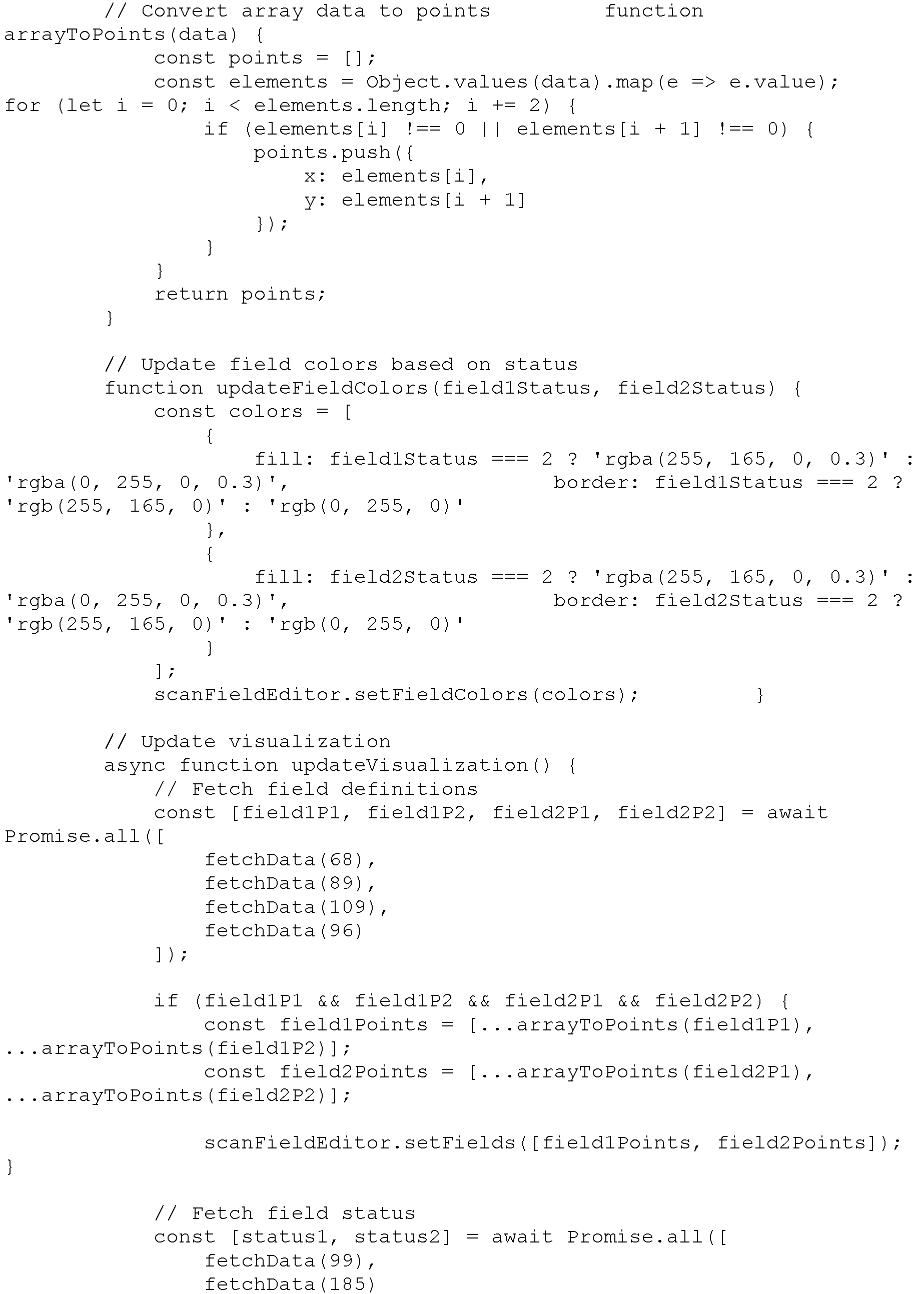

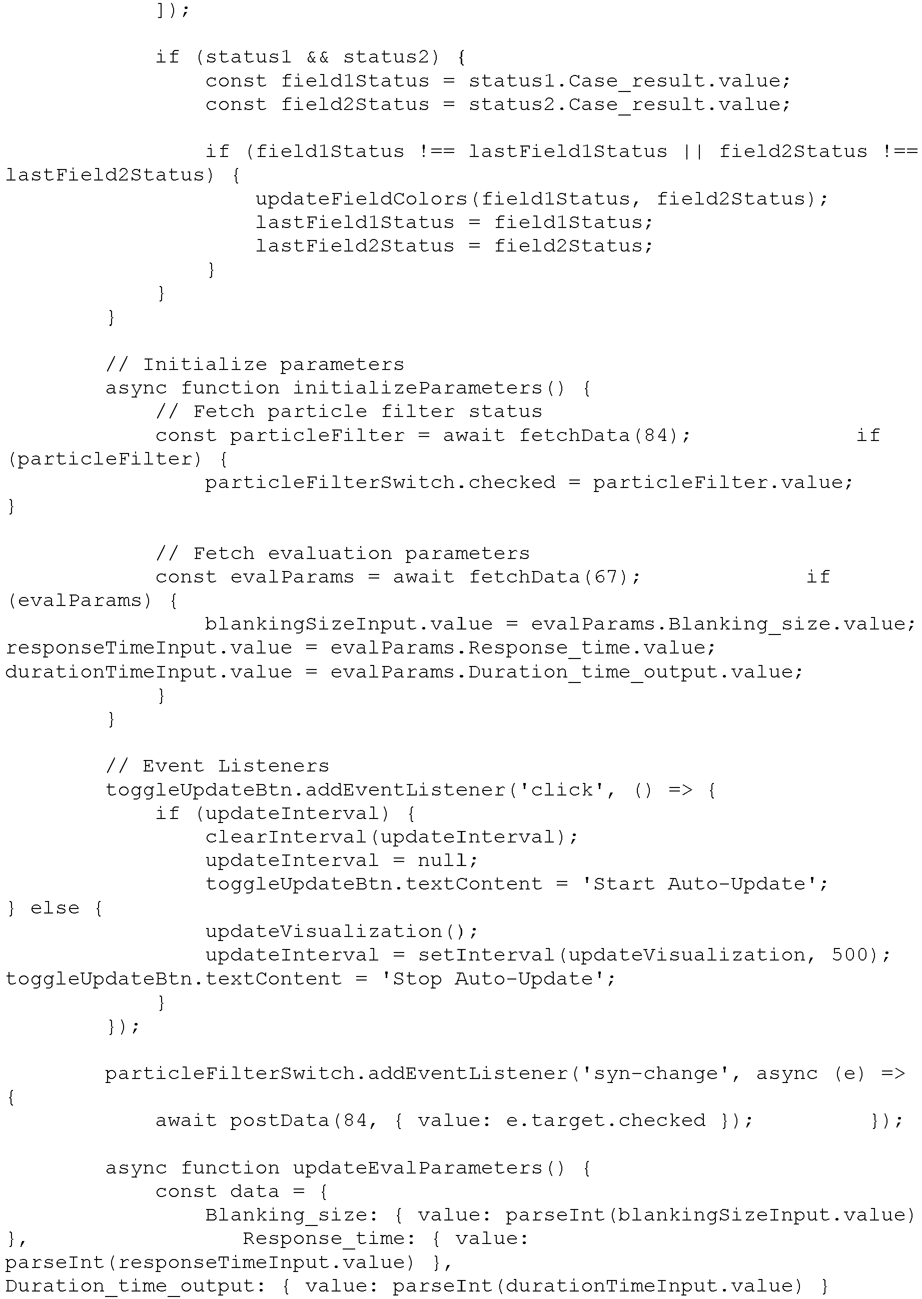

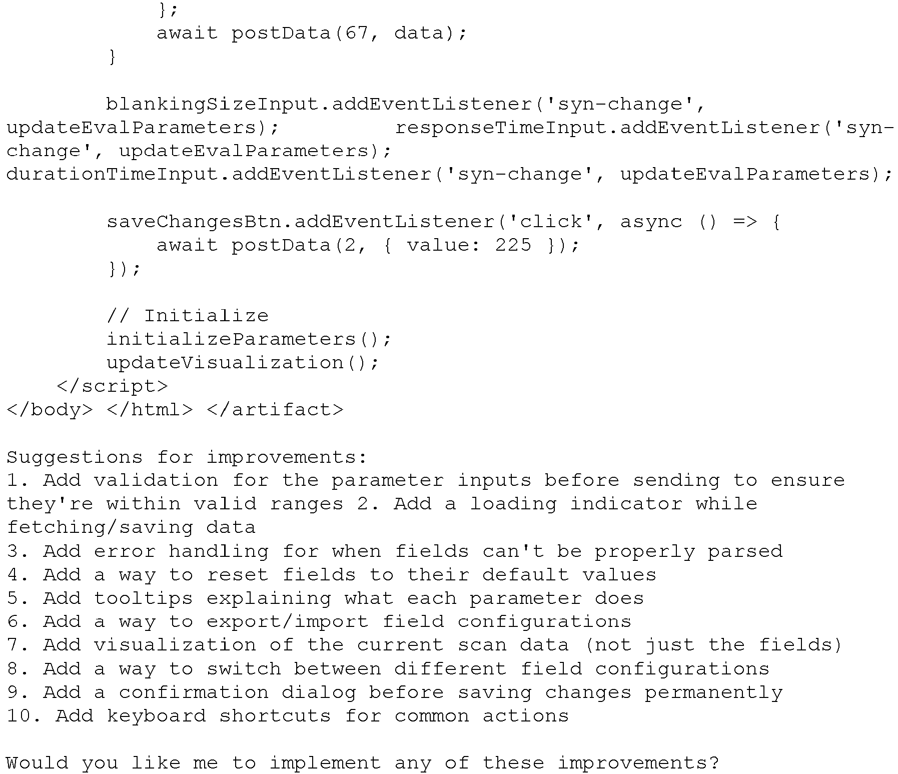

## Patentansprüche

1. Verfahren zum Erstellen einer graphischen Schnittstelle zu mindestens einem Sensor, das Verfahren aufweisend:
- Übermitteln (402) von Sensorbeschreibungsdaten an ein Sprachmodell, insbesondere an ein Large Language Model, wobei die Sensorbeschreibungsdaten den mindestens einen Sensor beschreiben;
- Übermitteln (404) von Darstellungsdaten an das Sprachmodell, wobei die Darstellungsdaten Informationen bezüglich in der graphischen Schnittstelle darzustellender Daten des mindestens einen Sensors aufweisen; und
- Instruieren (406) des Sprachmodells zum Erstellen der graphischen Schnittstelle basierend auf den Sensorbeschreibungsdaten und den Darstellungsdaten.

2. Verfahren nach Anspruch 1,
wobei die Sensorbeschreibungsdaten in einem Prompt an das Sprachmodell übermittelt werden.

3. Verfahren nach Anspruch 1 oder 2,
wobei die Sensorbeschreibungsdaten auf einer Gerätebeschreibung basieren.

4. Verfahren nach Anspruch 3, ferner aufweisend:
Aufteilen der Gerätebeschreibung in eine Mehrzahl von Snippets.

5. Verfahren nach Anspruch 4, ferner aufweisend:
Berechnen von Embeddings der Mehrzahl von Snippets; und
Verwenden der Embeddings als Sensorbeschreibungsdaten.

6. Verfahren nach einem der vorstehenden Ansprüche, ferner aufweisend:
Übermitteln von Kommunikationsschnittstellenbeschreibungen an das Sprachmodell.

7. Verfahren nach einem der vorstehenden Ansprüche, ferner aufweisend:
Abfragen der Darstellungsdaten von einem Benutzer.

8. Verfahren nach einem der vorstehenden Ansprüche, ferner aufweisend:
Übermitteln eines Beispiel einer Beschreibung einer graphischen Schnittstelle an das Sprachmodell.

9. Verfahren nach einem der vorstehenden Ansprüche, ferner aufweisend:
Erhalten von die graphische Schnittelle beschreibenden Daten von dem Sprachmodell.

10. Verfahren nach Anspruch 9, ferner Aufweisend
Instruieren des Sprachmodells zum Anpassen der graphischen Schnittstelle.

11. Verfahren nach einem der vorstehenden Ansprüche,
wobei die die graphische Schnittelle beschreibenden Daten in einem HTML-Format angegeben werden.

12. Verfahren nach einem der vorstehenden Ansprüche, ferner aufweisend:
Instruieren des Sprachmodells zum Erstellen von Chain-of-Thoughtprompting-Information.

13. Verfahren nach einem der vorstehenden Ansprüche,
wobei das Sprachmodell zumindest eines der folgenden Modelle aufweist oder ist oder darauf basiert: ChatGPT oder Deepseek.

14. Vorrichtung zum Erstellen einer graphischen Schnittstelle zu mindestens einem Sensor, die Vorrichtung aufweisend:
- Mittel zum Übermitteln von Sensorbeschreibungsdaten an ein Sprachmodell, insbesondere an ein Large Language Model, wobei die Sensorbeschreibungsdaten den mindestens einen Sensor beschreiben;
- Mittel zum Übermitteln von Darstellungsdaten an das Sprachmodell, wobei die Darstellungsdaten Informationen bezüglich in der graphischen Schnittstelle darzustellender Daten des mindestens einen Sensors aufweisen; und
- Mittel zum Instruieren des Sprachmodells zum Erstellen der graphischen Schnittstelle basierend auf den Sensorbeschreibungsdaten und den Darstellungsdaten.

15. Computerlesbares Speichermedium, umfassend Befehle, die bei der Ausführung durch einen Computer diesen veranlassen, das Verfahren nach Ansprüche 1 bis 13 auszuführen.
